# EUROPEAN PATENT SPECIFICATION

(11) **EP 2 895 422 B1**
(45) Date of publication and mention of the grant of the patent: **03.04.2024**
(21) Application number: 13763384.8
(22) Date of filing: 03.09.2013
(51) Int. Cl.: B67D 7/36

(54) **OVERFILL PREVENTION VALVE**
VENTIL ZUM ÜBERFÜLLUNGSSCHUTZ
VANNE ANTI-DÉBORDEMENT

(30) Priority: 14.09.2012 US 201261701347 P; 15.03.2013 US 201361801681 P
(43) Date of publication of application: 22.07.2015
(73) Proprietor: Franklin Fueling Systems, Inc., Madison, WI 53718 (US)
(72) Inventor: KUEHN, Justin, Sun Prairie, WI 53590 (US); NELSON, Bill, Sun Prairie, WI 53590 (US); LAUNDRIE, David, Cottage Grove, WI 53527 (US); O'FLAHRITY, Michael, Milton, WI 53563 (US); BACKHAUS, Erik, Wisconsin Dells, WI 53563 (US)
(74) Representative: Dr. Weitzel & Partner
(86) International application number: PCT/US2013/057884
(87) International publication number: WO 2014/042913

(56) References cited:
- WO-A1-2004/090401
- WO-A1-2004/090401
- WO-A1-2004/090401
- US-A- 3 233 625
- US-A- 3 233 625
- US-A1- 2002 074 058
- US-A1- 2002 074 058
- US-A1- 2004 031 540
- US-A1- 2004 031 540
- US-A1- 2004 031 540

## Description

### BACKGROUND

The present invention relates to an overfill prevention valve according to claim 1. Such an overfill prevention valve may be used in connection with a drop tube segments and, more particularly, with drop tube segments providing access to a liquid reservoir while controlling the flow of liquid into the reservoir to prevent overfilling of the same.

Underground storage tanks are routinely utilized to store fuels such as gasoline, diesel fuel, ethanol, etc. for later dispensing to vehicles through fuel dispensers. The underground storage tank contains an inlet through which fuel is provided to the underground storage tank, typically by a tanker truck. A plurality of fuel dispensers are also fluidly connected to the underground storage tank and are utilized to provide the fuel contained therein to, e.g., passenger vehicles.

Typically, a riser pipe extends upwardly from the underground storage tank to a fill connection point contained within a sump at the fueling station. Within the riser pipe, a drop tube extends downwardly into the volume of the underground storage tank.

The drop tube extends toward the bottom of the underground storage tank so that the outlet end of the drop tube is covered by the motor fuel contained in the underground storage tank. Therefore, the drop tube is not in fluid communication with the fuel vapor contained in the ullage area of the underground storage tank. However, the overfill prevention valve is typically positioned much closer to the top of the underground storage tank and is therefore typically in fluid communication with the vapor contained in the ullage area of the underground storage tank.

When filling an underground storage tank, the operator of a tanker truck must be careful not to overfill the underground storage tank. To this end, an overfill prevention valve may be utilized to prevent overfilling of the underground storage tank. For example, an overfill prevention valve may utilize a float which is buoyant on a surface of a quantity of motor fuel and which is connected by a linkage to a valve positioned within a segment of a drop tube connecting a fill point to the underground storage tank. The linkage extends through the wall of the drop tube so that it can mechanically connect the float, which is outside of the drop tube, and the valve body, which is inside the drop tube.

Because the overfill prevention valves of prior art devices include a mechanical linkage connecting a float positioned on the exterior of the drop tube with a valve body positioned on the interior of the drop tube, the wall of the drop tube segment containing the overfill prevention valve must be physically penetrated by the linkage to allow for such a connection. This physical penetration of the wall of the drop tube segment containing the overfill prevention valve creates a leak point where vapor contained in the ullage space of the underground storage tank can enter into the drop tube. It is desirable to prevent vapor contained in the ullage space of the underground storage tank from entering into the interior of the drop tube where it could potentially be vented to the atmosphere.

WO 2004/090401 A1 discloses an overfill prevention valve with the features as summarized in the preamble of claim 1. US 3 233 625 A discloses a magnetically operated valve.

### SUMMARY

The present invention is described by the features of claim 1. The dependent claims describe preferred embodiments.

In exemplary embodiments thereof, the present invention provides an overfill valve associated with a drop tube segment including a valve body positioned within the drop tube segment and a non-contact valve actuator positioned exterior to the drop tube segment and operable to actuate the valve body from an open position to a closed position without requiring any physical penetration through the wall of the drop tube segment. The non-contact valve actuator has a first position in which the non-contact valve actuator does not actuate the valve body from the open position to the closed position and a second position, achieved when the liquid reservoir reaches a predetermined level approaching the capacity of the liquid reservoir, the non-contact valve actuator actuating the valve body from the open position to a closed position when the non-contact valve actuator attains the second position. Also disclosed is a structure for securing drop tube segments one to the other while preventing vapor from the ullage space in the fuel reservoir into which the drop tube segments are positioned from entering the drop tube.

In one form thereof, the present invention provides an overfill prevention valve including a conduit having a first end and a second end, a conduit wall spanning the first end of the conduit and the second end of the conduit, the conduit wall defining a conduit wall interior surface and a conduit wall exterior surface, the conduit wall interior surface defining a fluid path through the conduit from the first end of the conduit to the second end of the conduit; a valve body moveably positioned in the fluid passage of the conduit, the valve body moveable from an open position to a closed position; and a non-contact valve actuator moveable relative to the valve body and positioned outside of the conduit, the conduit wall interposed between the non-contact valve actuator and the fluid path, the non-contact valve actuator operable to actuate the valve body from the open position toward the closed position without physically penetrating the conduit wall, the non-contact valve actuator having a first position in which the non-contact valve actuator does not actuate the valve body from the open position toward the closed position and a second position in which the non-contact valve actuator actuates the valve body from the open position toward the closed position. In the open position, the valve body allows fluid to pass through the fluid path defined by the conduit at an expected fill rate. In certain embodiments, in the closed position, the valve body precludes flow through the fluid path defined by the conduit at the expected fill rate but may allow fluids to pass through the fluid path defined by the conduit at a decreased flow rate to allow drainage from a quantity of fluid positioned upstream of the valve body in the drop tube. In certain alternative embodiments, the valve body may comprise a butterfly valve, a flapper valve, and/or a poppet valve.

In alternative forms of the present disclosure, the overfill prevention valve may include a closure stop movably positioned in the fluid path of the conduit, the closure stop having a leak position and a non-leak position, with the valve body in the closed position and the closure stop in a leak position, a quantity of fluid is able to leak past the valve body. In one form of the present disclosure, the closure stop may take the form of a stop that prevents the valve body from fully seating against the associated valve seat. In alternative forms of the present disclosure, the closure stop may take the form of a secondary valve, such as poppet valve, flapper valve or plunger that opens to allow leakage past the valve body in its closed position. In forms of the present disclosure utilizing a secondary valve, the secondary valve may selectively seat with a valve seat formed in the primary valve body of the overfill prevention valve. Alternatively, the secondary valve may selectively seat with a valve seat spaced from the primary valve.

In certain alternative embodiments, the non-contact valve actuator may be operable to actuate the closure stop from the leak position to the non-leak position without physically penetrating the conduit wall, the non-contact valve actuator of this form of the disclosure having a third position in which the non-contact valve actuator actuates the closure stop from the leak position to the non-leak position, the non-contact valve actuator of this form of the present disclosure not actuating the closure stop from the leak position to the non-leak position in the first position and the second position.

In certain forms of the present disclosure, the closure stop may be formed by a second valve body, with the overfill prevention valve further including a force applicator applying a force to the second valve body to urge the second valve body into a second valve body open position corresponding to the leak position. In alternative forms of the present disclosure, the force applicator may be formed by a pair of magnets, one of the pair of magnets fixed relative to the second valve body, with the second valve body movable relative to the other pair of magnets, the pair of magnets operable to urge the second valve body to maintain the valve body open position. In alternative forms of the present disclosure, an actuator may be movably connected to the overfill prevention valve, the actuator movable in response to a movement of the non-contact valve actuator from the first position to the second position, the actuator movable to move the pair of magnets relative to each other so that they are no longer operable to urge the second valve to maintain the valve body open position. In certain forms of the present disclosure, the second valve body may comprise a flapper valve and the primary valve body may comprise a valve port and a valve seat, the second valve body operable to selectively seat on the valve seat.

In embodiments of the present disclosure in which the closure stop is formed by a second valve body, the overfill prevention valve may include an actuator operable to actuate the second valve body between an open position corresponding to the leak position in a closed position corresponding to the non-leak position.

In alternative forms of the present disclosure, the non-contact valve actuator may comprise a float having a specific gravity less than about 0.7 so that the float is buoyant on a surface of a quantity of motor fuel, which typically has a specific gravity in the range of 0.72 to 0.89. In alternative embodiments of the present disclosure, a splash shield may be connected to the conduit to shield the non-contact valve actuator from splashes of liquid experienced external to the conduit. In certain forms of the present disclosure, with the primary valve body in the closed position and the closure stop (which may be in the form of a secondary valve body) in the closed position, fluid may pass through the overfill prevention valve at a drain flow rate of about 2% or less of the maximum flow rate allowed to pass the primary valve in its open position. In exemplary embodiments of the present disclosure, the conduit will be sized so that the fluid path through the conduit allows a flow rate of 1818.4 liter (400 gallons) per minute when the primary valve body maintains the open position.

The present invention utilizes an actuator associated with the valve body. The non-contact valve actuator actuates the actuator, which, in turn, actuates the primary valve body. The actuator associated with the valve body is a contact valve actuator positioned interior of the conduit wall, with the conduit wall interposed between the contact valve actuator and the non-contact valve actuator, the contact valve actuator movable relative to the conduit wall interior surface and positioned so that actuation of the contact valve actuator causes movement of the valve body from the open position toward the closed position, the contact valve actuator, preferably magnetically, linked to the non-contact valve actuator, so that movement of the non-contact valve actuator from the first position to the second position actuates the contact valve actuator so that the contact valve actuator actuates the valve body from the open position toward the closed position. In certain forms of the present disclosure, the contact valve actuator is rotatably supported relative to the conduit wall interior surface so that movement of the non-contact valve actuator from the first position to the second position rotates the contact valve actuator so that the contact valve actuator actuates the valve body from the open position toward the closed position. In alternative forms of the present disclosure, a second actuator may additionally be utilized. The second actuator is movable in response to a movement of the non-contact valve actuator from the first position to the second position, so that movement of the non-contact valve actuator causes movement of the second actuator. In certain forms of the present disclosure, the second actuator comprises a ramp and a pivotable bracket, the pivotable bracket interposed between the ramp and the valve body and movable by the ramp in response to movement of the non-contact valve actuator so that the second actuator moves the valve body. In certain embodiments, the second actuator may also include a roller that contacts the valve body during actuation.

Forms of the present disclosure utilizing an actuator associated with the valve body may use an actuator including a ramp contacting the valve body during movement of the non-contact valve actuator, whereby the ramp actuates the valve body in a direction from the open position toward the closed position during the movement of the non-contact valve actuator. In addition to a ramp, the actuator may further include a movable latch having a latching position in which the movable latch latches the valve body in the open position when the non-contact valve actuator maintains the first position, the movable latch moved from the latching position when the non-contact valve actuator moves from the first position to the second position. In certain forms of the present disclosure, the movable latch may be interposed between the ramp and the valve body and moved by the ramp during the movement of the non-contact valve actuator away from the latching position so that the latch no longer latches the valve body in the closed position. The movable latch may further include a foot moved by the ramp during the movement of the non-contact valve actuator to move the valve body from the open position toward the closed position.

Either one of or both of the first and second actuators referenced above may be magnetically linked to the non-contact valve actuator. For example, the non-contact valve actuator may include a first component of a magnetic shaft coupling and the contact valve actuator may include a second component of a magnetic shaft coupling, with the first component of the magnetic shaft coupling magnetically linked to the second component of the magnetic shaft coupling so that rotation of the first component of the magnetic shaft coupling about an axis causes rotation of the second component of the magnetic shaft coupling. In alternative forms of the present disclosure, the actuator may include a lever arm, with the overfill prevention valve further including a link linking the non-contact valve actuator to the lever arm so that the lever arm provides a mechanical advantage for movement of the actuator by the non-contact valve actuator.

Valve bodies of the present disclosure may take the form of valve bodies that are rotatably connected to the conduit and rotatable between the open position and the closed position, e.g., butterfly valves or flapper valves.

In alternative forms of the present disclosure, a deflector may be provided upstream of the valve body, with the deflector sized and positioned to prevent a quantity of fluid flowing through the conduit from contacting the valve body when the valve body maintains the closed position.

In certain forms of the present disclosure, the non-contact valve actuator may include a closure stop actuator magnet producing a magnetic field acting to urge the closure stop from the leak position to the non-leak position when the non-contact valve actuator is positioned in the third position. In alternative forms of the present disclosure, a closure stop magnet may be associated with the closure stop so that the magnetic field produced by the closure stop actuator magnet acts on the closure stop magnet to urge the closure stop from the leak position to the non-leak position. Alternative forms of the present disclosure contemplate a magnetic repulsion between the non-contact valve actuator and the closure stop to urge the closure stop from the leak position to the non-leak position. Further alternative forms of the present disclosure contemplate a magnetic attraction between the non-contact valve actuator and the closure stop to urge the closure stop from the leak position to the non-leak position.

In certain embodiments of the present disclosure, the closure stop may comprise a stop cam rotatably connected to the conduit wall, the stop cam supporting the valve body above its valve seat in the leak position, the stop cam allowing the valve body to fully engage its associated valve seat when the closure stop maintains the non-leak position.

In alternative forms of the present disclosure, the valve body may include a poppet valve, a poppet valve port, a poppet valve seat and a spring biasing the poppet valve into engagement with the poppet valve seat to close the poppet valve port, so that with the valve body in the closed position and the closure stop in the leak position, the closure stop actuates the poppet valve against a biasing force of the spring to space the poppet valve from the poppet valve seat and place the poppet valve port in fluid communication with the fluid path.

Any exemplification the overfill prevention valve of the present disclosure may be utilized in combination with a fuel storage tank and a drop tube extending into the fuel storage tank, the overfill prevention valve forming a part of the drop tube, the drop tube in fluid communication with the fuel storage tank so that fluid passing through the drop tube fills the fuel storage tank. Similarly, any drop tube adapter of the present disclosure may be utilized in combination with a fuel storage tank and a drop tube extending into the fuel storage tank, the drop tube adapter forming a part of the drop tube, the drop tube in fluid communication with the fuel storage tank so that fluid passing through the drop tube fills the fuel storage tank.

Any exemplification of the present disclosure may include a pressure spike relief valve including a pressure spike relief valve body movable between a closed position and an open position and biased by a biasing force into the closed position, the pressure spike relief valve body movable from the closed position to the open position when a sufficient pressure in the conduit counteracts the biasing force to actuate the pressure spike relief valve body from the closed position to the open position so that a flow of liquid can flow past the pressure spike relief valve body as long as the pressure in the conduit is sufficient to overcome the biasing force. In certain forms of the present disclosure, a spring may provide the biasing force to bias the pressure spike relief valve body into the closed position. In certain forms of the present disclosure, the pressure spike relief valve may include a valve seat surrounding an opening through the primary valve body in the conduit.

In another form thereof, the present disclosure provides an overfill prevention valve including a conduit having a first end and a second end, a conduit wall spanning the first end of the conduit and the second end of the conduit, the conduit wall defining a conduit wall interior surface and a conduit wall exterior surface, the conduit wall interior surface defining a fluid path through the conduit from the first end of the conduit to the second end of the conduit; a valve body moveably positioned in the fluid path of the conduit, the valve body moveable from an open position to a closed position; and a valve actuator means for actuating the valve body from the open position toward the closed position while the valve actuator means is positioned outside of the fluid path of the conduit and without physically penetrating the wall. In alternative forms of the present disclosure, the valve actuator means may comprise a means for generating a magnet field for actuating the valve body from the open position toward the closed position. Further, the valve actuator means may comprise a float having a specific gravity of less than 0.7 so that the float is buoyant on a surface of a quantity of motor fuel, which typically has a specific gravity in the range of 0.72 to 0.89. In alternative forms of the present disclosure, the overfill prevention valve may further include leak means for selectively allowing a quantity of fluid to leak past the valve body when the valve body is in the closed position and a leak actuator means for actuating the leak means from a leak position in which the leak means allows the quantity of fluid to leak past the valve body to a non-leak position in which the leak means does not allow the quantity of fluid to leak past the valve body. Any of the drop tube segments of the present disclosure may include a conduit that may be sized so that the fluid path through the conduit allows a flow rate of 1818.4 liter (400 gallons) per minute when the valve body maintains the open position. The overfill prevention valve may form a part of a drop tube extending into a fuel storage tank to allow fluid passing through the drop tube to fill the fuel storage tank.

In a further form thereof, the present disclosure provides an overfill prevention valve including a conduit having a first end and a second end, a conduit wall spanning the first end of the conduit and the second end of the conduit, the conduit wall defining a conduit wall interior surface and a conduit wall exterior surface, the conduit wall interior surface defining a fluid path through the conduit from the first end of the conduit to the second end of the conduit; a valve body movably positioned in the fluid path of the conduit, the valve body movable from an open position to a closed position, the valve body rotatably movable between the open position and the closed position; and a contact valve actuator movably supported by the conduit wall, the contact valve actuator movable relative to the conduit wall interior surface and positioned so that movement of the contact valve actuator causes the contact valve actuator to actuate the valve body from the open position toward the closed position and into a position in which a flow of fluid through the conduit can act on the valve body and further cause movement of the valve body from the open position toward the closed position, the contact valve actuator movable independent from the valve body. In certain alternative embodiments, the contact valve actuator may be spaced a first distance from the valve body when the valve body maintains the open position, and the contact valve actuator may be spaced a second distance from the valve body when the valve body maintains the closed position, the second distance greater than the first distance. In certain embodiments thereof, the contact valve actuator may be rotatably supported relative to the conduit wall interior surface so that rotation of the contact valve actuator causes movement of the valve body from the open position toward the closed position and into the position in which the flow of fluid through the conduit can act on the valve body and further cause movement of the valve body from the open position toward the closed position. In alternative embodiments thereof, a non-contact valve actuator may be positioned outside of the conduit, the conduit wall interposed between the non-contact valve actuator and the fluid path, the non-contact valve actuator operable to actuate the contact valve actuator without physically penetrating the conduit wall. In certain embodiments thereof, the non-contact valve actuator may be magnetically linked to the contact valve actuator through the conduit wall, the non-contact valve actuator may include a first component of a magnetic shaft coupling while the contact valve actuator includes a second component of the magnetic shaft coupling, the first component of the magnetic shaft coupling magnetically linked to the second component of the magnetic shaft coupling so that rotation of the first component of the magnetic shaft coupling about an axis transverse to a longitudinal axis of the fluid path through the conduit causes rotation of the second component of the magnetic shaft coupling.

In certain forms of the present disclosure, a cam may be movably supported relative to the conduit wall and include a ramp operably associated with the contact valve actuator so that movement of the cam causes the ramp to move the contact valve actuator to actuate the valve body from the open position toward the closed position and into the position in which the flow of fluid through the conduit can act on the valve body and further cause movement of the valve body from the open position toward the closed position. If the cam is utilized in an embodiment incorporating a second contact actuator, the cam further includes a second ramp operably associated with the second contact valve actuator so that a movement of the cam causes the second ramp to move the second contact valve actuator to actuate the valve body from the open position toward the closed position and into the position in which the flow of fluid through the conduit can act on the valve body and further cause movement of the valve body from the open position toward the closed position. In alternative forms of the present disclosure, a second valve body may be positioned in the fluid path of the conduit, the second valve body movable from a second valve body open position to a second valve body closed position. In forms of the present disclosure utilizing a second valve body, the cam may further include a nubbin positioned so that a movement of the cam causes the nubbin to move the second valve body from the second valve body open position toward the second valve body closed position. The second valve body may seat on a valve seat spaced from the primary valve body.

In certain forms of the present disclosure, the contact valve actuator may comprise a movable latch having a latching position in which the movable latch latches the valve body in the closed position, the movable latch movable from the latching position as the contact valve actuator moves to cause the contact valve actuator to actuate the valve body from the open position toward the closed position.

In yet a further form thereof, the present disclosure provides a method of joining drop tube segments to provide fluid communication with a fuel storage tank. The method of this form of the present disclosure includes the steps of: positioning a drop tube adapter in generally coaxial, overlapping relationship with a first drop tube segment, the first drop tube segment including a first conduit having a first conduit first end and a first conduit second end, a first conduit wall spanning the first conduit first end and the first conduit second end, the first conduit wall defining a first conduit wall interior surface defining a first conduit fluid path through the first conduit from the first conduit first end to the first conduit second end, the drop tube adapter defining an annular groove, the annular groove overlapped by the first conduit wall of the first conduit by the positioning step, the drop tube adapter having a drop tube adapter first end, a drop tube adapter second end, a drop tube adapter wall spanning the drop tube adapter first end and the drop tube adapter second end, the drop tube adapter wall defining a drop tube adapter wall interior surface defining a drop tube adapter fluid path through the drop tube adapter from the drop tube adapter first end to the drop tube adapter second end, the drop tube adapter wall defining a drop tube adapter wall exterior surface; deforming the first conduit wall of the drop tube segment about the annular groove of the drop tube adapter to position the first conduit wall in the annular groove of the drop tube adapter to fasten the drop tube adapter to the first drop tube segment, with the first conduit fluid path in fluid communication with the drop tube adapter fluid path; and positioning the drop tube adapter and first drop tube segment in fluid communication with the fuel storage tank. In alternative embodiments thereof, the method may further include the steps of: fastening a second drop tube segment comprising a second conduit having a second conduit first end and a second conduit second end, a second conduit wall spanning the second conduit first end and the second conduit second end, the second conduit wall defining a second conduit wall interior surface defining a second conduit fluid path through the second conduit from the second conduit first end to the second conduit second end to an end of the drop tube adapter opposite the first drop tube segment so that the drop tube adapter fluid path is in fluid communication with the second conduit fluid path. In alternative embodiments, the annular groove of the drop tube adapter may be formed in the drop tube adapter wall exterior surface and/or in the drop tube adapter interior surface. Further, two or more grooves may be utilized in each fastening step. Additionally, fastening at an opposite end of the drop tube adapter may be done utilizing threads.

A drop tube adapter in accordance with the present disclosure may further include a through bore through the drop tube adapter wall. In such forms of the present disclosure, the method of joining drop tube segments may further include the step of positioning a fastener through the first conduit wall and the through bore of the drop tube adapter to further fasten drop tube adapter to the first drop tube insert. Prior to the deforming step described above, an O-ring may be positioned in the annular groove in the drop tube adapter so that the deforming step forms an annular seal with the O-ring. The drop tube adapter described herein may be formed as any of the overfill prevention valves described herein.

In an additional form thereof, the present disclosure provides a fluid conduit for providing fluid communication with a fuel storage tank. The fluid conduit of this form in the present disclosure includes a first drop tube segment including a first conduit having a first conduit first end and a first conduit second end, a first conduit wall spanning the first conduit first end and the first conduit second end, the first conduit wall defining a first conduit wall interior surface defining a fluid conduit fluid path through the first conduit from the first conduit first end and the first conduit second end and a drop tube adapter having a drop tube adapter first end, a drop tube adapter second end, a drop tube adapter wall spanning the drop tube adapter first end and the drop tube adapter second end, the drop tube adapter wall defining a drop tube adapter wall interior surface defining a drop tube adapter fluid path through the drop tube adapter from the drop tube adapter first end to the drop tube adapter second end, the drop tube adapter wall defining a drop tube adapter wall exterior surface, the drop tube adapter having an annular groove defined in the drop tube adapter wall, the drop tube adapter positioned in generally coaxial, overlapping relationship with the first drop tube segment, with the first conduit wall overlapping the annular groove and the first conduit wall of the drop tube segment deformed about the annular groove of the drop tube adapter to position the first conduit wall in the annular groove of the drop tube adapter to fasten the drop tube adapter to the first drop tube segment, with the first conduit fluid path in fluid communication with the drop tube adapter fluid path and with the first conduit fluid path and the drop tube adapter fluid path in fluid communication with the fuel storage tank. In alternative embodiments thereof, the fluid conduit may further include a second drop tube segment including a second conduit having a second conduit first end and a second conduit second end, a second conduit wall spanning the second conduit first end and the second conduit second end, the second conduit wall defining a second conduit interior surface defining a second conduit fluid path through the second conduit from the second conduit first end and the second conduit second end, the drop tube adapter further including a fastener proximate to the drop tube adapter first end the second drop tube segment having a cooperative fastener secured to the fastener of the drop tube adapter so that the drop tube adapter fluid path is in fluid communication with the second conduit fluid path and the first conduit fluid path is in fluid communication with the second conduit fluid path through the drop tube adapter fluid path so that a fluid can pass through the first conduit fluid path, the drop tube adapter fluid path and the second conduit fluid path to reach the storage tank. In certain embodiments, the fastener of the drop tube adapter and the cooperative fastener of the second drop tube segment may comprise compatible threads. In alternative embodiments, the annular groove of the drop tube adapter may be formed in the drop tube adapter wall exterior surface and/or in the drop tube adapter interior surface. Further, two or more grooves may be utilized to secure the drop tube adapter to a single drop tube segment.

A drop tube adapter in accordance with the present disclosure may further include a through bore through the drop tube adapter wall, the fluid conduit further comprising a fastener positioned through the first conduit wall and the through bore of the drop tube adapter to further fasten the drop tube adapter to the first drop tube segment. In alternative embodiments, an O-ring may be positioned in the annular groove in the drop tube adapter, with the first conduit wall deformed about the annular grooves such that the first conduit wall forms an annular seal with the O-ring.

The fluid path of any of the conduits, including the drop tube adapter described above may be sized to allow a flow rate of 1818.4 liter (400 gallons) per minute through the conduit.

The drop tube adapter described above may comprise any of the overfill prevention valves disclosed herein.

Any of the various embodiments of the features of the present disclosure, including the primary valve body, closure stop (in the form of a secondary valve body or a stop that prohibits the primary valve body from achieving its closed position), non-contact valve actuator, drop tube adapter and valve actuators may be combined to form a drop tube segment useable with a fuel storage tank in accordance with the present disclosure.

### BRIEF DESCRIPTION OF THE DRAWINGS

The above-mentioned and other features of the disclosure, and the manner of attaining them, will become more apparent and will be better understood by reference to the following description of embodiments of the disclosure taken in conjunction with the accompanying drawings, wherein:
Fig. 1 is a representation of a fueling station showing a tanker truck filling an underground storage tank;
Fig. 2 is a perspective view of a drop tube segment in accordance with the present disclosure not covered by the claimed invention;
Fig. 3 is a plan view of the drop tube segment of Fig. 2;
Fig. 4 is a cross-sectional view of the drop tube segment of Fig. 2;
Fig. 5 is a cross-sectional view of the drop tube segment of Fig. 2 illustrating actuation of the valve body from an open position toward a closed position;
Fig. 6 is a cross-sectional view of the drop tube segment of Fig. 2 illustrating the valve body in a closed position and the closure stop in a leak position;
Fig. 7 is a cross-sectional view of the drop tube segment of Fig. 2 illustrating movement of the closure stop from the leak position to the non-leak position;
Fig. 8 is an illustration of an alternative embodiment drop tube segment utilizing a magnetic attraction to actuate the valve body from an open position to a closed position;
Fig. 9 is a cross-sectional view of an alternative embodiment drop tube segment utilizing a flapper valve not covered by the claimed invention;
Fig. 10 is a cross-sectional view of the drop tube segment of Fig. 9 illustrating actuation of the flapper valve from an open position toward a closed position;
Fig. 11 is a cross-sectional view of the drop tube segment of Fig. 9 illustrating the valve body in the closed position and the closure stop in the leak position;
Fig. 12 is a cross-sectional view of the drop tube segment of Fig. 9 illustrating the valve body in the closed position and the closure stop in the non-leak position;
Fig. 13 is a partial sectional top plan view of the drop tube segment of Fig. 9;
Fig. 14 is a perspective, exploded view of a further alternative embodiment drop tube segment not covered by the claimed invention;
Fig. 15 is a cross-sectional view of the drop tube segment of Fig. 14;
Fig. 16 is a cross-sectional view of the drop tube segment of Fig. 14 illustrating actuation of the valve body from the open position toward the closed position;
Fig. 17 is a cross-sectional view of the drop tube segment of Fig. 14 illustrating the valve body in the closed position and the closure stop in a leak position;
Fig. 18 is a cross-sectional view illustrating the drop tube segment of Fig. 14 with the valve body in the closed position and the closure stop in the non-leak position;
Fig. 19 is a top plan view of an alternative embodiment drop tube segment of the present disclosure not covered by the claimed invention;
Fig. 19a is a radial elevational view of the drop tube segment illustrated in Fig. 19;
Fig. 20 is a sectional view thereof taken along line A-A of Fig. 19;
Figs. 21, 23, 25, 27, 29 and 31 are all partial, radial elevational views of the drop tube illustrated in Fig. 19, illustrating various stages of actuation of the associated valve structure;
Figs. 22, 24, 26, 28, 30 and 32 are all sectional views of the drop tube segment illustrated in Fig. 19, taken along line A-A of Fig. 19, illustrating various stages of actuation of the associated valve structure;
Fig 32a is a radial elevational view of an embodiment drop tube segment of the present invention;
Figs. 33, 34a, 36, 37a, and 38a are all sectional views of the drop tube segment illustrated in Fig. 32a, taken along line D-D of Fig. 32a;
Figs. 34, 35, 37, 38, 39, 40, 41 and 42 are all sectional views taken along the plane of the page of Fig. 32a;
Fig. 43 is a top plan view of an alternative embodiment drop tube segment of the present invention;
Fig. 43a is a radial elevational view of the drop tube segment illustrated in Fig. 43;
Figs. 44, 45, 46, 47, 48, 49 and 50 are all sectional views of the drop tube segment illustrated in Fig. 43, taken along line A-A of Fig. 43, illustrating various stages of actuation of the associated valve structure;
Fig. 47a is an orthogonal cross-sectional view of Fig. 47;
Fig. 48a is an orthogonal cross-sectional view of Fig. 48;
Fig. 49a is an orthogonal cross-sectional view of Fig. 49;
Fig. 51 is an elevational view of a valve actuator of the present disclosure;
Fig. 52 is a plan view of the actuator of Fig. 51;
Fig. 53 is an alternative elevational view of the actuator of Fig. 51;
Figs. 54-56 are perspective views of elements of the actuator of Figs. 51-53;
Fig. 57 is a radial elevational view of a drop tube and drop tube adapter of the present disclosure;
Fig. 58 is a cross-sectional view of the drop tube and the drop tube adapter illustrated Fig. 57;
Fig. 59A is a perspective view of the drop tube adapter and drop tube illustrated in Figs. 57 and 58;
Fig. 59B is a perspective view of the drop tube adapter and drop tube illustrated in Figs. 57-59A together with a tool for roll deforming an annular groove in the drop tube;
Fig. 59C is a perspective view of an alternative embodiment drop tube adapter joined with a drop tube segment;
Fig. 59D is a radial elevational view of the drop tube adapter and drop tube segment of Fig. 59C;
Fig. 59E is a partial cross-sectional view of the drop tube adapter and drop tube segment of Figs. 59C and 59D together with a tool for roll deforming an annular groove in the drop tube;
Fig. 60 is a partial radial elevational view of an alternative embodiment drop tube segment of the present invention;
Fig. 61 is a sectional view of the drop tube segment illustrated in Fig. 60, taken along line 61-61 of Fig. 60;
Fig. 62 is a sectional view of the drop tube segment illustrated in Figs. 60 and 61, taken along line 62-62 of Fig. 61;
Fig. 63 is a partial radial elevational view of the drop tube segment illustrated in Fig. 60, showing movement of the non-contact valve actuator from the position illustrated in Fig. 60;
Fig. 64 is a sectional view of the drop tube segment illustrated in Fig. 63, taken along line 64-64 of Fig. 63, illustrating actuation of the flapper valve from an open position toward a closed position corresponding to the actuated position of the non-contact valve actuator shown in Fig. 63;
Fig. 65 is a partial radial elevational view of the drop tube segment illustrated in Fig. 60, showing movement of the non-contact valve actuator from the position illustrated in Fig. 63;
Fig. 66 is a sectional view of the drop tube segment illustrated in Fig. 65, taken along line 66-66 of Fig. 65, illustrating actuation of the flapper valve from an open position toward a closed position, corresponding to the actuated position of the non-contact valve actuator shown in Fig. 65;
Figs. 67 is a sectional view of the drop tube segment illustrated in Fig. 60, taken along line 61-61 of Fig. 60 and illustrating the valve body in the closed position and the closure stop in the leak position;
Fig. 68 is a sectional view of the drop tube segment illustrated in Fig. 60, taken along line 61-61 of Fig. 60 and illustrating the valve body in the closed position and the closure stop in the non-leak position;
Fig. 69 is a partial sectional view of a pressure spike relief valve of the present disclosure;
Fig. 70 is a perspective view of the inner magnetic coupler and closure stop and certain associated structure;
Fig. 70a is an exploded, perspective view of the pivoting bracket the bracket support of the present disclosure; and
Figs. 71 and 72 are radial elevational views of the structures illustrated in Fig. 70 illustrated prior to actuation and after full actuation, respectively.

Corresponding reference characters indicate corresponding parts throughout the several views. The exemplifications set out herein illustrate embodiments of the disclosure and such exemplifications are not to be construed as limiting the scope of the invention in any manner.

### DETAILED DESCRIPTION

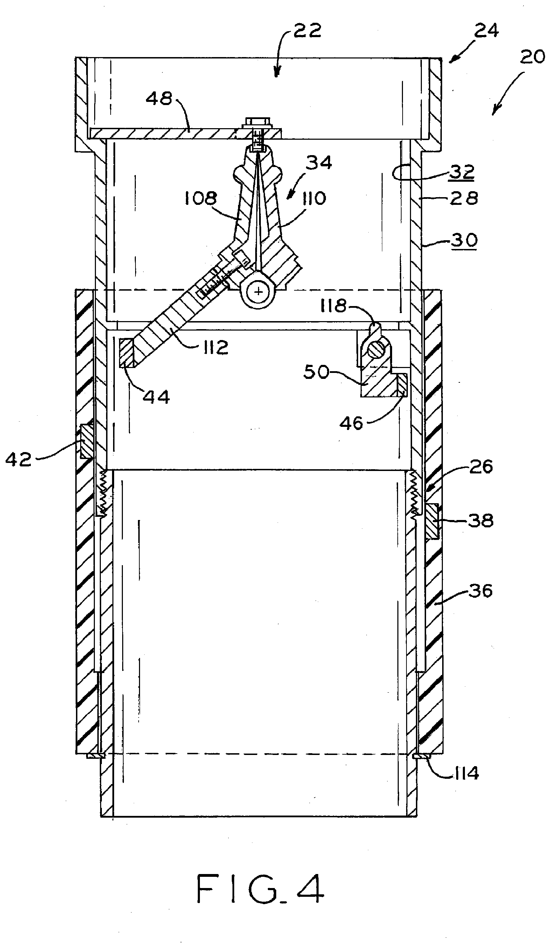

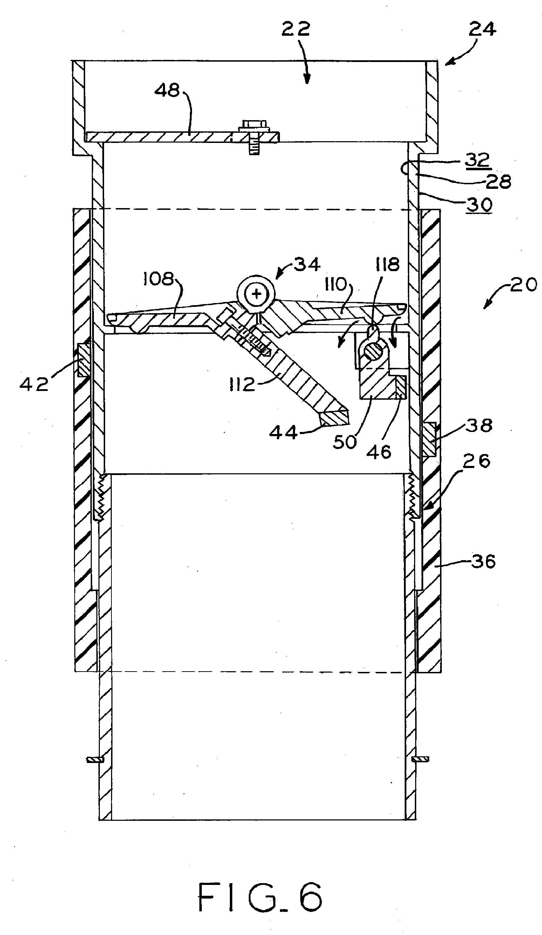

Fig. 4 illustrates drop tube segment 20 in accordance with an exemplary embodiment of the present disclosure not covered by the claimed invention. Drop tube segment 20 includes conduit 22 spanning first end 24 and second end 26 of conduit 22. Conduit wall 28 defines conduit wall interior surface 32 which defines a fluid path through conduit 22 from first end 24 to second end 26. Valve body 34 is moveably positioned in the fluid path of conduit 22 and moveable from the open position illustrated in Fig. 4 to a closed position such as the one illustrated in Fig. 6. Non-contact valve actuator 36 is moveable relative to valve body 34 and positioned outside of conduit 22, with conduit wall 28 interposed between non-contact valve actuator 36 and the fluid path defined by conduit wall interior surface 32. Non-contact valve actuator 36 is operable to actuate valve body 34 from the open position illustrated in Fig. 4 to a closed position such as the one illustrated in Fig. 6 without physically penetrating conduit wall 28. Operation of non-contact valve actuator 36 will be further described herein below.

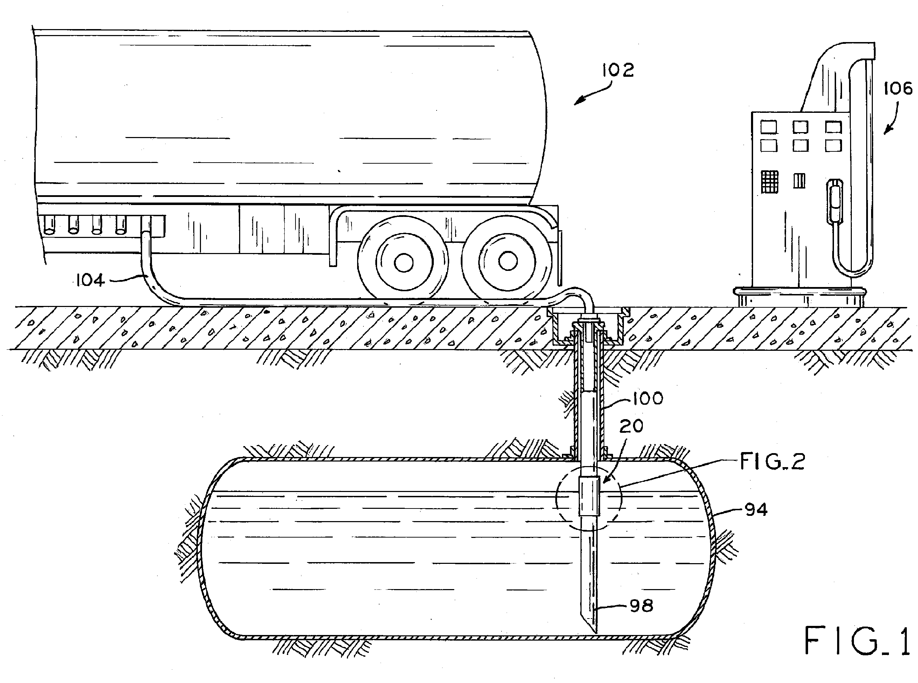

Fig. 1 illustrates an exemplary utilization of drop tube segment 20 in the context of a fueling station. As illustrated in Fig. 1, a fueling station may include underground storage tank 94 having riser pipe 100 extending upwardly therefrom and drop tube 98 extending through riser pipe 100 and into the storage space of underground storage tank 94. Tanker truck 102 can be fluidly connected to underground storage tank 94 by fill hose 104 so that the contents of tanker truck 102 can be deposited in underground storage tank 94. Drop tube segment 20 of the present disclosure can be utilized as described in detail below to limit the amount of fuel deposited by tanker truck 102 into underground storage tank 94. The contents of underground storage tank 94 can then be accessed by fuel dispenser 106 for dispensing to end users in, e.g., passenger vehicles and the like.

The remainder of this detailed description will describe use of the overfill prevention valve of the present disclosure with respect to a fueling station; however, use of the drop tube segments of the present disclosure are not limited to fueling station installations. The overfill prevention valve of the present disclosure is generally useable in connection with any fluid reservoir into which a drop tube extends.

Referring to Fig. 6, valve body 34 is illustrated in a closed position in which a small amount of flow can pass valve body 34. When valve body 34 maintains the open position illustrated in Fig. 4, conduit 22 is sufficiently open to allow passage of fuel at a normal fill rate. For applications in standard configurations this fill rate is generally in the range of 1363.8-2273.0 liters per minute (300-500 gallons per minute (gpm)). In certain embodiments, the maximum rated flow past valve body 34 in its open position is 1818.4-2045.7 liters per minute (400-450 gpm). In alternative configurations, the flow rate will be about 1682.1 liters per minute (370 gpm). In applications with remote filling capability, the standard flow rate may be as low as 113.7 liters per minute (25 gpm). These flow rates are applicable to all of the embodiments described in this document. With valve body 34 in the open position as illustrated in Fig. 4, the maximum fill rate is accommodated by conduit 22. In the closed position illustrated in Fig. 6, the maximum fill rate is not allowed and, if filling at such a rate were to continue, the portion of drop tube 98 upstream of valve body 34 would fill with a column of fluid. The actuation mechanism which causes valve body 34 to move from the open position illustrated in Fig. 4 to the closed position illustrated in Fig. 6 (which will be described in more detail hereinbelow) causes rapid closing of valve body 34, causing the fluid column upstream of valve body 34 to produce a line shock which will cause fill hose 104 to jump, which is typically referred to as "hose kick" in the fueling industry. Hose kick alerts the driver to close the delivery valve on the delivery truck and discontinue filling the fuel tank.

With valve body 34 closed as illustrated in Fig. 6, but with closure stop 50 preventing full seating of valve body 34 against its valve seat, the column of fuel upstream of valve body 34 in drop tube 98 will slowly leak past valve body 34, allowing fill hose 104 to drain so that it can be properly disconnected from the fill port connected to underground storage tank 94. Valve body 34 is said to be in a "closed" position when it disallows passage of fluid at the maximum fill rate associated with underground storage tank 94. In such a position, a small amount of flow past valve body 34 may be allowed as described above. In embodiments of the present disclosure, the "leak" flow rate will be about 10% (or less) of the maximum rated flow discussed above. For example, a valve having maximum rated flow of 1818.4 liters per minute (400 gpm) will have a leak flow rate of 181.8 liters per minute (40 gpm) or less. Any time this document refers to a leak flow rate or a leak condition, such reference is to a flow rate of about 10% or less of the maximum rated flow of the conduit. Even with the "leak" flow eliminated, as described herein with respect to the various embodiments, a "drain" rate of about 2% or less of the maximum flow rate may be allowed to pass the valve bodies of certain embodiments of the present disclosure. In alternative embodiments, the "drain" rate may be about 3 liters per minute (0.66 GPM) or less. Similarly, any time a "drain" flow rate is mentioned in this document, it signifies a flow rate of about 2% or less of the maximum flow rate. In alternative embodiments of the present disclosure, each and every embodiment disclosed herein may incorporate a drain flow rate, although such incorporation is not necessary with respect to all embodiment disclosed herein.

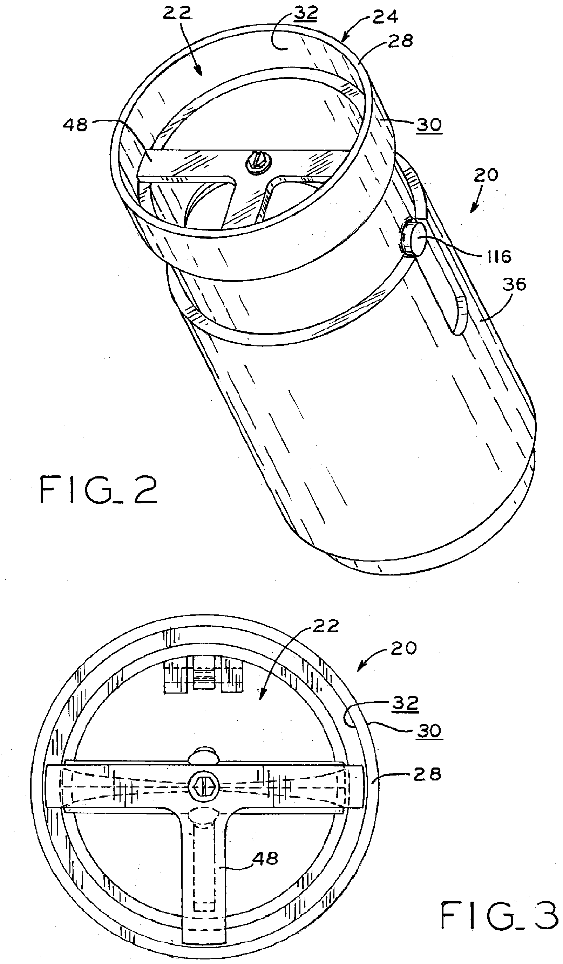

Referring to Figs. 2-7, the functional details of an exemplary overflow prevention valve in accordance with the present disclosure not covered by the claimed invention will now be described. Referring to Fig. 4, valve body 34 is pivotally connected relative to drop tube segment 20. In an exemplary embodiment, valve body 34 may be pivotally connected by a rod connected to conduit wall interior surface 32 and spanning conduit 22 of drop tube segment 20. In the embodiment illustrated in Figs. 2-7, valve body 34 comprises a butterfly valve having valve halves 108, 110 pivotally connected relative to drop tube segment 20. Valve halves 108, 110 can be biased into the open position illustrated in Fig. 4, e.g., by a torsion spring. Arm 112 extends from valve half 108 and carries valve body magnet 44. With underground storage tank 94 filled to less than its capacity, tanker truck 102 can be utilized to provide additional motor fuel to underground storage tank 94. As underground storage tank 94 nears capacity, non-contact valve actuator 36 will actuate valve body 34 from the open position illustrated in Fig. 4 toward the closed position illustrated in Fig. 6.

Drop tube segment 20 includes non-contact valve actuator 36 positioned about conduit wall exterior surface 30, with conduit wall 28 interposed between and physically separating non-contact valve actuator 36 from valve body 34. As will be described hereinbelow, non-contact valve actuator 36 is capable of actuating valve body 34 from the open position illustrated in Fig. 4 to a closed position such as the one illustrated in Fig. 6 without physically penetrating conduit wall 28. In the exemplary embodiment illustrated in Figs. 2-7, non-contact valve actuator 36 comprises a hollow cylinder sized to fit about and surround conduit wall exterior surface 30. Non-contact valve actuator 36 rests against stop 114 when the upper level of the fuel filling underground storage tank 94 is positioned below non-contact valve actuator 36. Upward travel of non-contact valve actuator 36 may similarly be limited by, e.g., stop 116 (Fig. 2). Stop 116 may also key non-contact valve actuator 36 to conduit wall exterior surface 30 to prohibit relative rotation between non-contact valve actuator 36 and conduit wall exterior surface 30.

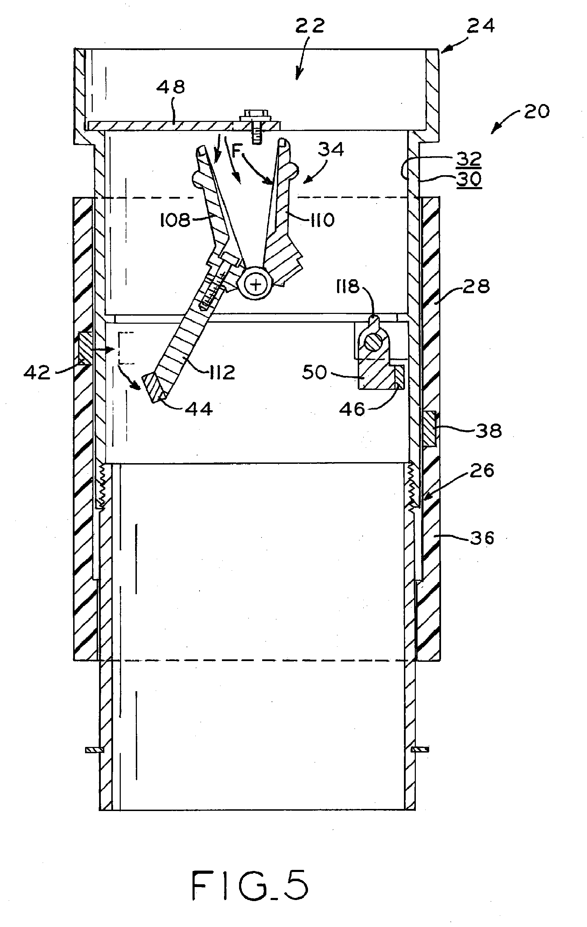

Non-contact valve actuator 36 comprises a float having buoyancy characteristics such that it is buoyant on a surface of motor fuel. In one exemplary embodiment, float 36 has a specific gravity less than 0.7 so that it is buoyant on a surface of a quantity of motor fuel. As the liquid level in underground storage tank 94 rises, the top surface of fuel contained in underground storage tank 94 will encounter float 36. In one exemplary embodiment, when underground storage tank 94 achieves a liquid level corresponding to underground storage tank 94 being about 90% full, float 36 will travel upwardly until valve actuator magnet 42 is aligned with valve body magnet 44. Alternative configurations of the present disclosure will include valve actuators that actuate the primary valve at about 90%. This position of float 36 is illustrated in Fig. 5, which also illustrates valve body magnet 44 moving from the at rest position illustrated in Fig. 4 to an actuated position, as illustrated in Fig. 5. In this exemplary embodiment, valve actuator magnet 42 repels valve body magnet 44 to actuate valve body 34 from the open position illustrated in Fig. 4 toward the closed position illustrated in Fig. 6. In the open position illustrated in Fig. 4, valve body 34 is shielded from contact by fluid passing through conduit 22 by deflector 48. As illustrated in Fig. 3, deflector 48 covers valve halves 108, 110 and arm 112 when valve body 34 maintains the open position illustrated in Figs. 3 and 4.

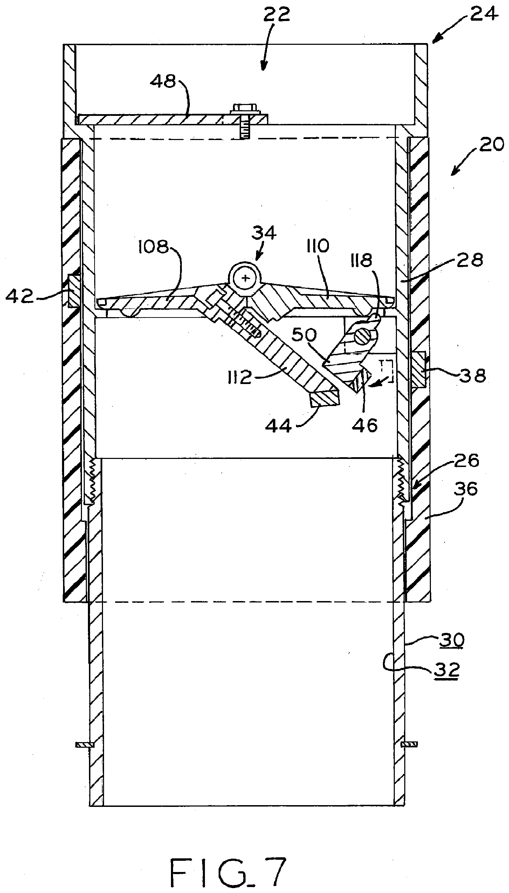

As float 36 rises and brings valve actuator magnet 42 into alignment with valve body magnet 44, valve body magnet 44 causes valve half 108 to rotate from the open position illustrated in Fig. 4 to an intermediate position as illustrated in Fig. 5. In this position, flow F of fluid passing through conduit 22 can contact the upper surface of valve half 108. A portion of this flow is deflected from the upper surface of valve half 108 onto the upper surface of valve half 110. Flow F in the valve position illustrated in Fig. 5 causes valve halves 108 to move against the biasing force of the torsion spring acting to bias valve halves 108, 110 into the open position illustrated in Fig. 4, until valve halves 108, 110 achieve the closed position illustrated in Fig. 6. As described above, when valve body 34 maintains the closed position illustrated in Fig. 6, the maximum fill rate associated with underground storage tank 94 can no longer pass valve body 34. Further, the column of fluid maintained in the portion of drop tube 98 upstream from valve body 34 maintains valve body 34 in the closed position illustrated in Fig. 6. If filling is halted, the column of fluid upstream of valve body 34 will eventually drain past valve body 34 in the leak position (described in greater detail below) and valve body 34 will be returned by the biasing force of the torsion spring to its at rest position, as illustrated, e.g., in Fig. 4. As the volume of fuel contained in underground storage tank 94 continues to rise, as fluid passes valve body 34 in the leak position illustrated in Fig. 6, float 36 will continue to rise until closure stop actuator magnet 38 aligns with closure stop magnet 46, as illustrated in Fig. 7.

Closure stop 50, in the exemplary embodiment illustrated in Figs. 2-7, comprises a rotatable cam having cam extension 118 extending therefrom. With cam extension 118 positioned as illustrated in Fig. 6, cam extension 118 prevents valve half 110 of valve body 34 from fully seating against its associated valve seat. As closure stop 50 is actuated from its at rest position as illustrated in Fig. 6, it is moved out of contact with valve half 110 and the weight of the column of fuel positioned upstream of valve body 34 causes valve half 110 to fully seat against its associated valve seat, as illustrated in Fig. 7. In this position, valve body 34 is designed to prevent flow through conduit 22. In one exemplary embodiment, float 36 will rise into the position causing actuation of closure stop 50 when underground storage tank 94 is 95% full.

As fuel is drawn out of underground storage tank 94 by fuel dispenser 106, float 36 will return to a position in which it is no longer operable to actuate closure stop 50 and fluid will leak past valve body 34 until the column of fluid upstream of valve body 34 is depleted and valve body 34 returns to the normally biased position illustrated in Fig. 4.

In the exemplary embodiment illustrated in Fig. 2-7, closure stop actuator magnet 38 repels closure stop magnet 46 to cause actuation of closure stop 50. Closure stop 50 may be biased into the at rest position illustrated in Figs. 4-5 by, e.g., gravity and/or a torsion spring. Magnets 38, 42, 44 and 46 may be any form of ferromagnetic material and/or any other item possessing magnetic qualities. Generally, "magnet" as used in this document is meant to denote any item having the ability to repel and/or attract another item through the use of a magnetic field.

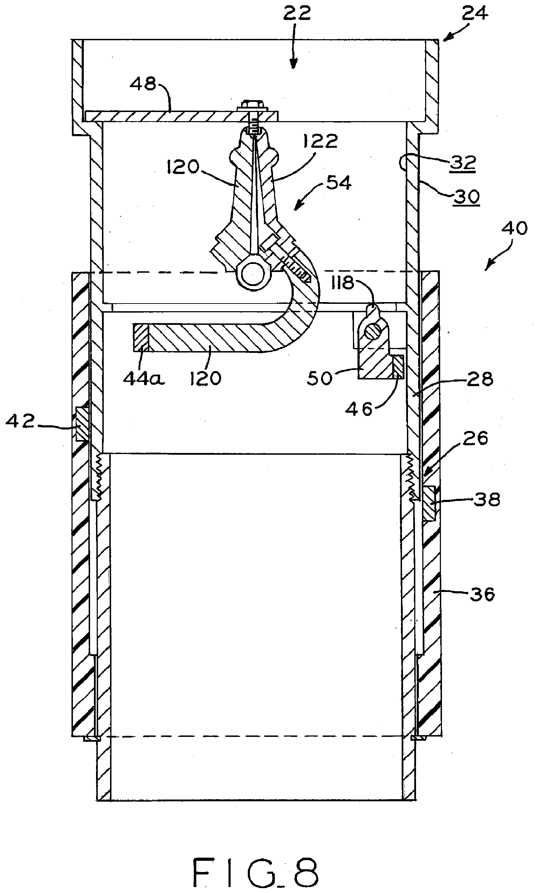

While the embodiment illustrated in Figs. 2-7 uses magnetic repulsion to actuate valve body 34 and closure stop 50, the present disclosure also contemplates use of magnetic attraction to actuate the valve body and closure stop. For example, Fig. 8 illustrates an alternative embodiment valve body 54 not covered by the claimed invention comprised of valve halves 120, 122, with arm 112 extending from valve half 122. In this embodiment, valve actuator magnet 42 and valve body magnet 44a are configured so that with valve actuator magnet 42 positioned proximate to valve body magnet 44a similar to the position of the previous embodiment illustrated in Fig. 5, valve actuator magnet 42 will attract valve body magnet 44a and cause actuation of valve body 54 in a similar manner to that described above with respect to the embodiment illustrated in Figs. 2-7. In this embodiment, closure stop 50 is identical to the closure stop associated with the embodiment illustrated in Figs. 2-7 and is not described in detail here, for the sake of brevity. Throughout the description of the several embodiments, similar numeric and/or alpha numeric reference signs are used to denote similar parts (e.g., reference numerals having identical numeric designations, but different alphabetic designations such as 52, 52a, 52b). Without regard to whether similar reference signs are used to denote similar parts across the several embodiments, the present disclosure contemplates the interchangeable use of different features and/or parts from multiple embodiments to create a construct within the scope of the present disclosure.

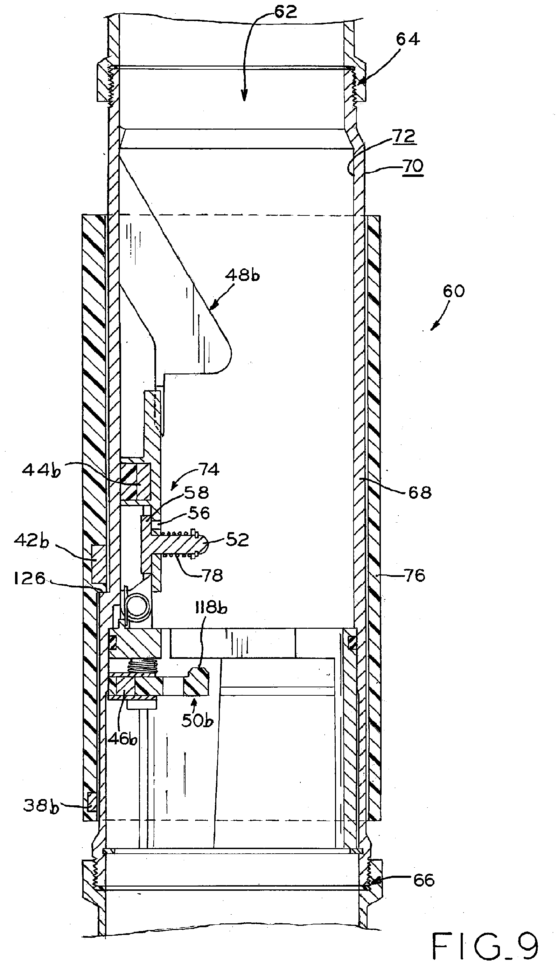

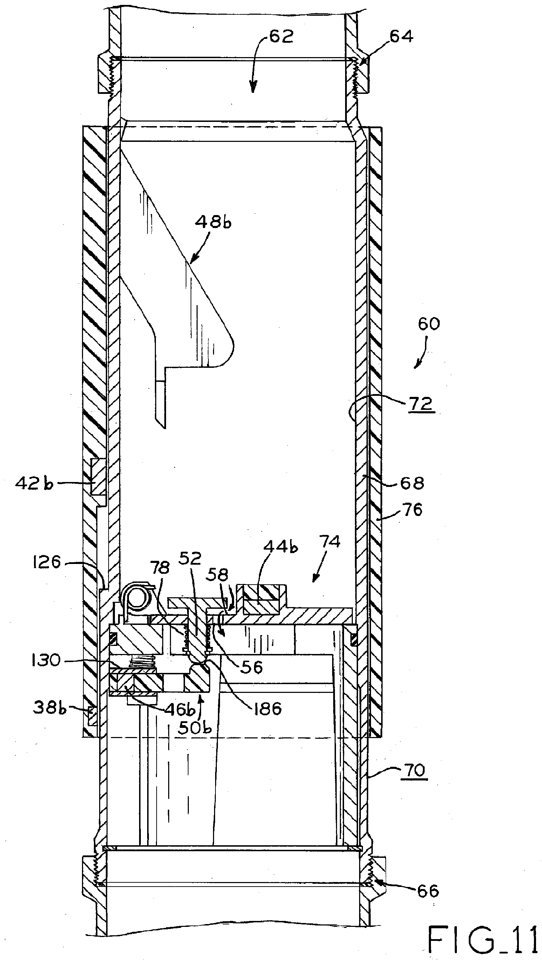

Figs. 9-13 illustrate an alternative embodiment overfill prevention valve in accordance with the present disclosure not covered by the claimed invention. Referring to Fig. 11, valve body 74 is illustrated in a closed position, with poppet valve 52 (which will be described in further detail below) in an open position. In this configuration, a small amount of flow can pass valve body 74. When valve body 74 maintains the open position illustrated in Fig. 9, conduit 62 is sufficiently open to allow passage of fuel at a normal fill rate. As described above, for applications in standard configurations, this fill rate is generally in the range of 1363.8 to 2273.0 liters per minute (300 to 500 gpm). In applications with remote filling capability, the standard flow rate may be as low as 113.7 liters per minute (25 gpm). With valve body 74 in the open position illustrated in Fig. 9, the maximum fill rate is accommodated by conduit 62. In the closed position illustrated in Fig. 11, and with poppet valve 52 open, the maximum fill rate is not allowed and, if filling at such a rate were to continue, the portion of drop tube 98 upstream of valve body 74 would fill with a column of fluid. The actuation mechanism which causes valve body 74 to move from the open position illustrated in Fig. 9 to the closed position illustrated in Fig. 11 (which will be described in more detail below) causes rapid closing of valve body 74, causing the fluid column upstream of valve body 34 to produce a line shock causing hose kick as described above.

With valve body 74 closed as illustrated in Fig. 11, but with poppet valve 52 open, the column of fuel upstream of valve body 74 in drop tube 98 will slowly leak past valve body 74, allowing fill hose 104 to drain so that it can be properly disconnected from the fill port connected to underground storage tank 94. Valve body 74 is said to be in a "closed" position when it disallows passage of fluid at the maximum fill rate associated with underground storage tank 94. In this exemplary embodiment, the closed position is achieved when valve body 74 is fully seated against its associated valve seat. The closed condition of valve body 74 may be associated with an open condition of poppet valve 52 or a closed condition of poppet valve 52, the operation of which will be further described below.

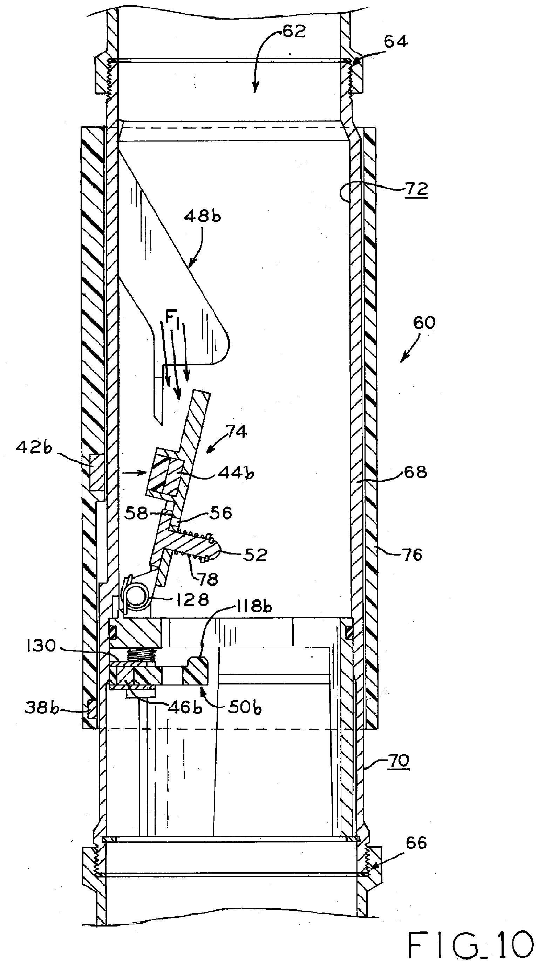

Referring to Fig. 9, valve body 74 is pivotally connected relative to drop tube segment 60. In an exemplary embodiment, valve body 74 may be pivotally connected by a rod connected to conduit wall interior surface 72. In the embodiment illustrated in Figs. 9-14, valve body 74 comprises a flapper valve. Flapper valve 74 can be biased into the open position illustrated in Fig. 9, e.g., by torsion spring 128 (Fig. 10). Secured to the body of flapper valve 74 is valve body magnet 44b. With underground storage tank 94 filled to less than its capacity, tanker truck 102 can be utilized to provide additional motor fuel to underground storage tank 94 (Fig. 1). As underground storage tank 94 nears capacity, non-contact valve actuator 76 will actuate valve body 74 from the open position illustrated in Fig. 9 toward the closed position illustrated in Fig. 11.

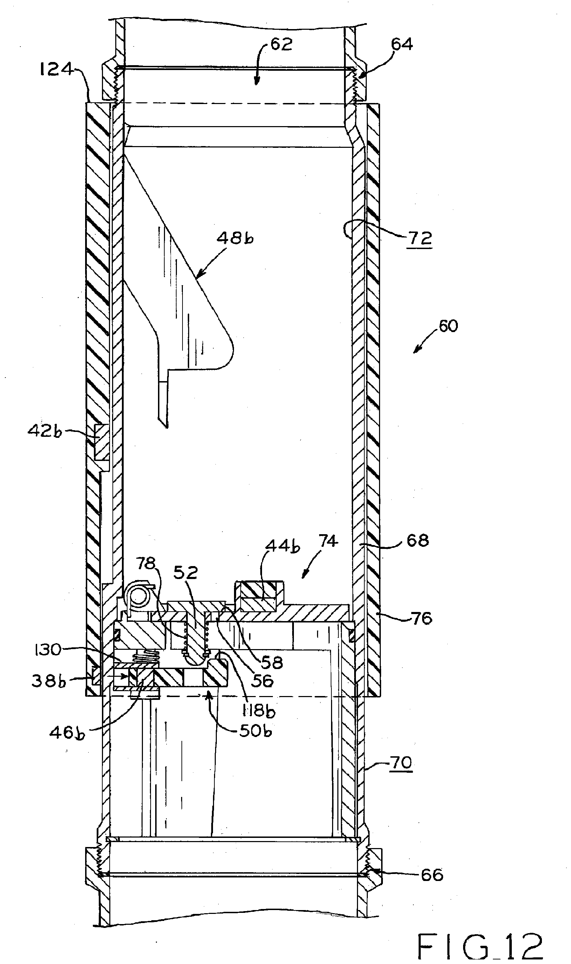

Similar to the embodiments illustrated in Figs. 2-8, drop tube segment 60 includes non-contact valve actuator 76 positioned about conduit wall exterior surface 70, with conduit wall 68 interposed between and physically separating non-contact valve actuator 76 from valve body 74. As described in detail below, non-contact valve actuator 76 is capable of actuating valve body 74 from the open position illustrated in Fig. 9 to a closed position such as the one illustrated in Fig. 11, without physically penetrating conduit wall 68. Similar to non-contact valve actuator 36 described above, non-contact valve actuator 76 comprises a hollow cylinder sized to fit about and surround conduit wall exterior surface 70. Non-contact valve actuator 76 rests atop stop 126 when the upper level of the fuel filling underground storage tank 94 is positioned below non-contact valve actuator 76. Upward travel of non-contact valve actuator 76 may similarly be limited by, e.g., stop 124, as illustrated in Fig. 12.

Similar to non-contact valve actuator 36, non-contact valve actuator 76 comprises a float having buoyancy characteristics such that it is buoyant on a surface of motor fuel. In one exemplary embodiment, float 36 has a specific gravity less than 0.7 so that it is buoyant on a surface of a quantity of motor fuel. As the liquid level in underground storage tank 94 rises, the top surface of fuel contained in underground storage tank 94 will encounter float 76. In one exemplary embodiment, when underground storage tank 94 achieves a liquid level corresponding to underground storage tank 94 being about 90% full, float 76 will travel upwardly until valve actuator magnet 42b is aligned with valve body magnet 44b. This position of float 36 is illustrated in Fig. 10, which also illustrates valve body magnet 44b moving from the at rest position illustrated in Fig. 9 to an actuated position as illustrated in Fig. 10. In this exemplary embodiment, valve actuator magnet 42b repels valve body magnet 44b to actuate valve body 74 from the open position illustrated in Fig. 9 toward the closed position illustrated in Fig. 11.

In the open position illustrated in Fig. 9, valve body 74 is not susceptible to actuation from the open position illustrated in Fig. 9 toward the closed position illustrated in Fig. 10 by a flow of liquid traversing conduit 62. Valve body 74 is at least partially shielded from contact by fluid passing through conduit 62 by deflector 48b. Deflector 48b comprises a number of vanes oriented along the longitudinal axis of conduit 62 and further comprises a plate extending transverse the longitudinal axis of conduit 62 and positioned upstream of valve body 74 when valve body 74 maintains the open position illustrated in Fig. 9. With valve body 74 in the open position illustrated in Fig. 9, deflector 48b shields valve body 74 from a flow of fluid through conduit 62. Deflector 48b, as well as deflector 48 described above, not only provide a shield to prevent a quantity of fluid flowing through the conduit from contacting the valve body, but also create an impediment to accidentally contacting the valve body with an implement such as a dipstick, which may be inserted through drop tube 98 to determine the level of fluid in underground storage tank 94.

As float 76 rises and brings valve actuator magnet 42b into alignment with valve body magnet 44b, valve body magnet 44b causes valve body 74 to rotate from the open position illustrated in Fig. 9 to an intermediate position as illustrated in Fig. 10. In this position, flow F₁ of fluid passing through conduit 62 can contact the upper surface of valve body 74. Flow Fi in the valve position illustrated in Fig. 10 causes valve body 74 to move against biasing force of torsion spring 128, which acts to bias valve body 74 into the open position illustrated in Fig. 9, until valve body 74 achieves the closed position illustrated in Fig. 11.

As described above, when valve body 74 maintains the closed position illustrated in Fig. 10, the maximum fill rate associated with underground storage tank 94 can no longer pass valve body 74. Further, the column of fluid maintained in the portion of drop tube 98 upstream from valve body 74 maintains valve body 74 in the closed position illustrated in Fig. 11. If filling is halted, the column of fluid upstream of valve body 74 will eventually drain past valve body 74 in the leak position and valve body 74 will be returned by the biasing force of torsion spring 128 to its at rest position, as illustrated, e.g., in Fig. 9. As the volume of fuel contained in underground storage tank 94 continues to rise, as fluid passes valve body 74 in the leak position illustrated in Fig. 11, float 36 will continue to rise until closure stop actuator magnet 38b aligns with closure stop magnet 46b as illustrated in Fig. 12.

Closure stop 50b, in the exemplary embodiment illustrated in Figs. 9-13, comprises a piston axially translatable relative to cylinder 130. Each of the piston and cylinder forming a part of closure stop 50b may have opposing surfaces transverse to the axis along which the piston reciprocates relative to cylinder 130 and against which bears a compression spring to bias closure stop 50b into the leak position illustrated in Fig. 11. Such opposing surfaces may also limit the travel of the piston of closure stop 50b relative to cylinder 130. Closure stop 50b includes cam extension 118b extending therefrom. With cam extension 118b positioned as illustrated in Fig. 11, cam extension 118 pushes poppet valve 52 against the biasing force of spring 78 until poppet valve 52 is no longer seated against poppet valve seat 58 and poppet valve port 56 is placed in fluid communication with conduit 62. As closure stop 50b is actuated from its at rest position illustrated in Fig. 9-11, it is moved out of contact with poppet valve 52 and the weight of the column of fuel positioned upstream of valve body 74 together with the biasing force of spring 78 causes poppet valve 52 to fully seat against poppet valve seat 58 so that poppet valve port 56 is no longer in fluid communication with conduit 62. In this position, valve body 74 and poppet valve 52 are designed to prevent flow through conduit 22. In one exemplary embodiment, float 76 will rise into the position causing actuation of closure stop 50b when underground storage tank 94 is 95% full. As fuel is drawn out of underground storage tank 94 by fuel dispenser 106, float 76 will return to a position in which it is no longer operable to actuate closure stop 50b and fluid will leak past valve body 74 until the column of fluid upstream of valve body 34 is depleted and valve body 34 returns to the normally biased position illustrated in Fig. 4.

In the exemplary embodiment illustrated in Figs. 9-13, closure stop actuator magnet 38b repels closure stop magnet 46b to cause actuation of closure stop 50b. Closure stop 50b may, in alternative embodiments be actuated by an attractive force between closure stop actuator magnet 38b and closure stop magnet 46b. For example, an end of closure stop 50b may be spaced from conduit wall interior surface 72, e.g., by a compression spring. In such an embodiment, a stop positioned outwardly from closure stop 50b would prevent the aforementioned compression spring from extending the piston of closure stop 50b more than a predetermined distance through cylinder 130. Specifically, the stop of this form of the present disclosure would prevent the piston of closure stop 50b from extending further than a position in which cam extension 118b is positioned to contact poppet valve 52. In such an embodiment, closure stop actuator magnet 38b and closure stop magnet 46b will be configured such that they will be attracted to each other so that positioning of closure stop actuator magnet 38b in the position illustrated in Fig. 12 will cause closure stop magnet 46b to be attracted toward closure stop actuator magnet 38b against the biasing force of the aforementioned compression spring.

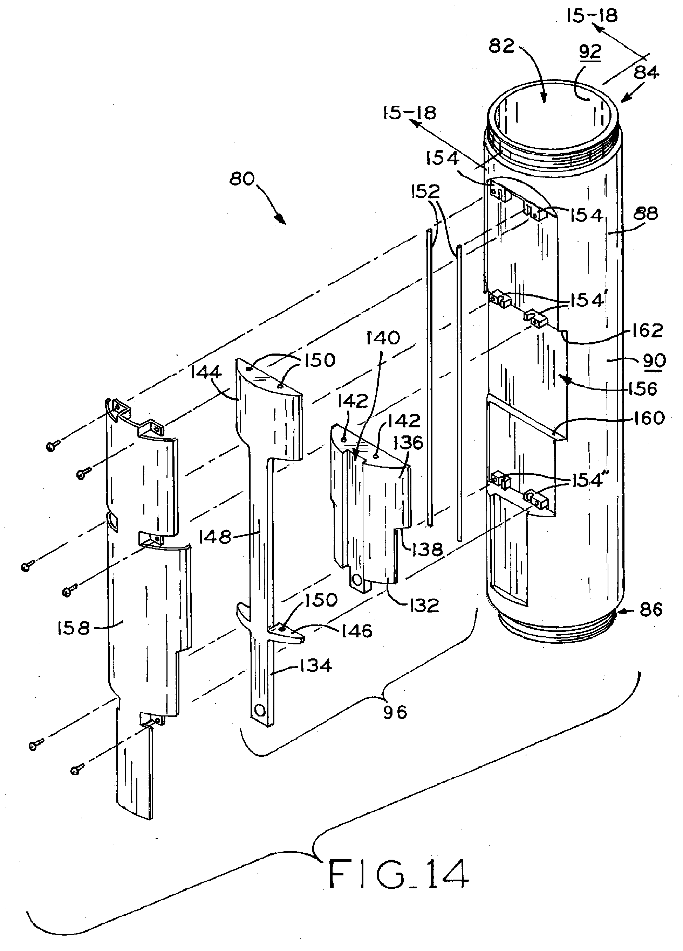

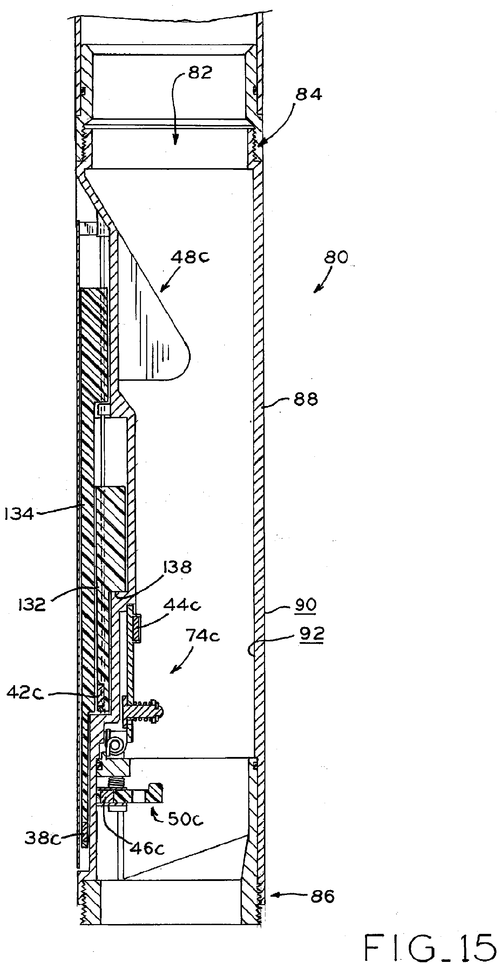

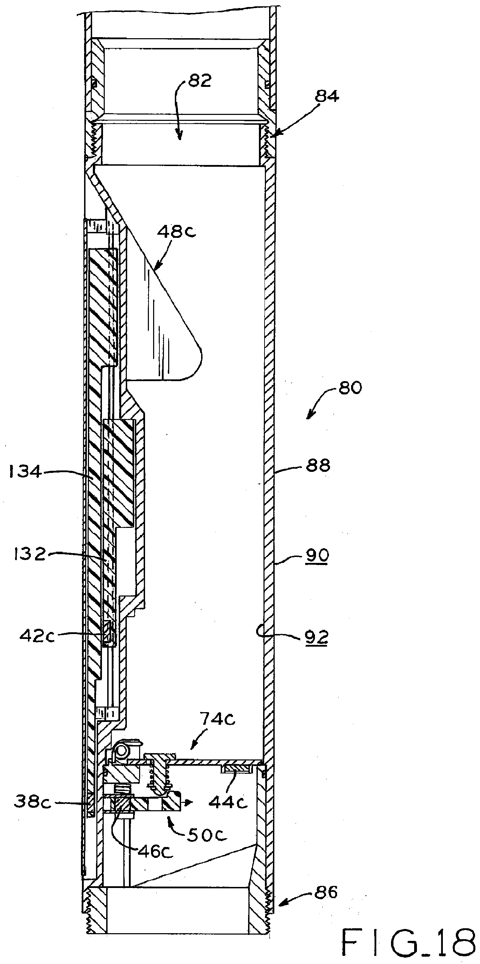

Figs. 14-18 illustrate a further alternative embodiment overfill prevention valve in accordance with the present disclosure not covered by the claimed invention. Referring to Fig. 14, drop tube segment 80 includes conduit 82 spanning first end 84 and second end 86 of conduit 82. Conduit wall 88 defines conduit wall interior surface 92 which defines a fluid path through conduit 82 from first end 84 to second end 86. Referring, e.g., to Fig. 15, valve body 74c operates in identical fashion to valve body 74 illustrated above with respect to the embodiments shown in Figs. 9-13. Therefore, details concerning the operation of valve body 74c will not be provided, for the sake of brevity.

As with the embodiment illustrated in Figs. 9-13, valve body 74c is movably positioned in the fluid path of conduit 82 and moveable from an open position to a closed position. Valve body 74c is functionally identical to valve body 74, including the inclusion of a poppet valve and associated poppet valve port; however, non-contact valve actuator 96 (Fig. 14) is structurally and functionally different than the previously described non-contact valve actuators.

Referring to Fig. 14, non-contact valve actuator 96 includes first float 132 and second float 134. First float 132 includes main body 136 defining shoulder 138. First float 132 includes guide channel 140 and guide rod apertures 142. Second float 134 includes main body 144, stop 146, guide extension 148, and guide rod apertures 150. Guide extension 148 is sized and shaped to fit within guide channel 140 of first float 132 such that guide channel 140 cooperates with guide extension 148 to guide relative movement of first float 132 and second float 134. In construction, second float 134 is positioned with guide extension 148 occupying guide channel 140. In this position, guide rod apertures 142 of first float 132 align with guide rod apertures 150 of second float 134. Guide rods 152 are then passed through guide rod apertures 150 of second float 134 and guide rod apertures 142 of first float 132 and are thereafter secured to guide rod retainers 154 of drop tube segment 80, with main body 136 of first float 132 occupying first float channel 156 and main body 144 of second float 134 positioned between guide rod retainers 154 and 154'. To complete securement of non-contact valve actuator 96 to drop tube segment 80, splash shield 158 is secured to drop tube segment 80 by, e.g. threaded fasteners. In its secured position, splash shield 158 retains guide rods 152 within guide rod retainers 154.

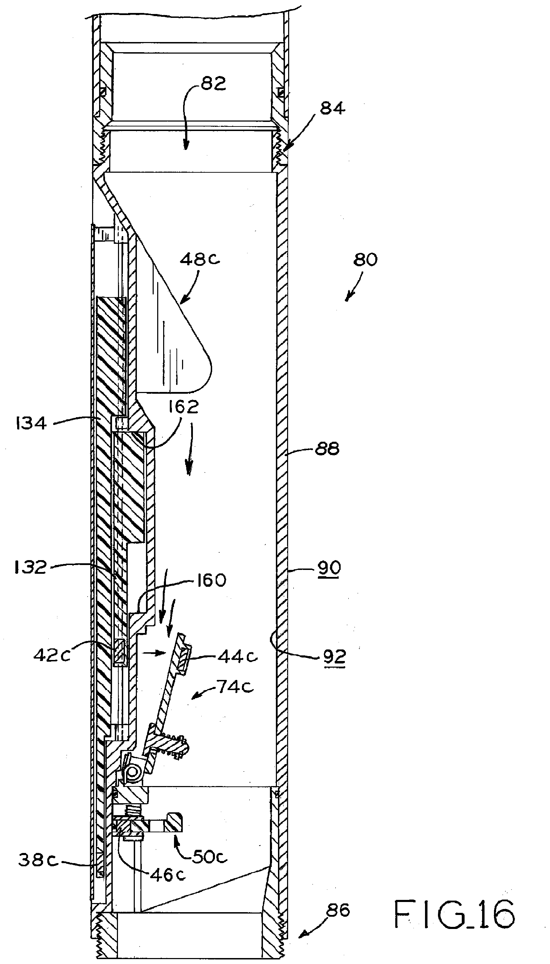

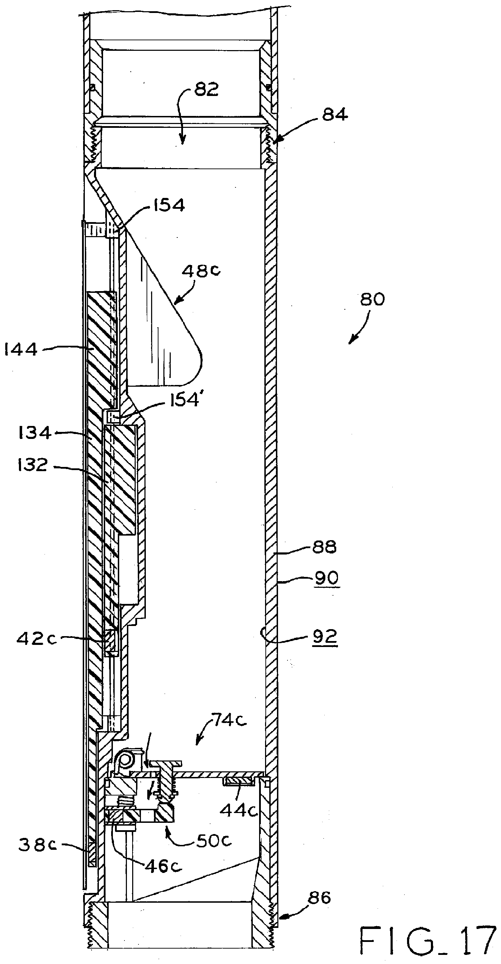

Referring to Figs. 14 and 15, first float 132 maintains an at rest position with shoulder 138 of main body 136 abutting shoulder 160 formed in conduit wall exterior surface 90. As illustrated in Fig. 16, upward travel of first float 132 is limited by shoulder 162 formed in conduit wall exterior surface 90. As illustrated in Fig. 17, second float 134 maintains an at rest position in which main body 144 abuts guide rod retainers 154'. Upward travel of second float 134 can be limited by guide rod retainers 154. Referring to Figs. 15 and 16, first float 132 carries valve actuator magnet 42c. Valve actuator magnet 42c functions to actuate valve body 74c in an identical fashion to the actuation of valve body 74 described above with reference to Figs. 9 and 10.

Unlike the previously described embodiments, first float 132 does not incorporate a closure stop actuator. In the embodiment illustrated in Figs. 14-18, the closure stop actuator takes the form of closure stop actuator magnet 38c which is carried by second float 134. Second float 134 is actuatable independent of first float 132 and functions to actuate closure stop 50c in the same fashion as described above with respect to closure stop 50b (see Figs. 11 and 12).

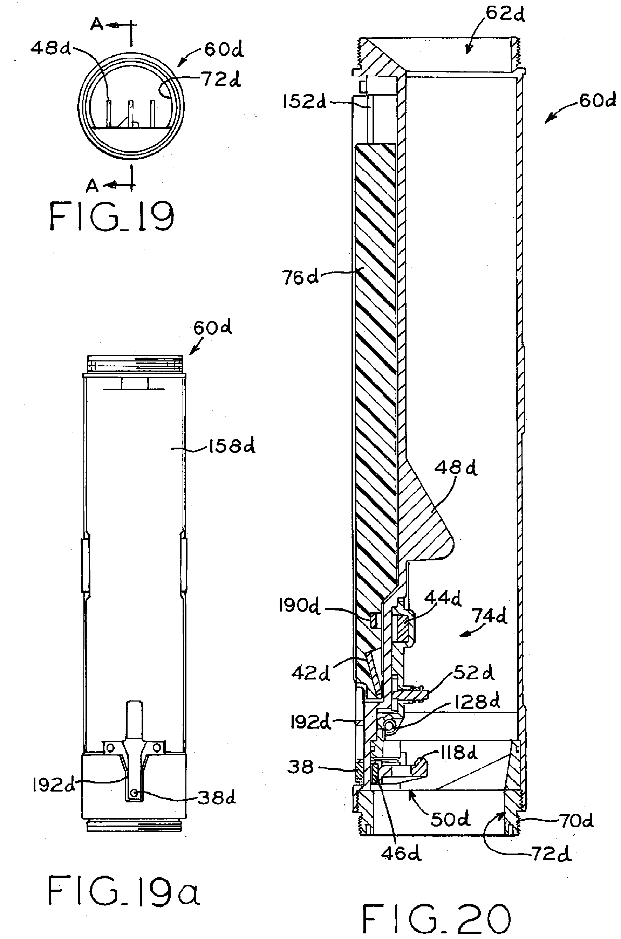

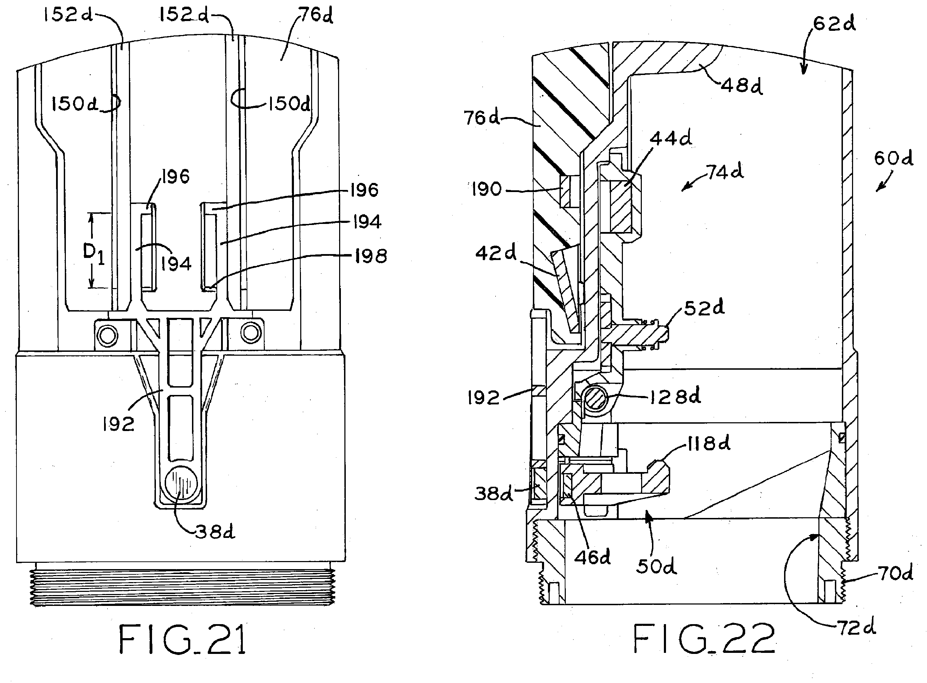

Figs. 19-32 illustrate another embodiment of the present disclosure not covered by the claimed invention. Referring to Figs. 19 and 20, splash guard 158d covers float 76d and closure stop actuator magnet 38d is secured in magnet holder 192d. Guide rods 152d are inserted through longitudinal apertures in float 76d (covered from view in Fig. 19) so that float 76 can move along guide rods 152d like the embodiment previously described and illustrated in Figs. 14-18. Referring to Fig. 21, guide rods 152d are inserted through apertures in magnet holder 192 to connect magnet holder 192 to drop tube segment 60d so that holder 192 can move along guide rods 152d when ridge 198 of float 76d rises to engage extension 196 to lift magnet holder 192.

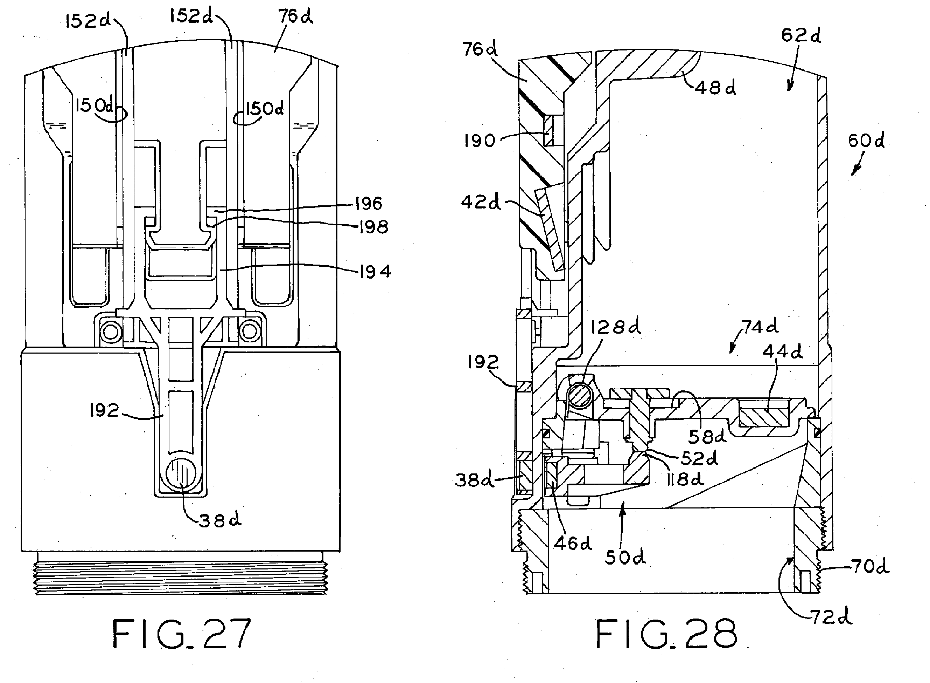

Referring to Fig. 22, flapper valve body 74d (like flapper valve body 74 in Fig. 9) is illustrated in an open position to allow passage of fuel through valve body 74d at a normal flow rate, in the ranges previously described above. Referring to Fig. 28, valve body 74d (like flapper valve body 74 in Fig. 11) is illustrated in a closed position, and because poppet valve 52d is in an open position, a small amount of fluid can still pass through valve body 74d. Like previous embodiments, the initial transition of valve body 74d from the open position illustrated in Fig. 22 to the closed position illustrated in Fig. 28 causes rapid closing of valve body 74d because valve body 74d is moved into the path of and is collided with the liquid stream flow.

Referring to Fig. 22, valve body 74d is pivotally connected to drop tube segment 60d and, in an exemplary embodiment, may be pivotally connected by a rod connected to conduit wall interior surface 72d. Valve body 74d is biased in the open position by torsion spring 128d, which has a lower spring constant than that disclosed in Figs. 9-14, and hold-open magnet 190 on float 76d has an attractive force that also urges valve body 74d into the open position when float 76d maintains its lowered position, i.e., it has not yet begun to float on a quantity of product in underground storage tank 94. Specifically, hold-open magnet 190 and valve magnet 44d are structured and arranged such that they have a magnetic attraction to each other. As storage tank 94 (shown in Fig. 1) nears capacity, float 76d will rise to actuate valve body 74d from the open position in Fig. 22 to the closed position illustrated in Fig. 28.

Referring to Figs. 19-32, similar to first and second floats 132 and 134 in Figs. 14-18, guide rods 152d are passed through guide rod slots 150d to slidingly secure float 76d to drop tube segment 60d along conduit wall exterior surface 70d and physically separated from valve body 74d. Sharing the same buoyancy characteristics as non-contact valve actuator 36 in Figs. 4-8, in one exemplary embodiment, when the liquid level in underground storage tank 94 reaches about 90%, float 76d will begin to rise to transition valve body 74d from the open position in Fig. 22 to the closed position in Fig. 28.

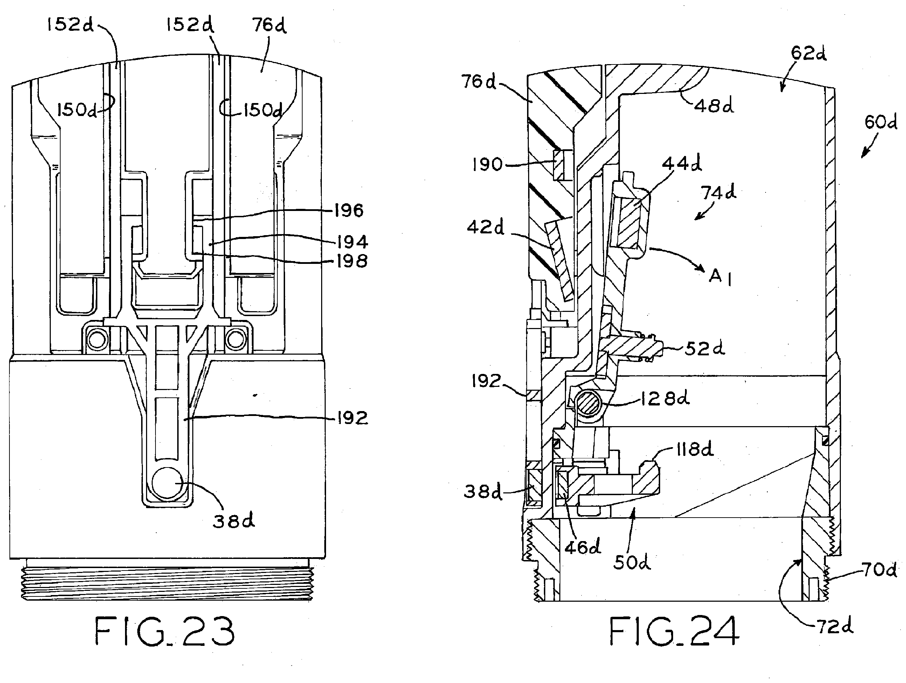

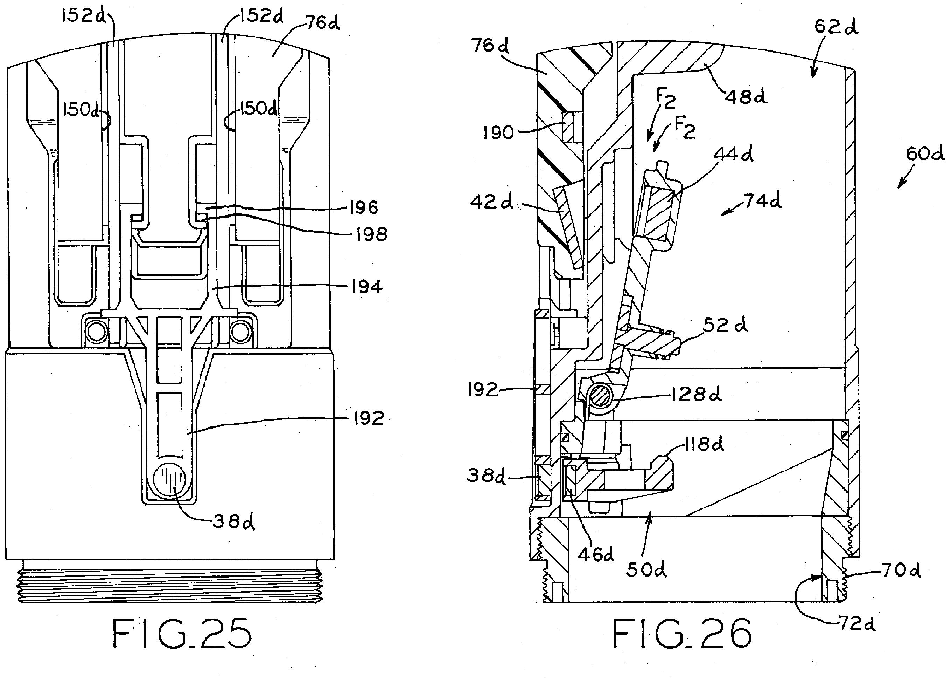

Before this transition, when valve body 74d is in the open position, deflector 48d shields valve body 74d from being actuated by the flow of liquid through conduit 62d. When the liquid level in storage tank 94 has buoyed float 76d upward to actuate valve body 74d to an intermediate position (out of the upright but not yet in the closed position) as illustrated in Fig. 26, the flow of fluid through conduit 62d begins to actuate valve body 74d toward the closed position illustrated in Fig. 28. Specifically, in Fig. 26, the rising liquid level will urge float 76d upward so that hold-open magnet 190 is no longer aligned with, and thus no longer attracts leftward (in the view of Fig. 26), valve magnet 44d. Instead, repelling valve actuator magnet 42d is moved into alignment with valve magnet 44d to repel valve magnet 44d and urge valve body 74d to rotate downward, as shown by arrows A₁ (Fig. 24). Repelling valve actuator magnet 42d and valve magnet 44d are structured and arranged such that they magnetically repel one another. The repulsion of valve actuator magnet 42d overcomes the bias of torsion spring 128d to actuate valve body 74d downward, on its way to achieving the closed position. Flow F₂, illustrated in Fig. 26, urges valve body 74d against the biasing force of the torsion spring 128d as hold-open magnet 190 is no longer aligned with valve magnet 44d to urge valve body 74d to the open position. Once the valve body 74d is in the closed position illustrated in Fig. 28, fluid through conduit 62d can no longer pass valve body 74d at the maximum rate because valve body 74d is in the leak position, as previously described.

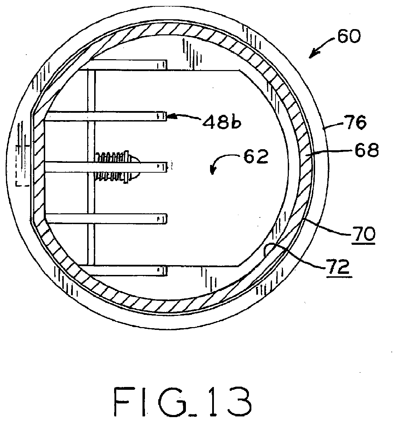

Poppet valve 52d, in the exemplary embodiment in Figs. 19-32, is substantially the same structure as poppet valve 52 illustrated in Figs. 9-13. For example, referring specifically to Fig. 28, like in previous embodiments, valve body 74d is in the closed position, but poppet valve 52d is open to allow a small amount of liquid to flow through valve body 74d. However, fully seating poppet valve 52d against poppet valve seat 58d differs from the process previously described and illustrated in Figs. 12 and 13.

Referring back to Fig. 19a, magnet holder 192 is illustrated holding closure stop actuator magnet 38d and having a pair of arms 194 with extensions 196 extending from each arm 194. Each extension 196 is situated distance Di (Fig. 21) from ridge 198 formed along float 76d. Referring now to Fig. 27, magnet holder 192 has remained stationary while float 76d has risen Di so that ridges 198 are adjacent extensions 196. At the same time, referring to Fig. 28, closure stop 50d includes cam extension 118d that selectively pushes poppet valve 52d upward and out of engagement with poppet valve seat 58d. Closure stop actuator magnet 38d and closure stop magnet 46d share a magnetic attraction that urges closure stop magnet 46d to the left (in the view illustrated in Fig. 28) against a closure stop spring (not shown) bias to engage cam extension 118d with poppet valve 52d, thereby creating the leak condition. Specifically, the closure stop spring (not shown) will bias closure stop 50d into a position in which cam extension 118d does not engage poppet valve 52d; however, magnetic attraction shared by closure stop actuator magnet 38d and closure stop magnet 46d will overcome this spring bias to engage cam extension 118d with poppet valve 52d as illustrated in Fig. 28. As with the embodiment described above with reference to Figs. 9-13, closure stop 50 may form a piston that reciprocates in a cylinder extending from conduit wall interior surface 72d. The piston may be positioned atop a spring in the cylinder, with an extension from the cylinder occupying a groove in the piston to limit travel of the piston relative to the cylinder to the length of the groove.

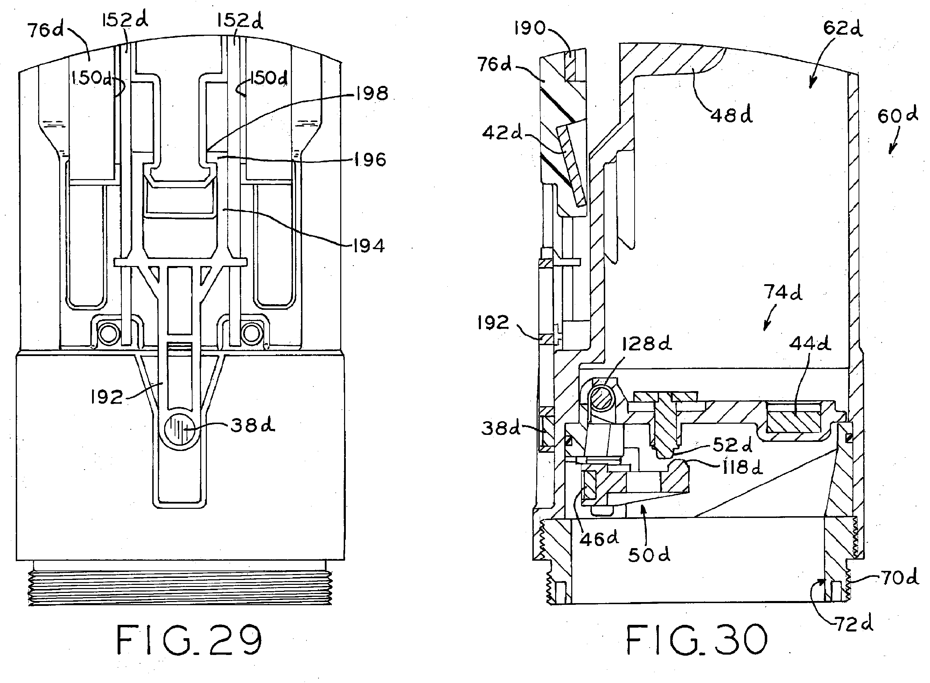

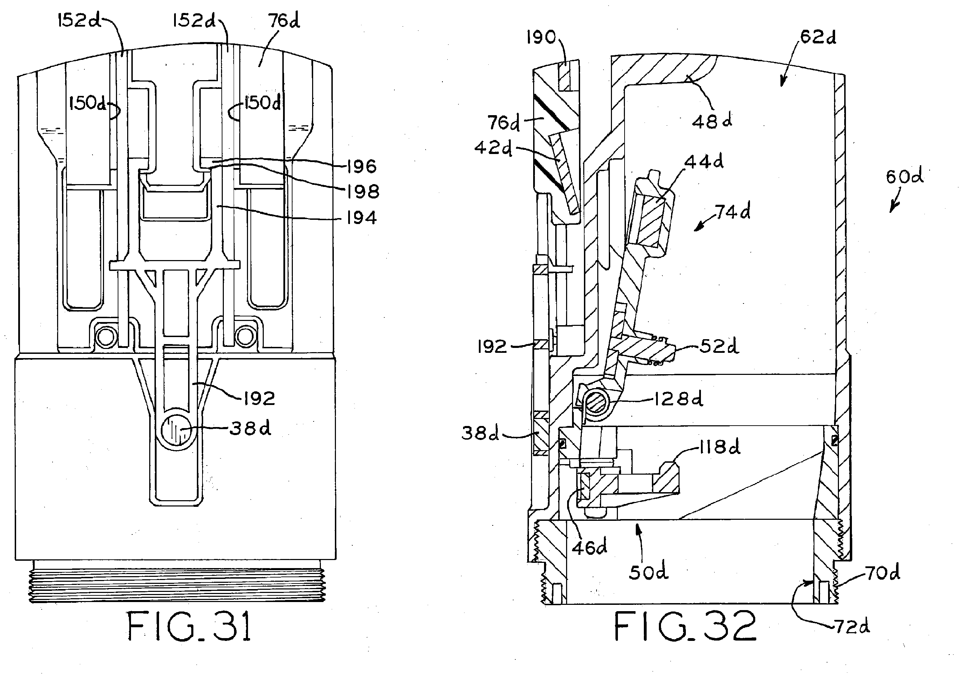

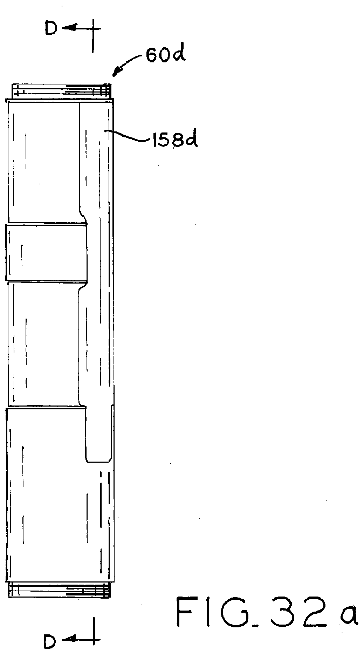

Referring now to Figs. 29 and 30, float 76d has risen so that ridges 198 have engaged extensions 196 to lift magnet holder 192. This lifting slides closure stop actuator magnet 38d upward and out of alignment with closure stop magnet 46d and consequently, closure stop 50d shifts rightward due to the closure stop spring bias. Cam extension 118d disengages poppet valve 52d allowing poppet valve 52d to fully seat against poppet valve seat 58d. While the valve body of poppet valve 52d is not illustrated in its seated position in Fig. 30 (Fig. 30 is meant to illustrate the initial movement of closure stop 50d from the position illustrated in Fig. 28), poppet valve 52d will return to a seated position such as the one illustrated in Fig. 32 just subsequent to movement of closure stop 50d into the position illustrated in Fig. 30.

As the fluid level in underground storage tank 94 lowers, closure stop actuator magnet 38d is returned to the position illustrated in Fig. 28 to unseat poppet valve 52d and allow flow at the previously mentioned leak flow rate. Prior to the unseating of poppet valve 52d, fluid may pass valve body 74 at the "drain" rate described hereinabove. In any event, as conduit 62d is cleared of the column of fluid that will accumulate when valve body 74d maintains the closed position, torsion spring 128d will return valve body 74d to the fully opened position illustrated in Fig. 22.

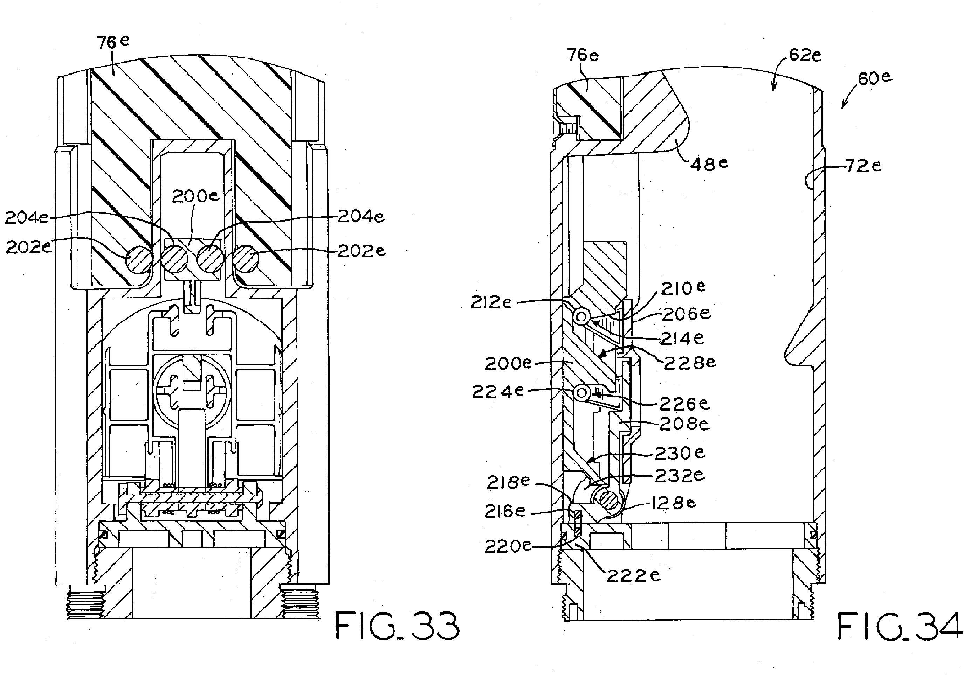

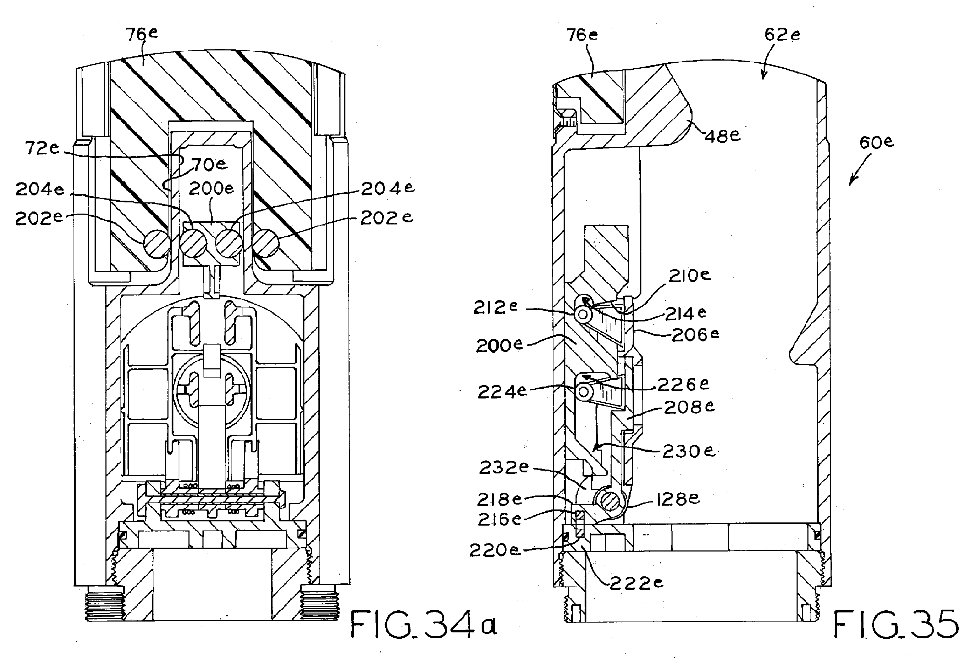

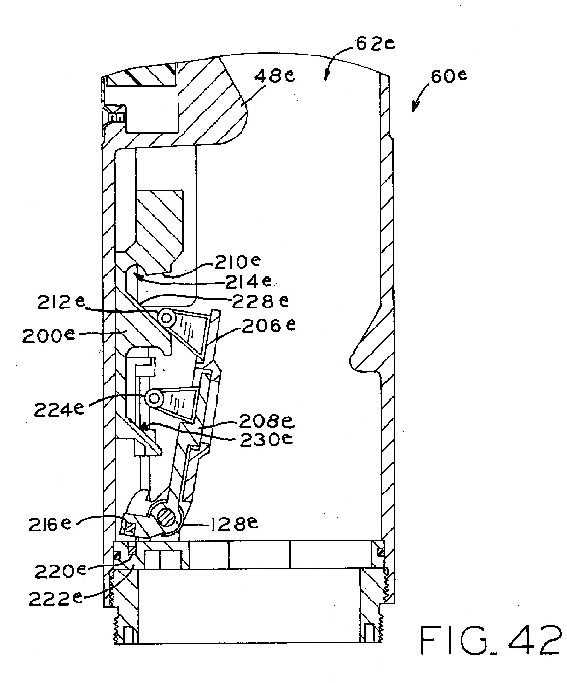

Figs. 32a-42 illustrate an embodiment of the present invention. Referring to Fig. 33, float 76e is illustrated in magnetic communication with shuttle 200e. Float 76e has a substantially equal buoyancy as floats in previous embodiments and is not in contact with shuttle 200e, which is located interior of conduit wall interior surface 72e (Fig. 34). Instead, in the present embodiment, float 76e and shuttle 200e each carry a pair of roller magnets 202e and 204e, respectively, which attract one another, so that as the liquid level in underground storage tank 94 reaches a level at which float 76e begins to rise, float 76e will actuate the corresponding rise of shuttle 200e. Roller magnets 202e are cylindrical magnets having an opposite polarity to cylindrical roller magnets 204e. Specifically, adjacent roller magnet pairs 202e/204e have opposite polarity. Further, roller magnets 202e and 204e are aligned with one another, i.e., they extend a similar distance both into and out of the section plane shown in Fig. 33. As illustrated in Fig. 34, roller magnets 202e are positioned exterior of the conduit wall, i.e., exterior of conduit wall exterior surface 70e. Similarly, roller magnets 204e are positioned interior of the conduit wall, i.e., interior of conduit wall interior surface 72e.

Referring to Fig. 34, shuttle 200e is illustrated with first flapper valve 206e and second flapper valve 208e biased upright in a fully open position. Torsion spring 128e biases first flapper valve 206e into the open position and upper latch 210e of shuttle 200e holds first flapper valve 206e in the open position, as illustrated. First flapper valve 206e has first roller 212e extending through a yoke extending upwardly from flapper valve 206e. First roller 212e is engaged at a recess juxtaposed with upper latch 210e, as illustrated in Fig. 34, when first flapper valve 206e maintains the closed position. In this position, second flapper valve 208e is biased upright due to its planar engagement with first flapper valve 206e. Further, second flapper valve 208e includes upper magnet 216e positioned through stem 218e of second flapper valve 208e. Magnet 220e secured in valve base 222e shares a magnetic attraction with upper magnet 216e to urge second flapper valve 208e into the fully opened position illustrated in Fig. 34. Like first flapper valve 206e, second flapper valve 208e has a second roller 224e extending between a yoke that projects from second flapper valve 208e. Second roller 224e occupies notch 226e of shuttle 200e in the fully opened position illustrated in Fig. 34.

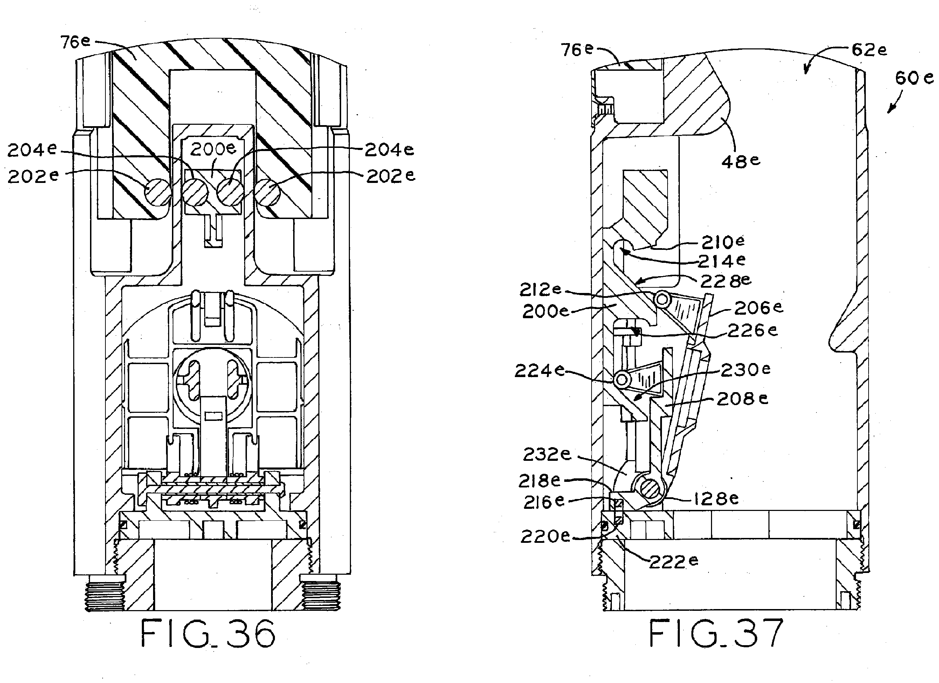

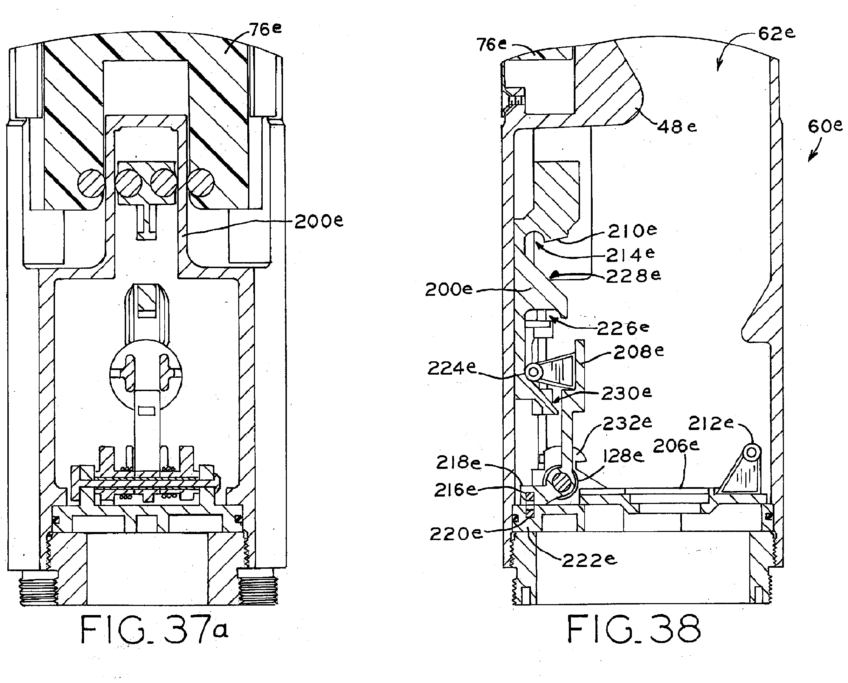

In the embodiment in Figs. 33-42, float 76e begins to rise when the liquid level in tank 94 (shown in Fig. 1) reaches a sufficient height, as previously described for other embodiments. Roller magnets 202e attract roller magnets 204e so that as float 76e rises, it lifts shuttle 200e. Referring to Figs. 33 and 34, first and second flapper valves 206e and 208e are illustrated in the open position. Comparatively, referring to Figs. 36 and 37, when first flapper valve 206e is in an intermediate position, between open and closed, the two pairs of roller magnets, 202e and 204e, have risen relative to first and second flapper valves 206e and 208e. This rising of both float 76e and shuttle 200e actuates the closing of both first and second flapper valves 206e and 208e, as described below.

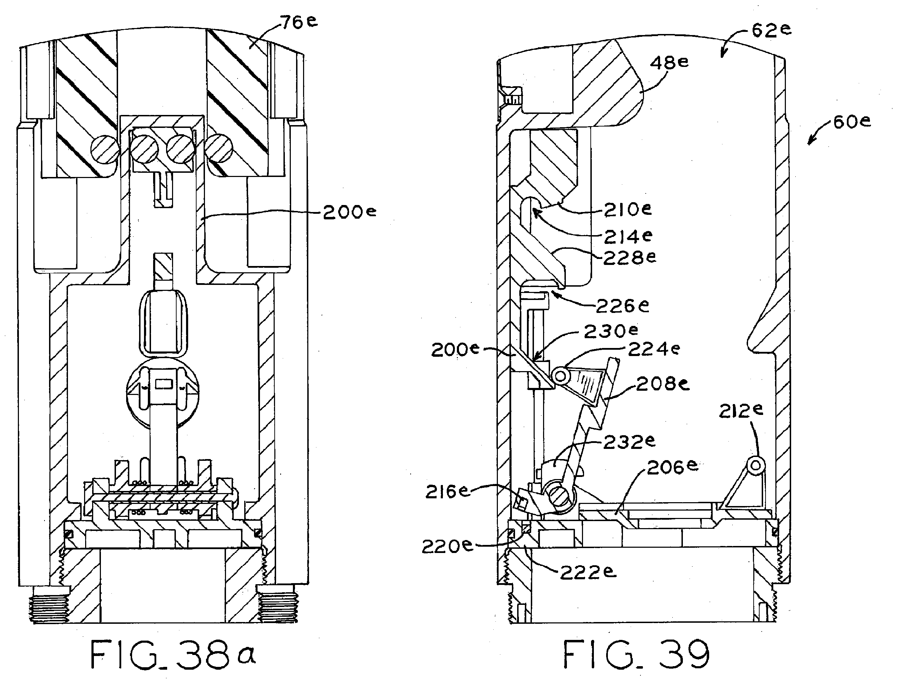

Referring back to Fig. 34, first and second flapper valves 206e and 208e are illustrated in the fully open position. As the liquid level in tank 94 (shown in Fig. 1) causes float 76e to rise, shuttle 200e will rise to actuate the closure of first and second flapper valves 206e and 208e. When this happens, both first and second rollers 212e and 224e ride along the vertical wall surfaces of shuttle 200e. As float 76e rises and, owing to the magnetic attraction between roller magnets 202e and 204e, shuttle 200e rises, first roller 212e and second roller 224e will ride along upper ramp 228e and the vertical wall forming lower notch 226e, respectively, to attain the position illustrated in Fig. 37. In this position, the magnetic attraction between upper magnet 216e and magnet 220e continues to hold second flapper valve 208e in the fully opened position illustrated in Fig. 38. In the position illustrated in Fig. 37, the fluid flowing through the conduit will actuate first flapper valve 206e into the closed position as described above with respect to various alternative flapper valve embodiments. With first flapper valve 206e closed and second flapper valve 208e still open, as illustrated in Fig. 38, the leak position is achieved. As float 76e continues to rise, second roller 224e will ride along lower ramp 230e until achieving the position illustrated in Fig. 39. Figs. 37a and 38a sequentially illustrate the change in position of float 76e and shuttle 200e to effect this movement.

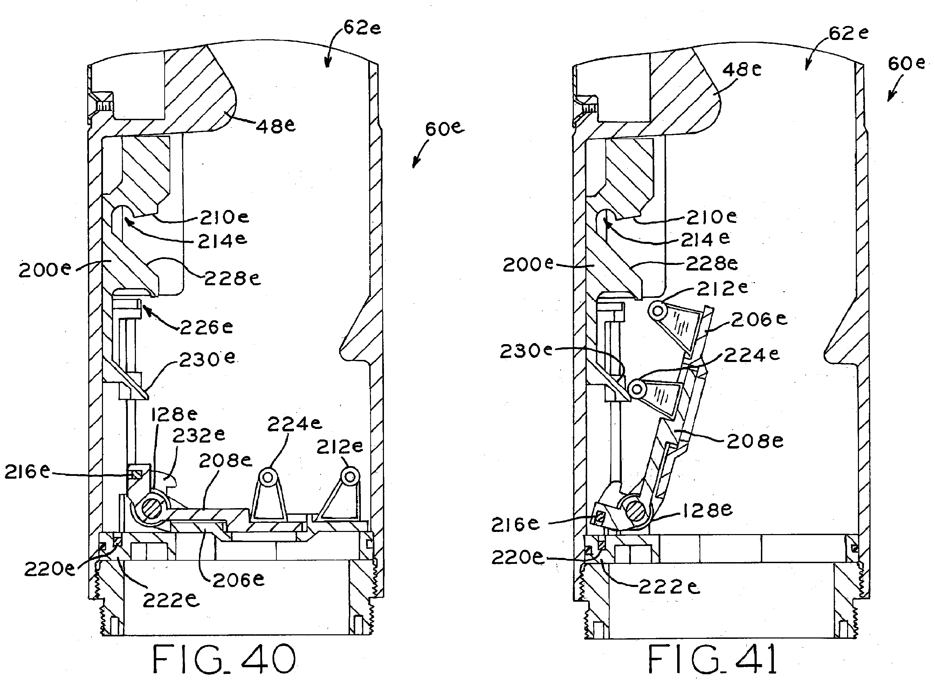

As second flapper valve 208e is forced by the interaction of second roller 224e and lower ramp 230e from the position illustrated in Fig. 38 to the position illustrated in Fig. 39, the magnetic attraction between upper magnet 216e and magnet 220e is broken. With second flapper valve 208e maintaining the position illustrated in Fig. 39, the flow of fluid through the conduit will actuate second flapper valve 208e into a closed position, as described above with respect to the various flapper valve embodiments of the present disclosure. With both first and second flapper valves 206e and 208e closed as illustrated in Fig. 40, fluid may continue to flow through conduit 62e at the drain flow rate described above, e.g., at 2% of maximum flow rate. As the column of fluid drains past first flapper valve 206e and second flapper valve 208e, torsion spring 128e will return both first flapper valve 206e and second flapper valve 208e (owing to its seated position with respect to its valve seat, which is formed in first flapper valve 206e) to the open position.

As the liquid level and flow decrease, float 76e will descend and upward bias of torsion spring 128e will begin to return both first and second flapper valves 206e and 208e to the open position. When this happens, referring from Fig. 41 to Fig. 42, first and second rollers 212e and 224e will reengage upper and lower ramps 228e and 230e, respectively, and the lowering of shuttle 200e and upward rolling of the rollers will reset the valves and shuttle 200e to the open position illustrated in Fig. 35. It is important to note that cam 232e (which is rigidly secured to first flapper valve 206e for rotation therewith) precludes shuttle 200e from achieving its fully lowered position, as illustrated in Fig. 34, unless first flapper valve 206e is rotated to a position that is either fully open or nearly fully open. This is done so that shuttle 200e cannot interfere with the opening of first flapper valve 206e.

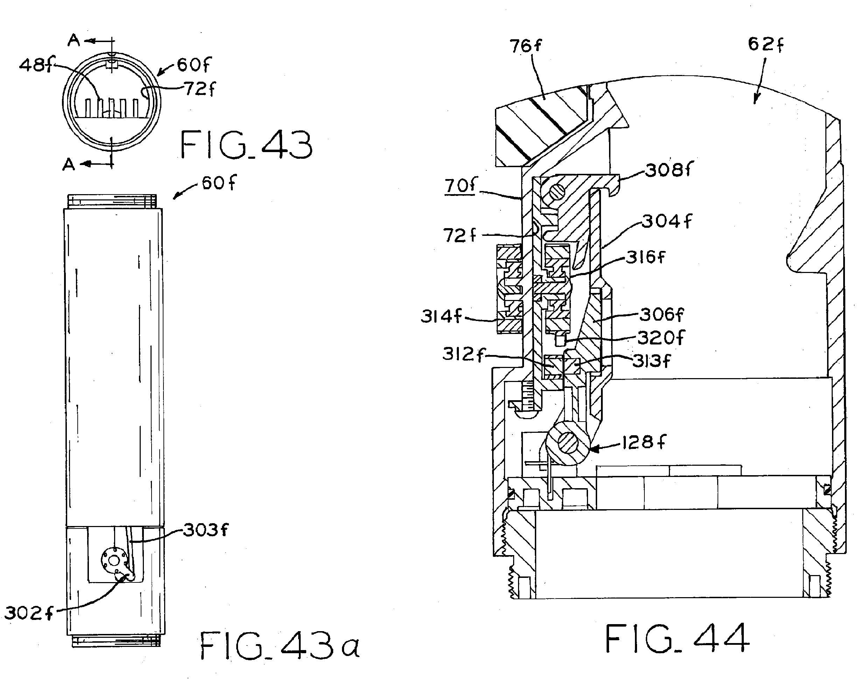

Figs. 43-50 illustrate another embodiment of the present invention wherein the mechanism for actuating the closure of the two interior valves is float 76f connected to a magnetic shaft coupling via link 303f and lever arm 302f. Once again, the two interior valves, first flapper valve 304f and second flapper valve 306f, each transition from an open to a closed position as the liquid level in tank 94 (shown in Fig. 1) rises past a certain threshold, as described for previous embodiments. However, this embodiment uses a rotational magnetic shaft coupling to transition first flapper valve 304f and second flapper valve 306f from open to closed positions. Specifically, referring to Fig. 44, outer magnetic coupler 314f is rotationally supported by a bearing on the exterior of conduit wall exterior surface 70f, while inner magnetic coupler 316f is rotationally supported by a bearing and supported on conduit wall interior surface 72f. Each of outer magnetic coupler 314f and inner magnetic coupler 316f include a plurality of magnets spaced about their perimeter, in the usual arrangement of a magnetic shaft coupler. The polarity of such magnets is configured such that rotational movement of outer magnetic coupler 314f outside of fluid conduit 62f yields corresponding rotational movement of inner magnetic coupler 316f on the interior of conduit 62f, without requiring a physical penetration through the conduit wall. In alternative configurations, inner coupler 316f may be mechanically linked to an external float through a penetration through the conduit wall. In such an embodiment, inner coupler 316f would not include magnets. In further alternative configurations, inner coupler 316f and outer coupler 314f may both be rotatably supported on a post that penetrates the conduit wall, with the non-contact valve actuator still operable to actuate the valve body from the open position toward the closed position without physically penetrating the conduit wall. Stated another way, while a penetration through the conduit may be located adjacent to inner coupler 316f and outer coupler 314f, this penetration does not play a part in transferring actuation from the outside of the conduit into actuation on the inside of the conduit and, therefore, the non-contact valve actuator is still operable to actuate the valve body from the open position toward the closed position without physically penetrating the conduit wall. That is, rotation of outer coupler 314f is still operable to actuate inner coupler 316f (and thereby actuate the valve body from the open position toward the closed position) without physically penetrating the conduit wall, if inner coupler 316f and outer coupler 314f are magnetically linked, but not mechanically linked through the penetration. So long as an actuator outside of the conduit is capable of causing movement of an actuator inside of the conduit without requiring a physical penetration through the conduit to effect the same, the outer actuator is capable of actuating the inner actuator without physically penetrating the conduit wall, without regard to whether a physical penetration adjacent to either the inner or outer actuator exists for another purpose, e.g., for supporting the outer and/or inner actuators, or for securing the drop tube segment containing the overfill prevention valve to another drop tube segment.

Referring to Fig. 44, both first flapper valve 304f and second flapper valve 306f are illustrated in the open position. First flapper valve 304f is biased in the upright position by torsion spring 128f and held in this upright position by overhead latch 308f. Second flapper valve 306f is held in the upright position because it is in planar engagement with first flapper valve 304f, making second flapper valve 306f upright whenever first flapper valve 304f is as well. Further, even without engagement by first flapper valve 304f, second flapper valve 306f would be held in place by the magnetic attraction between flapper valve magnet 312f that is secured to pivot arm 322f (as further described below) and magnet 313f, which is secured to second flapper valve 306f.

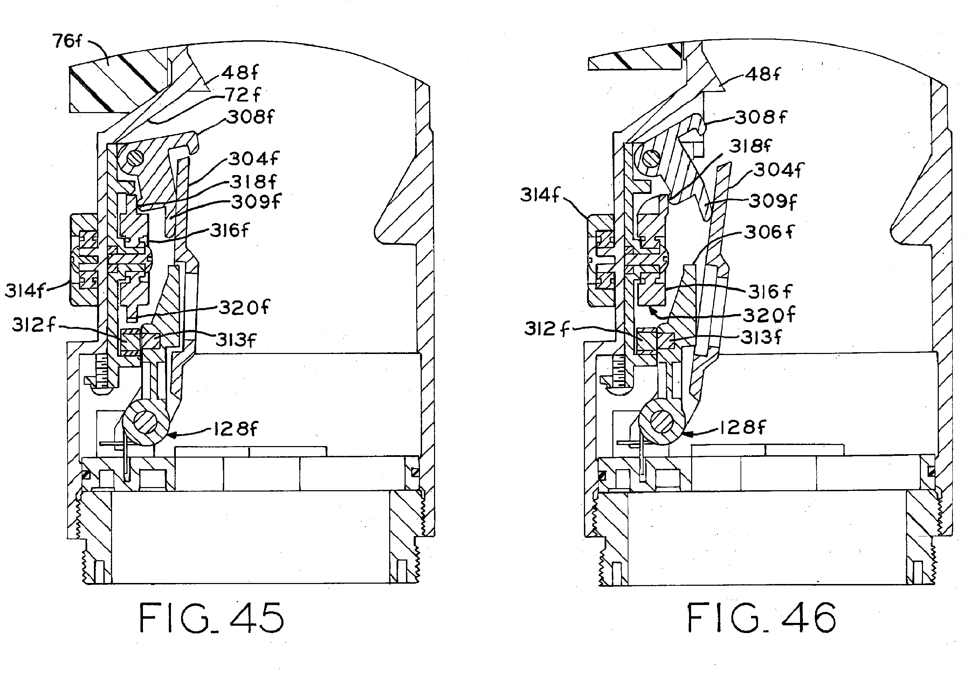

Referring to Fig. 45, as the liquid level in tank 94 (shown in Fig. 1) reaches a certain level, float 76f begins to rise, in the same way as described for previous embodiments. Also as previously described, deflector 48f prevents liquid flow from urging either flapper valve downward until the given valve has been disengaged from the upright position. As float 76f rises, link 303f (Fig. 43a), which is pivotably connected both to float 76f and to lever arm 302f is pulled upward with float 76f, thereby turning actuating outer magnetic coupler 314f counterclockwise from the perspective illustrated in Fig. 43a. This counterclockwise rotation acts on both first and second flapper valves 304f and 306f to transition each from an open to a closed position as described below.

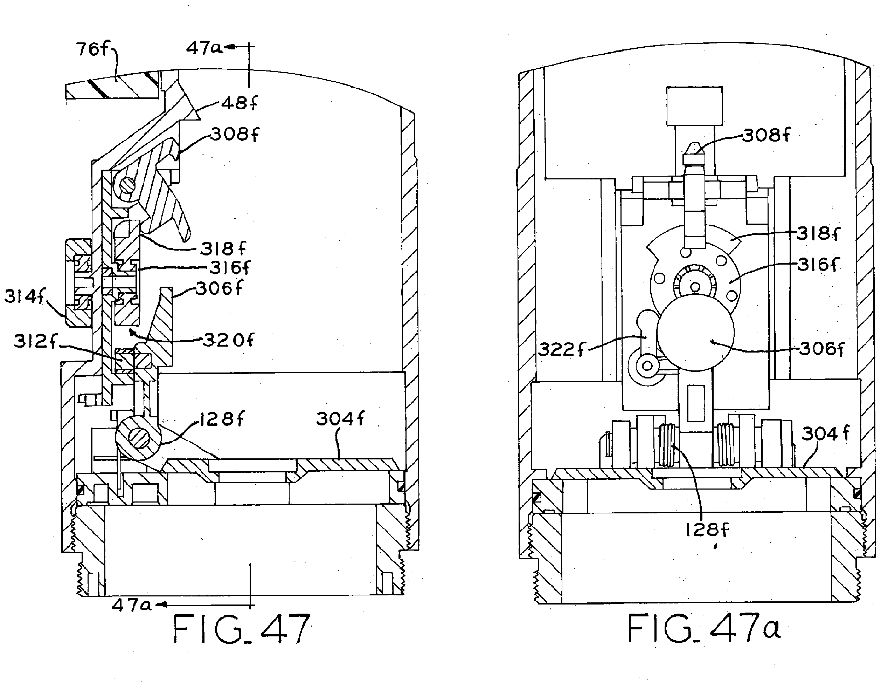

Referring to Figs. 45-47, as float 76f rotates outer magnetic coupler 314f, inner magnetic coupler 316f rotates as well. Inner magnetic coupler 316f includes cammed surface 318f that rotates to actuate overhead latch 308f out of locking engagement with first flapper valve, as illustrated in Fig. 45. As illustrated in Fig. 45, latch 308f is pivotally connected to conduit wall interior surface 72f so that it will ride along cammed surface 318f and, from the perspective illustrated in Fig. 45, rotate counterclockwise as it rides ever higher along the cammed surface 318f of inner magnet coupler 316f. In a position illustrated in Fig. 45, overhead latch 308 no longer engages first flapper valve 304f to hold it in the open position. Further, foot 309f of overhead latch 308 forces first flapper valve 304 to rotate from its fully opened position. As rotation of inner magnet coupler 316f continues, latch 308f continues to be rotated counterclockwise to the further rotated position illustrated in Fig. 46. In this position, foot 309f sufficiently places first flapper valve 304f in the fluid stream such that the fluid stream causes closing of first flapper valve 304f as described above with respect to a variety of alternative embodiments. This position is illustrated in Fig. 47. Fig. 47a illustrates overhead latch 308f in an open position, allowing first flapper valve 304f to achieve the closed position, as previously described. In the position illustrated in Fig. 47a, overhead latch 308f has rotated the maximum amount provided by its interaction with cammed surface 318f. The position illustrated in Fig. 47 corresponds to the leak position. In this position, the closure stop (in the form of second flapper valve 306f) maintains an open position such that first flapper valve 304f maintains the "leak" condition.

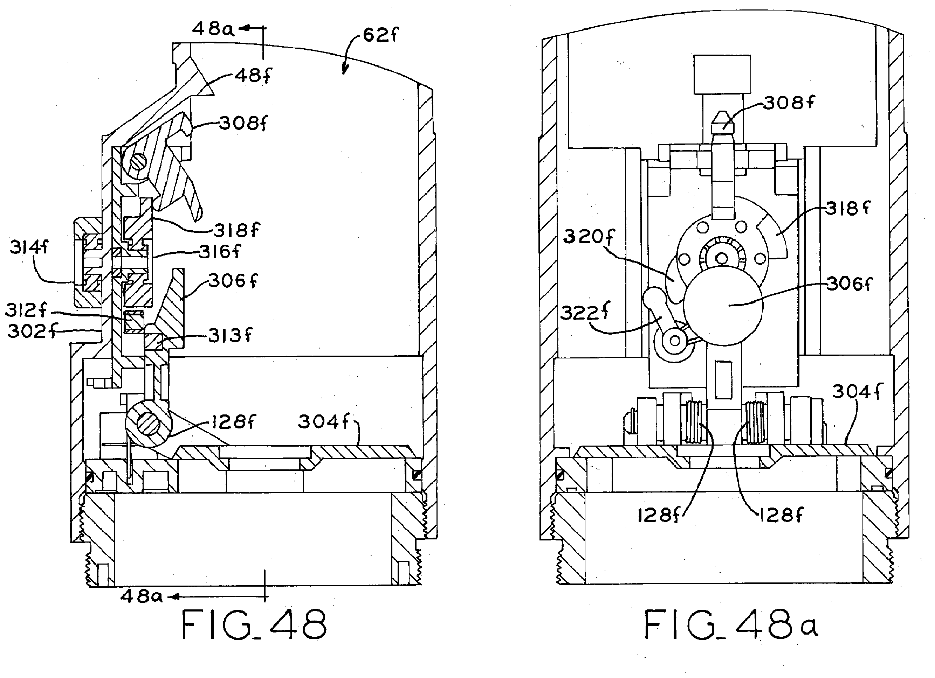

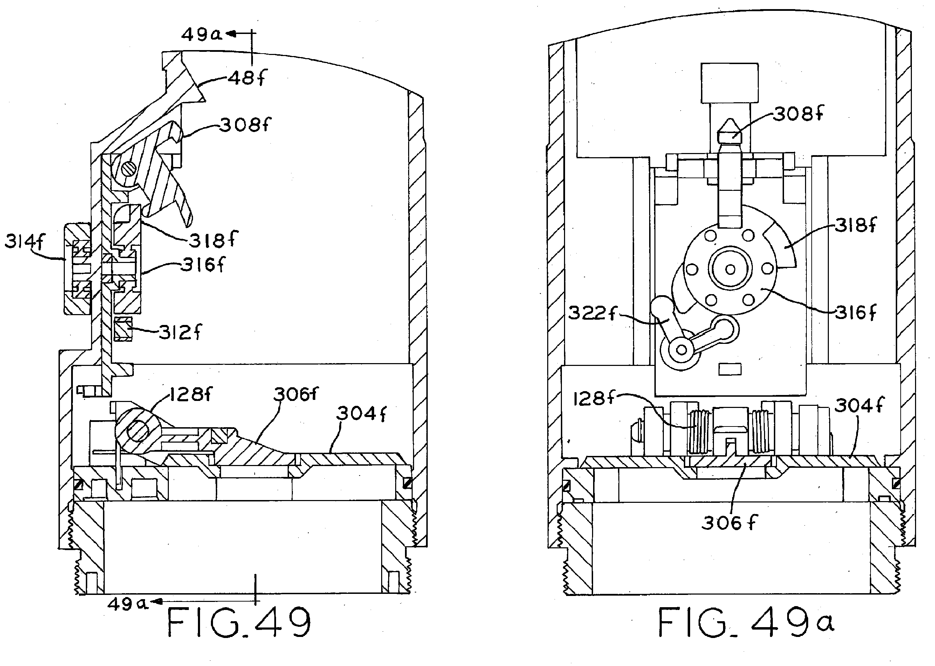

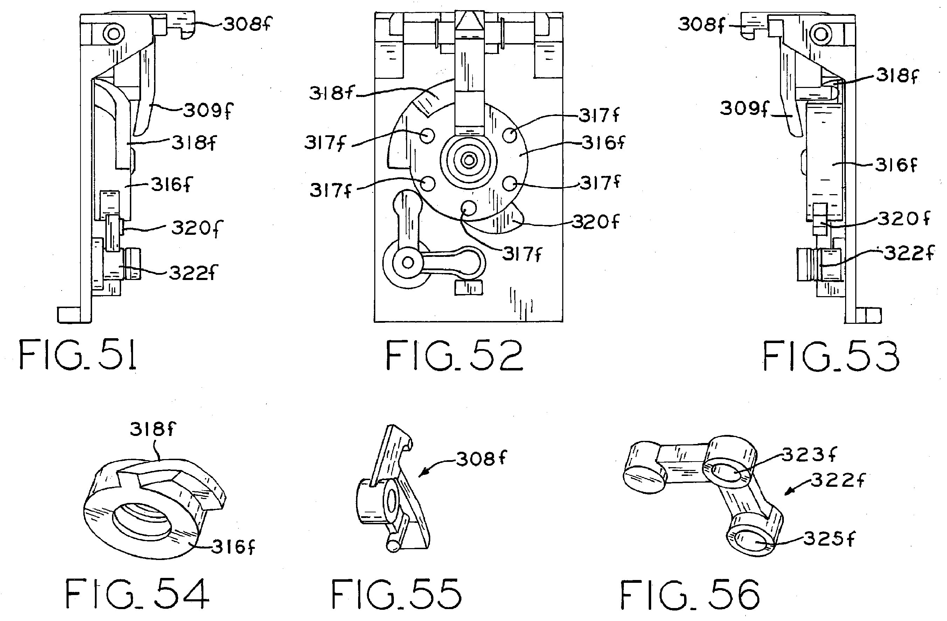

From the position illustrated in Figs. 47 and 47a, when float 76f continues to ascend, outer magnetic coupler 314f is further rotated as link 303f is pulled upwardly by float 76f to rotate lever arm 302f, causing corresponding rotation of inner magnetic coupler 316f to the position illustrated in Figs. 48 and 48a. In this position, cam 320f, which forms an integral part of inner magnetic coupler 316f, actuates pivot arm 322f, which carries second flapper valve magnet 312f. Actuation of lever arm 322f, as illustrated in Fig. 48a breaks the magnetic attraction between second flapper valve magnet 312f and magnet 313f, which is secured to second flapper valve 306f. In this position, there is no longer a magnetic attraction holding open second flapper valve 306f. Therefore, second flapper valve 306f begins to rotate into a closed position under its own weight, and the force of the fluid flowing through conduit 62f. Figs. 49 and 49a further illustrate this configuration. The above described actuations will be reversed when the float lowers, with cam 320f actuating lever arm to return to its at rest position above a stop, such as the one illustrated in Fig. 52.

With both first and second flapper valves 304f and 306f closed, as illustrated in Figs. 49 and 49a, fluid may continue to flow through conduit 62f at the drain rate described above, e.g., at 2% of maximum flow rate. As the column of fluid drains past first flapper valve 304f and second flapper valve 306f, torsion spring 128f will return both first flapper valve 304f and second flapper valve 306f (owing to a seated position with respect to its valve seat, which is formed in first flapper valve 304f) to the open position.

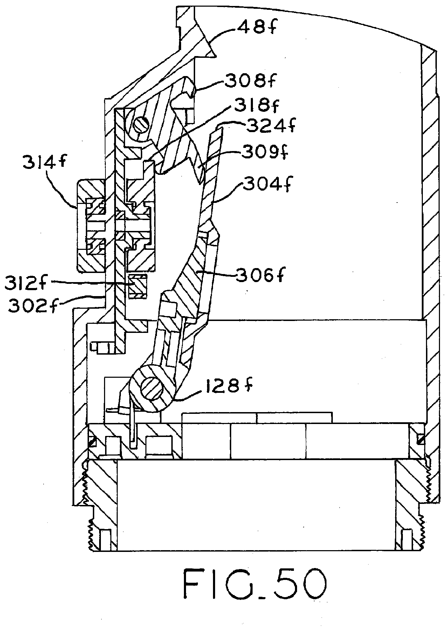

As illustrated in Fig. 50, as first flapper valve 304f and second flapper valve 306f are returned from a fully closed position illustrated in Figs. 49 and 49a to the fully opened position illustrated in Fig. 44, first flapper valve 304f contacts foot 309f. If float 76f has returned to its fully lowered position, as illustrated in Fig. 44, then overhead latch 308f will no longer be rotated outwardly as illustrated in Fig. 50, but rather will maintain the position illustrated in Fig. 44. In this position, ramped end 324f of first flapper valve 304 can ride along the radiused outer profile of overhead latch 308f to effect a minor counterclockwise rotation of latch 308f (with respect to the perspective of Fig. 50), such that ramped end 324f of first flapper valve 304f can be secured by latch 308f as illustrated in Fig. 44. Details of the actuation mechanism described above can be found in Figs. 51-56. Fig. 52 illustrates inner magnet coupler 316f in the same position illustrated in Fig. 44. Alternative side elevational views of the construct in this position are also provided in Figs. 51 and 53. Fig. 54 provides a perspective view of inner magnetic coupler 316f. Further, Fig. 55 provides a perspective view of overhead latch 308f. Similarly, Fig. 56 provides a perspective view of pivot arm 322f including pivot aperture 323f and magnet holding aperture 325f.

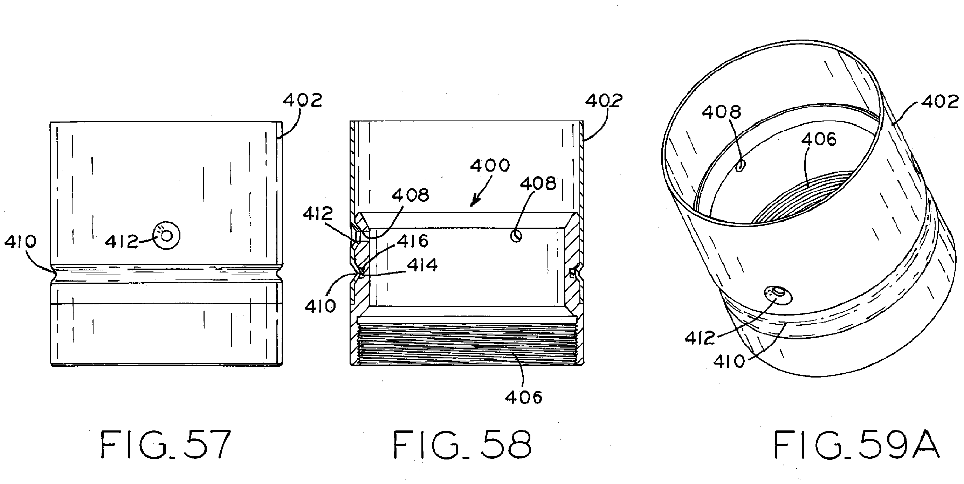

Figs. 57-59 illustrate drop tube adapter 400 secured to drop tube 402, which may comprise a drop tube segment of a multi-segmented drop tube. Drop tube adapter 400 may be threadedly engaged via female threads 406 to either end of another drop tube segment, such as any of the overfill prevention valves described in this document. Further, the features of drop tube adapter 400 may be incorporated into an overfill prevention valve of the present disclosure, with the overfill prevention valve joining a pair of drop tube segments, as illustrated in Fig. 1, to provide fluid communication with underground storage tank 94. While the various embodiments of overfill prevention valves of the present disclosure are generally illustrated with threads formed in their ends to allow for securement to other drop tube segments, the illustrated threads at one or both ends of the overfill prevention valves of the present disclosure could be replaced with the groove(s) and through bore(s) described with reference to the embodiments of the drop tube adapters of the present disclosure.

Generally, drop tube adapter 400 includes a drop tube wall spanning opposing first and second ends, the drop tube wall having an interior surface defining a drop tube adapter fluid path between the opposing ends of the drop tube adapter. Opposite the interior surface of drop tube adapter 400 is an exterior surface. Similarly, drop tube 402 defines a fluid conduit spanning opposing first and second ends of drop tube 402. The wall of drop tube 402 that defines the fluid conduit through drop tube 402 has an interior surface that defines the fluid path through the drop tube.

Drop tube adapter 400 may be secured to drop tube 402 via annular groove 410. Specifically, as illustrated in Fig. 58, O-ring 416 is positioned within annular groove 414 (Fig. 58), and drop tube adapter 400 is thereafter inserted in a generally coaxial, overlapping relationship into drop tube 402. For the purposes of this document, a "generally coaxial" relationship means a position in which the longitudinal axes of the two members being joined are, within manufacturing tolerances of the components and sizing of the components (which may cause the axes to be spaced a short distance), coaxial. In this position, drop tube 402 can be deformed to create exterior annular groove 410, as illustrated in Fig. 58. The material of drop tube 402 that is deformed to form annular groove 410 presses against O-ring 416 to annularly seal drop tube 402 relative to drop tube adapter 400. Insertion of the deformed material of drop tube 402 into annular groove 414 in drop tube adapter 400 also fastens drop tube 402 to drop tube adapter 400. With drop tube 402 fastened to drop tube adapter 400 in this way, the fluid path through the interiors of drop tube 402 and drop tube adapter 400 are in fluid communication with each other and leaks outside of the two piece conduit are prevented by O-ring 416.

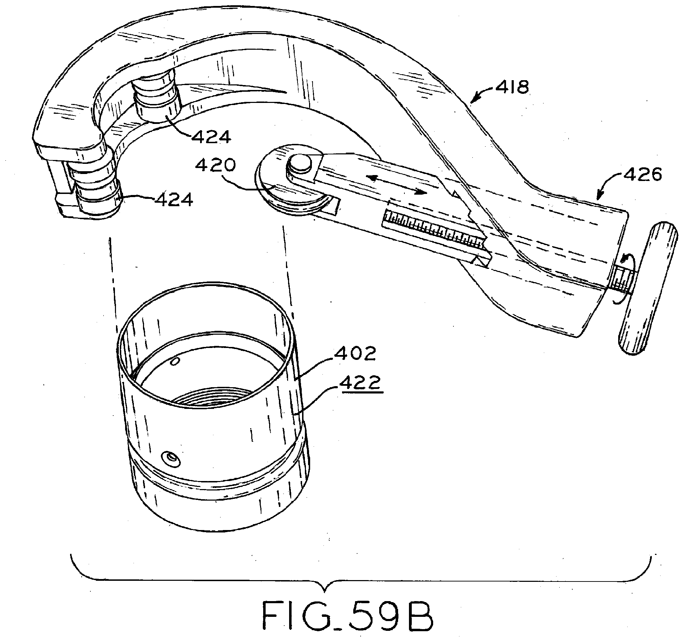

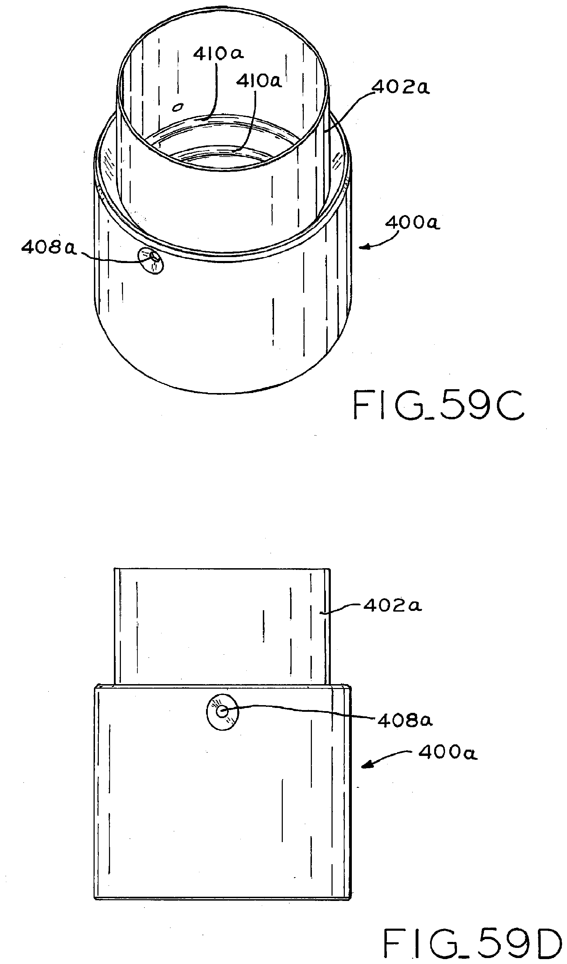

Deformation of drop tube 402 to create annular groove 410 may be done by roll crimping to create roll groove 410, as illustrated in Fig. 58. For example, a modified pipe cutting tool 418 may be positioned over exterior wall 422 of drop tube 402, with shaping tool 420 positioned over the portion of the wall forming drop tube 402 that overlaps annular groove 414 of drop tube adapter 400 and rollers 424 abutting drop tube 402 such that a force applied by shaping tool 420 (via force application device 426) is opposed. As illustrated in Fig. 59B, force application device 426 may include a carriage and a screw mechanism operable to translate the carriage carrying shaping tool 420 relative to the frame of modified pipe cutting tool 418 in the usual way in which the cutter of a pipe cutter is actuated. In use, with shaping tool 420 overlapping annular groove 414, the screw mechanism is actuated until the wall of drop tube 402 overlapping annular groove 414 experiences deformation. Modified pipe cutting tool 418 is then rotated through 360 degrees to create annular groove 410 about the circumference of drop tube 402. Repeated actuation of the screw mechanism and rotations of modified pipe cutting tool 418 may be utilized until the desired size of roll groove 410 is achieved.

Drop tube adapter 400 further includes through bores 408, into which drop tube 402 can be deformed to form deformations 412 as illustrated in Fig. 58. Deformations 412 may be formed by a blunt tipped punch, for example. A fastener such as a rivet or bolt may then be used to further secure drop tube adapter 400 to drop tube 402. In addition to the joining of drop tube adapter 400 to drop tube 402 as described above, threads 406 may be utilized to join drop tube adapter 400 to another drop tube segment, e.g., a drop tube segment having similar structure to drop tube segment 402 described above, and further including threads compatible with threads 406 of drop tube adapter 400.

Figs. 59C-59E illustrate an alternative embodiment drop tube adapter 400a. Drop tube adapter 400a differs from drop tube adapter 400 illustrated in Figs. 57-59B in that drop tube adapter 400a includes an interior annular groove 414a as opposed to the exterior annular groove 414 of drop tube adapter 400. Additionally, drop tube adapter 400a includes a pair of annular grooves for joining drop tube adapter 400a to drop tube 402a as opposed to the single annular groove of drop tube adapter 400. Although the two illustrated embodiments of the drop tube adapter of the present disclosure utilize a single and a pair of annular grooves, respectively, any number of grooves could be utilized.

Other than the opposite positioning of their annular grooves, drop tube adapter 400 and drop tube adapter 400a generally share the same construction, including a drop tube wall spanning opposing first and second ends of the respective drop tube adapter, the drop tube wall having an interior surface defining a drop tube adapter fluid path between the opposing ends of the drop tube adapter. Opposite the interior surface of drop tube adapter 400a is an exterior surface.

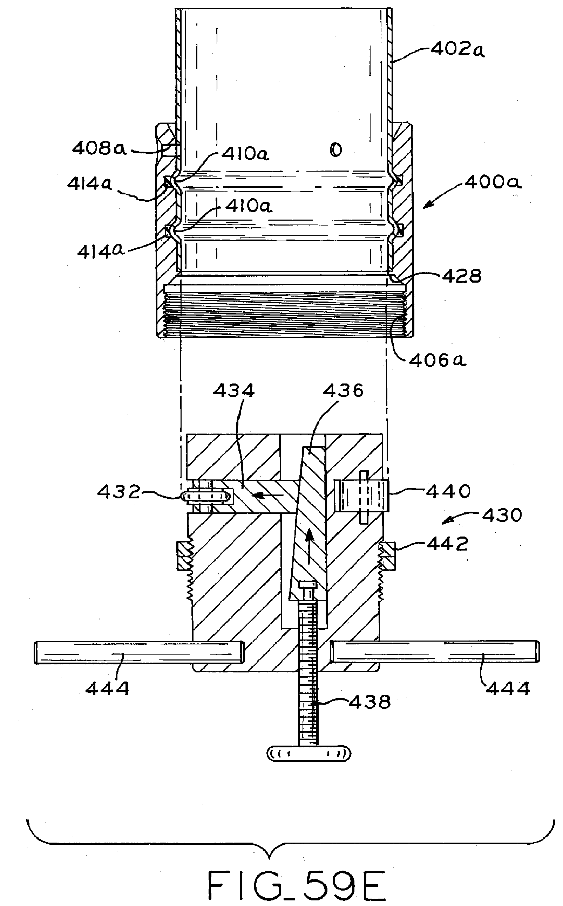

As illustrated, drop tube adapter 400a is designed to be joined to drop tube 402a, with drop tube 402a positioned interior to drop tube adapter 400a. Drop tube 402a is inserted in a generally coaxial, overlapping relationship into drop tube adapter 400a. In the illustrated embodiment, drop tube adapter 400a includes stop 428 (see Fig. 59E) in the form of an annular protrusion extending from the interior surface of the wall defining the fluid conduit through drop tube adapter 400a. Stop 428 presents a shoulder against which drop tube 402a rests when drop tube 402a is fully inserted into drop tube adapter 400a. In this position, drop tube 402a can be deformed to create annular grooves 410a. The material of drop tube 402a that is deformed to form annular grooves 410a annularly presses against O-rings (not shown) positioned in annular grooves 414a to seal drop tube 402a relative to drop tube adapter 400a, as described above with respect to drop tube 402 and drop tube adapter 400. Insertion of the deformed material of drop tube 402a into annular grooves 414a in drop tube adapter 400a also fastens drop tube 402 to drop tube adapter 400. With drop tube 402a fastened to drop tube adapter 400a in this way, the fluid path through the interiors of drop tube 402a and drop tube adapter 400a are in fluid communication with each other and leaks outside of the two piece conduit are prevented by the O-rings positioned in annular grooves 414a.

Deformation of drop tube 402a to create annular groove 410a may be done by roll crimping to create roll bead 410a, as illustrated in Fig. 58. Referring to Fig. 59E, deformation tool 430 may be utilized to create roll bead 410a. Deformation tool 430 includes shaping tool 432 rotatably connected to carriage 434. Wedge 436 can be progressively advance outwardly from deformation tool 430 by rotation of advancing screw 438. Deformation tool 430 has a generally cylindrical exterior from which shaping tool 432 and roller 440 extend. Adjustable stop 442 is threadedly engaged with the exterior of deformation tool 430 so it can achieve differing axial positions along deformation tool 430. In use, adjustable stop 442 is positioned so that it will contact the end of drop tube adapter 400a through which it is inserted when shaping tool 432 is positioned in overlapping relationship to one of annular grooves 414a. With shaping tool 432 in this position, advancing screw 438 is actuated until shaping tool 432 and roller 440 oppositely abut the interior wall forming the fluid conduit through drop tube 402a such that a force applied by shaping tool 430 is opposed. Advancing screw 438 is then actuated until the wall of drop tube 402a experiences deformation. Handles 444 may then be utilized to rotate deformation tool 430 through 360 degrees to create annular groove 410a. Repeated actuation of advancing screw and rotations of deformation tool 430 may be utilized until the desired size of roll bead 410a is achieved. This process this then repeated for the second annular groove 410a.

Drop tube adapter 400a further includes through bores 408a which can be aligned with corresponding apertures in drop tube 402a to receive a fastener such as a rivet or bolt to further secure drop tube adapter 400a to drop tube 402a. In addition to the joining of drop tube adapter 400a to drop tube 402a as described above, threads 406a may be utilized to join drop tube adapter 400a to another drop tube segment, e.g., a drop tube segment having similar structure to drop tube segment 402 described above, and further including threads compatible with threads 406a of drop tube adapter 400a. Alternatively, the securing structure of either drop tube adapter 400 or drop tube adapter 400a can be repeated at an opposed end of the drop tube adapter so that such securing structure (groove, or groove and through bore) can be utilized to secure a pair of drop tube segments, one to either end of the drop tube adapter.

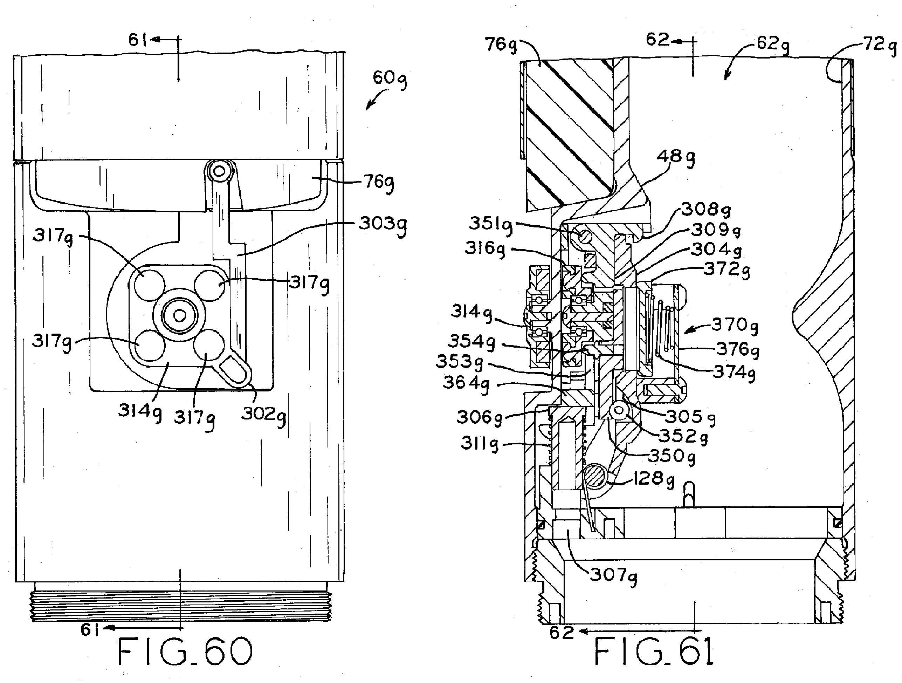

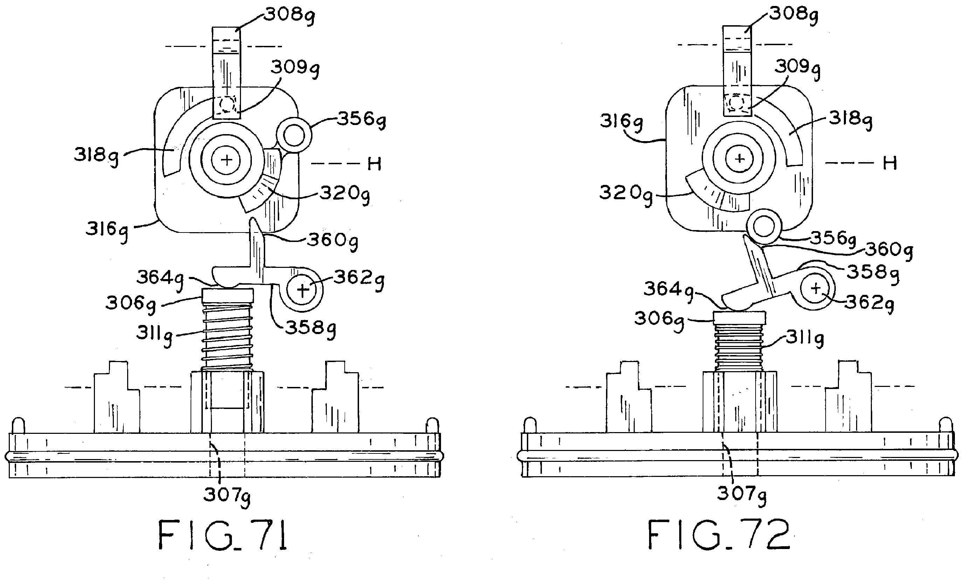

Figs. 60-72 illustrate another embodiment of the present invention that utilizes a magnetic shaft coupler. The mechanism for actuating the closure of the two interior valves of this embodiment is float 76g, which is connected to magnetic coupler 314g via link 303g and lever arm 302g. Magnetic coupler 314g is rotatably connected to the exterior of drop tube segment 60g by a central pivot and bearing as illustrated in Figs. 60 and 61. Magnetic coupler 314g rotates about an axis transverse to a longitudinal axis of the fluid path through drop tube segment 60g. Once again, two interior valves transition from an open to a closed position as the liquid level in tank 94 (shown in Fig. 1) rises past a certain threshold, as described for previous embodiments. However, even though this embodiment uses a rotational magnetic shaft coupling to transition flapper valve 304g from an open position to a closed position, this embodiment lacks a second flapper valve. Instead, the closure of flapper valve 304g is followed by the closure of closure stop 306g (shown in the open position in Fig. 71, and in the closed position in Fig. 72), which comprises a spring-biased plunger.

Referring to Fig. 60, outer magnetic coupler 314g is illustrated having four magnets 317g in a square configuration. As described above, outer magnetic coupler 314g is rotatably supported on an exterior of drop tube segment 60g. Specifically, outer magnetic coupler 314g is rotatably supported by a central pivot spaced a distance from each magnet 317g, so that rotation of outer magnetic coupler 314g causes rotation of magnets 317g about the central pivot supporting outer magnetic coupler 314g. Inner magnetic coupler 316g is similar to outer magnetic coupler 314g in that inner magnetic coupler 316g has four magnets that correspond in size and spacing to magnets 317g, which are arranged in a square configuration. Similar to outer magnetic coupler 314g, inner magnetic coupler 316g is rotatably supported relative to drop tube segment 60g. Specifically, as illustrated in Fig. 61, inner magnetic coupler 316g is rotatably supported by a central pivot spaced a distance from each of the magnets associated with inner magnetic coupler 316g, so that rotation of inner magnetic coupler 316g causes rotation of the associated magnets about the central pivots supporting inner magnetic coupler 316g, without requiring a physical penetration through the outlet wall. As illustrated in Fig. 61, bearings may be interposed between the central pivots supporting outer magnetic coupler 314g and inner magnetic coupler 316g. Specifically, as in the previous embodiment, the polarity of the magnets of both outer magnetic coupler 314g and inner magnetic coupler 316g is configured such that movement of outer magnetic coupler 314g outside of fluid conduit 62g yields corresponding rotational movement of inner magnetic coupler 316g on the interior of conduit 62g, utilizing the principles of a magnetic shaft coupler. Lever arm 302g, which extends from outer magnetic coupler 314g, is pivotally connected to link 303g. Link 303g is pivotally connected to float 76g. Thus, when the liquid level in tank 94 (Fig. 1) rises, link 303g pulls lever arm 302g to rotate both outer magnetic coupler 314g and inner magnetic coupler 316g. Because outer magnetic coupler 314g is in a square configuration, link 303g has a stepped configuration so that when float 76g rises and outer magnetic coupler 314 rotates, link 303g and float 76g will not interfere with one another.

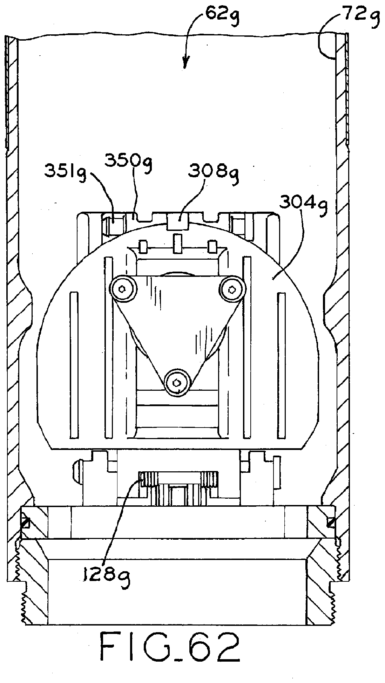

Referring to Fig. 61, both flapper valve 304g and closure stop 306g are shown in the open position. As in certain previous embodiments, when flapper valve 304g is in the open position, it is biased upright by torsion spring 128g and held there by overhead latch 308g. Specifically, Fig. 62 shows overhead latch 308g holding flapper valve 304g in the upright position. Closure stop 306g is biased in the open position by spring 311g, which surrounds the cylindrical body of closure stop 306g and is interposed between the flanged head of closure stop 306g and a guide positioned about the perimeter of closure stop 306g to guide reciprocation of closure stop 306g. Spring 311g biases closure stop 306g such that it remains above the valve seat of leak drain 307g, leaving leak drain 307g open. In this embodiment, the biasing force of spring 311g against plunger 306g acts as a closure stop, preventing closure of the conduit at a flow level below the "leak" flow rate.

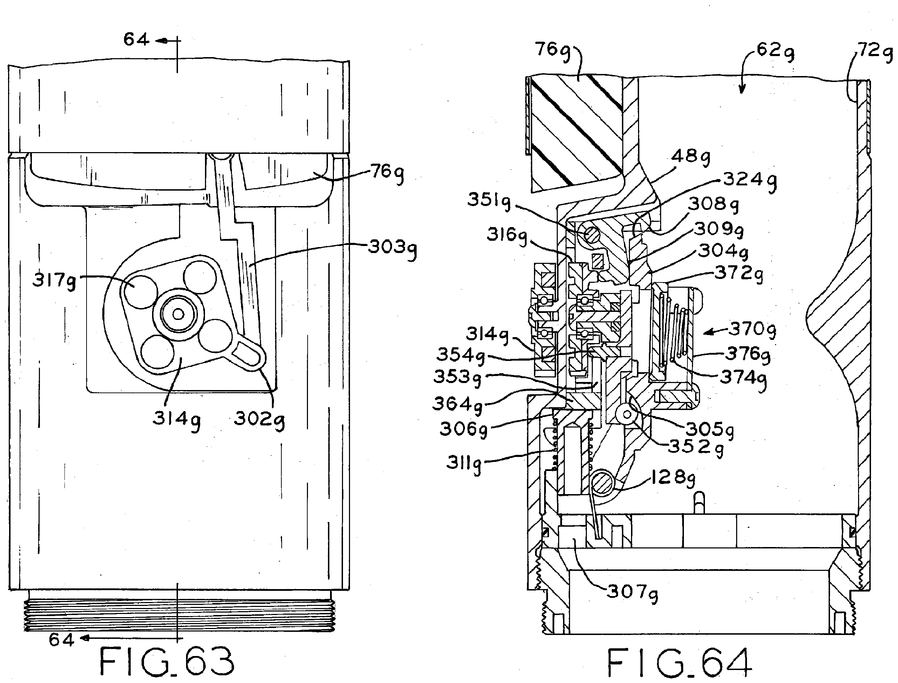

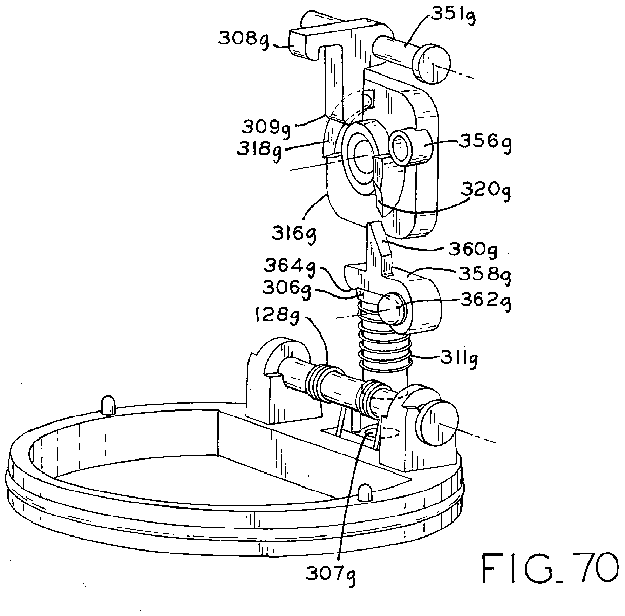

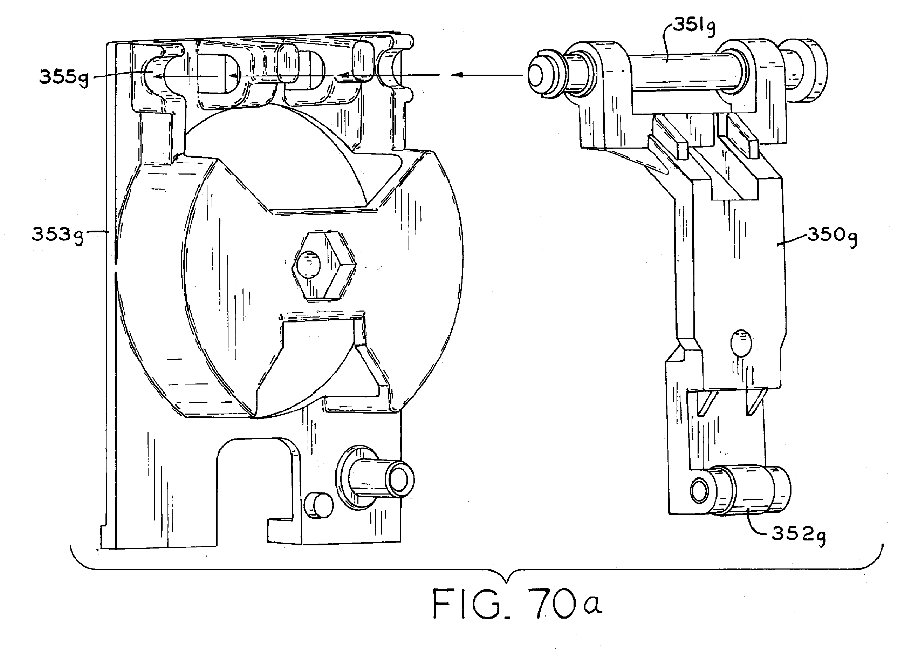

Referring to Fig. 63, once the liquid level in tank 94 reaches a certain level, as in previous embodiments, float 76g begins to rise, and as previously described, this rising causes the rotation of both outer magnetic coupler 314g and inner magnetic coupler 316g. Once inner magnetic coupler 316g starts to rotate, first cammed surface 318g (shown, e.g., in the partial perspective view of Fig. 70), located along the inwardly facing surface of inner magnetic coupler 316g, also rotates to actuate or push overhead latch 308g out of latching configuration with flapper valve 304g. Fig. 64 shows latch 308g pivotally connected by pivot pin 351g to conduit wall interior surface 72g so that when inner magnetic coupler 316g rotates, latch 308g will ride along first cammed surface 318g, similar to the way latch 308f rides along cammed surface 318f in the previously described embodiment. In Fig. 64, cammed surface 318g has rotated latch 308g about pivot pin 351g out of latching engagement with flapper valve 304g, i.e., to a position in which latch 308g no longer engages flapper valve 304g to hold it in the open position. Moreover, during this disengagement from latching configuration, foot 309g pushes flapper valve 304g toward the liquid stream and toward a closed position. In certain exemplifications of the present disclosure, foot 309g sufficiently places flapper valve 304g in the fluid stream such that the fluid stream causes closing of flapper valve 304g as described above with respect to alternative embodiments of the present disclosure. In alternative embodiments, a second actuator may further position flapper valve 304g in the fluid stream.

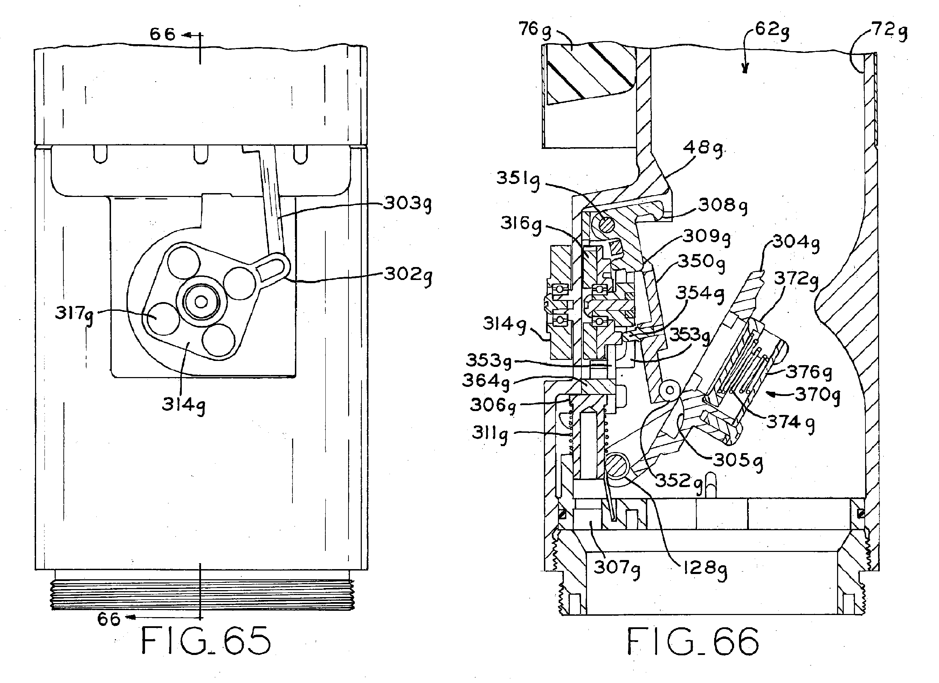

Referring to Figs. 66 and 70a, a second actuator, pivoting bracket 350g, further articulates flapper valve 304g toward the closed position. At its proximal end, pivoting bracket 350g is rotatably supported by pivot pin 351g, which also rotatably supports latch 308g and fits into pin slot 355g of bracket support 353g (which is secured relative to drop tube segment 60g). At its distal end, pivoting bracket 350g includes low-friction roller 352g. Pivoting bracket 350g interfits with bracket support 353g when pivoting bracket 350g is in the closed position, as illustrated in Fig. 61. Bracket support 353g buffers pivoting bracket 350g and inner magnetic coupler 316g so that the interaction between inner magnetic coupler 316g and pivoting bracket 350g, as inner magnetic coupler 316g rotates, is the engagement of cammed surface 320g with bracket projection 354g, as will be described below.

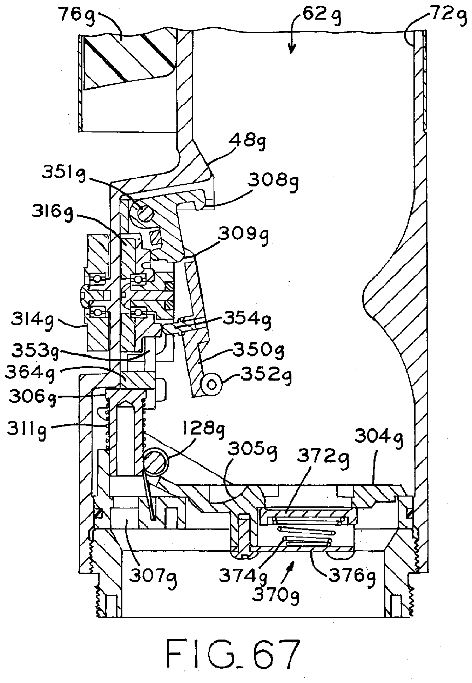

Cammed surface 320g (shown, e.g., in Fig. 70), located along the inwardly facing surface of inner magnetic coupler 316g, rotates in response to rotation of outer magnetic coupler 314g to actuate pivoting bracket 350g, which pivots on pivot pin 351g, from its upright position (shown, e.g., in Fig. 64) so that low-friction roller 352g can push outwardly on flapper valve 304g to further rotate flapper valve 304g into the fluid stream. Specifically, pivot pin 351g pivotally couples pivoting bracket 350g to the conduit wall interior surface 72g. As inner magnetic coupler 316g rotates from the position illustrated in Figs. 63 and 64 to the position illustrated in Figs. 65 and 66, bracket projection 354g (which is fixably secured to pivoting bracket 350g, or integral therewith) slides along the sloped surface of second cammed surface 320g to rotate pivoting bracket 350g about pivot pin 351g so that low friction roller 352g engages ramp surface 305g on flapper valve 304g. Roller 352g rolls along ramped surface 305g on the upper surface of flapper valve 304g as the valve actuating mechanism is moved from the position illustrated in Figs. 63 and 64 to the position illustrated in Figs. 65 and 66 to create an actuating force that pushes flapper valve 304g farther into the liquid stream to assist with movement of flapper valve 304g from the open to the closed position illustrated, e.g., in Fig. 67. Referring to Fig. 66, roller 352g and flapper valve 304g are shown just prior to termination of the contact between both components as flapper valve 304g continues downward and away from roller 352 under the force of flow through conduit 62g. In other words, roller 352g, like overhead latch 308g described above, contacts to push flapper valve 304g only through part of movement of first flapper valve from the open position to the closed position. In this embodiment, both overhead latch 308g and pivoting bracket 350g are designed to be positioned very close to (potentially even in contact with) flapper valve 304g when flapper valve 304g is in the open position. Because this embodiment of the present disclosure (and alternative embodiments described elsewhere in this document) do not rely on a mechanical linkage to actuate the internal valve, but rather rely on the fluid stream to complete actuation of the valve body, the internal actuators (in this embodiment, overhead latch 308g and pivoting bracket 350g) are spaced a greater distance from the valve body when the valve body maintains the closed position than they are when the valve body maintains the open position. Roller 352g can be constructed of a non-magnetic bearing having a low coefficient of friction.

Latch 308g is disengaged to unlatch flapper valve 304g and flapper valve 304g is subsequently pushed by foot 309g and thereafter roller 352g. The disengagement and pushing of flapper valve 304g helps pivot flapper valve 304g into the fluid stream, as described above for a variety of alternative embodiments, and as shown in the progression from Figs. 63-68. The position illustrated in Fig. 67 corresponds to the leak position. In this position, the closure stop (in the form of plunger 306g) maintains an open position such that flow is allowed past flapper valve 304g and the drop tube segment maintains the "leak" condition defined above.

Referring to Fig. 67, even though flapper valve 304g is closed, spring 309g still biases closure stop 306g to the open position because spring 309g is strong enough to overcome the maximum head pressure in conduit 62g caused when flapper valve 304g is closed and keep closure stop 306g positioned above leak drain 307g. To actuate the closure of closure stop 306g from the open to the closed position, float 76g must rise beyond the height illustrated in Fig. 67 so that it can rotate both outer magnetic coupler 314g and inner magnetic coupler 316g farther.

As flapper valve 304g has transitioned closed, nubbin 356g, which projects perimetrically outwardly from inner magnetic coupler 316g to define a cam, has rotated from a position above the horizontal dotted line H (Fig. 71) to a vertically downward position below dotted line H. Once the liquid level rises enough to lift float 76g farther, the resulting additional rotation of inner magnetic coupler 316g rotates nubbin 356g into contact with angled tongue 360g of cross actuator 358g. Cross actuator 358g pivots about post 362g from the position illustrated in Fig. 71 toward the position illustrated in Fig. 72. A stop surface extending from conduit wall interior surface 72g limits counterclockwise rotation (from the perspective of Figs. 71 and 72) of cross actuator 358g beyond the position illustrated in Fig. 71. Stated another way, the stop surface precludes counterclockwise rotation of cross actuator 358g from the position illustrated in Fig. 71. Such limit on the rotation of cross actuator 358g also limits upward travel of closure stop 306g. Rotation of inner magnetic coupler 316g from the position illustrated in Fig. 71 toward the position illustrated in Fig. 72 causes nubbin 356g to rotate angled tongue 360g from the position illustrated in Fig. 71 to the position illustrated in Fig. 72. The force with which nubbin 356g rotates angled tongue 360g moves driver 364g, giving it a downward force sufficient to overcome the upward bias of spring 311g to seat closure stop 306g downward onto the valve seat provided about leak drain 307g, as illustrated in Fig. 72. With both flapper valve 304g and closure stop 306g positioned in their closed positions, flow at a "drain" rate, as described above may continue to pass through drop tube segment 60g. If desired, the "drain" rate may be achieved by designing an imperfect seating of one or more valves of a drop tube segment of the present disclosure such that even with the valves in a closed position, flow may pass thereby at the "drain" rate of about 2% or less of the maximum flow rate.

In one exemplary embodiment, float 76g will actuate closure of closure stop 306g when underground storage tank 94 is 95% full. As fluid is drawn out of tank 94 (Fig. 1) by fuel dispenser 106, float 76g will begin to descend, thereby rotating outer magnetic coupler 314g to rotate inner magnetic coupler 316g so that nubbin 356g is pivoted out of engagement with angled tongue 360g. Without nubbin 356g pressing against angled tongue 360g, spring 311g will bias closure stop 306g upward to the open position and away from the valve seat surrounding leak drain 307g.

As fluid flows through conduit 62g at either the "drain" or "leak" rate described above, torsion spring 128g will return flapper valve 304g to the open position. Specifically, as the column of fluid positioned above flapper valve 304g is depleted, it will no longer provide a sufficient force to overcome the biasing force of spring 128g. If the column of fluid is no longer sufficient to overcome the biasing force of torsion spring 128g, flapper valve 304g will rotate toward its open position. If the level of fuel in underground storage tank 94 maintains a level at or above the level necessary to position the valve actuation structure as illustrated in Figs. 65 and 66, then flapper valve 304g will return to the position illustrated in Fig. 66. If the level of fluid in underground storage tank 94 has been sufficiently depleted such that float 76g achieves its lowermost position, as illustrated, e.g., in Figs. 60 and 61, then torsion spring 128g will actuate flapper valve 304g toward its fully open position, as illustrated in Fig. 61. If such biasing occurs with pivoting bracket 350g in its upright position, as illustrated, e.g., in Figs. 61 and 64 and with float 76g returned to its fully lowered position, as illustrated in Fig. 60, then overhead latch 308g will no longer be rotated outwardly as illustrated in Fig. 64, but rather will maintain a position illustrated in Fig. 61. In this position, ramped end 324g (Fig. 64) of flapper valve 304g can ride along the radiused outer profile of overhead latch 308g to effect a minor counterclockwise rotation of latch 308g (with respect to the perspective of Fig. 64), such that ramped end 324g of flapper valve 304g can be secured by latch 308g as illustrated in Fig. 61.

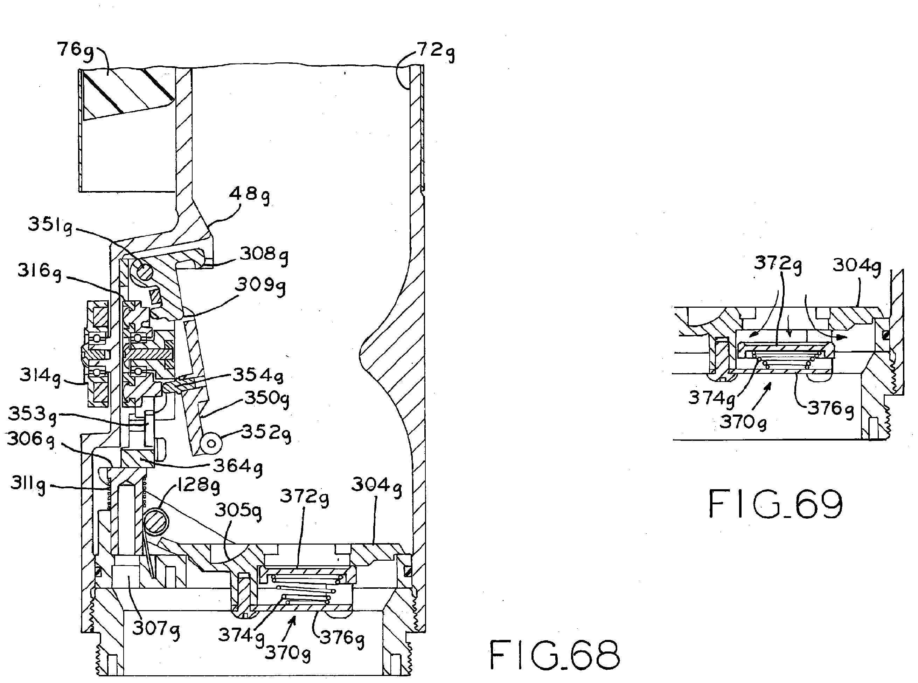

Rapid closure of flapper valve 304g can cause a pressure spike in conduit 62g through a phenomenon known as "water hammer." In the event of such a phenomenon pressure spike relief valve 370g (Fig. 69) opens to relieve pressure in conduit 62g when the pressure of the flow spikes above a set value beyond the pressure typically associated with static head in conduit 62g. Referring to Figs. 68 and 69, pressure spike relief valve 370g includes disk 372g positioned atop base platform 376g, with spring 374g interposed therebetween. Referring, e.g., to Figs. 61 and 62, base platform 376g includes a generally triangular outer perimeter and receives three bolts generally positioned at the apices thereof to secure base platform 376g to the undersurface of flapper valve 304g. As illustrated in Fig. 68, spring 374g acts against base platform 376g to bias disk 372g into a closed position relative to an opening through flapper valve 304g. Spring 374g has a spring constant that correlates to the typical static head pressure achieved when the drop tube segment upstream of drop tube segment 60g (and, in certain cases, hose 104 connected thereto) are filled with fluid after closing of flapper valve 304g, so that pressure spike relief valve 370g opens when the flow pressure spikes above such static head. Specifically, such a pressure spike causes disk 372g to unseat from its closed position, as illustrated in Fig. 68 toward an open position illustrated in Fig. 69 to allow a flow of fluid through flapper valve 304g, thereby decreasing pressure in conduit 62g. As long as the pressure of the liquid in conduit 62 is sufficiently high to counteract the biasing force of spring 374g, disk 372g will remain open to limit both the amplitude and duration of high pressure exposure to conduit 62g. For example, in one exemplary embodiment, the pressure spike relief valve ensures that pressure in conduit 62g does not exceed 43.5 psi for over 10 milliseconds.

As described above, the overfill prevention valve in accordance with the present disclosure can include a valve actuator means for actuating a valve body from an open position to a closed position while the valve actuator means is positioned outside of the fluid path and without requiring a physical penetration of the wall defining the fluid path. Exemplary embodiments of the valve actuator means include the various float/magnet/actuator combinations described above and any combination of the features of the various float/magnet/actuator combinations described above.

Further, an overfill prevention valve in accordance with the present disclosure can include a leak means for selectively allowing a quantity of fluid to leak past a valve body when the valve body is in the closed position. Leak actuator means for actuating the leak means from a non-leak position in which the leak means does not allow the quantity of fluid to leak past the valve body to a leaked position in which the leak means allows the quantity of fluid to leak past the valve body include the various float/magnet/actuator combinations described above. The leak means may take the form of a closure stop which prevents full seating of the valve body in a closed position, as described above. The leak means may further take the form of a closure stop in the form of a secondary valve such as a poppet valve, flapper valve or plunger which can be unseated when the primary valve maintains a closed position.

Any of the drop tube segments including an overfill prevention valve described above can be connected at their first and second ends to the remainder of drop tube 98 by a variety of connections including, e.g., threaded connections. Threaded adapters may be utilized to effect such connections and o-rings may be provided to seal the drop tube segments of the present disclosure to the remainder of the drop tube.

## Claims

1. A overfill prevention valve, comprising:
a conduit (62e, 62f, 62g) having a first end and a second end, a conduit wall spanning said first end of said conduit (62e, 62f, 62g) and said second end of said conduit (62e, 62f, 62g), said conduit wall defining a conduit wall interior surface (72e, 72f, 72g) and a conduit wall exterior surface (70e, 70f), said conduit wall interior surface (72e, 72f, 72g) defining a fluid path through said conduit (62e, 62f, 62g) from said first end of said conduit (62e, 62f, 62g) to said second end of said conduit (62e, 62f, 62g);
a valve body moveably positioned in said fluid path of said conduit (62e, 62f, 62g), said valve body moveable from an open position to a closed position; and
a non-contact valve actuator (76e, 76f, 76d) moveable relative to said valve body and positioned outside of said conduit (62e, 62f, 62g), said conduit wall interposed between said non-contact valve actuator (76e, 76f, 76d) and said fluid path, said non-contact valve actuator (76e, 76f, 76d) operable to actuate said valve body from said open position toward said closed position without physically penetrating said conduit wall, said non-contact valve actuator (76e, 76f, 76d) having a first position in which said non-contact valve actuator (76e, 76f, 76d) does not actuate said valve body from said open position toward said closed position and a second position in which said non-contact valve actuator (76e, 76f, 76d) actuates said valve body from said open position toward said closed position;
**characterized by**
a contact valve actuator positioned interior of said conduit wall, whereby said conduit wall is interposed between said contact valve actuator and said non-contact valve actuator (76e, 76f, 76d), said contact valve actuator moveable relative to said conduit wall interior surface (72e, 72f, 72g) and positioned whereby actuation of said contact valve actuator causes said contact valve actuator to actuate said valve body from said open position toward said closed position and into a position in which a flow of fluid through said conduit (62e, 62f, 62g) can act on said valve body and further cause movement of said valve body from said open position toward said closed position, said contact valve actuator moveable independent from said valve body;
said contact valve actuator linked to said non-contact valve actuator (76e, 76f, 76d), so that movement of said non-contact valve actuator (76e, 76f, 76d) from said first position to said second position actuates said contact valve actuator so that said contact valve actuator actuates said valve body from said open position toward said closed position.

2. The overfill prevention valve of Claim 1, wherein said non-contact valve actuator (76e, 76f, 76d) comprises a float having a specific gravity, whereby said float is buoyant on a surface of a quantity of motor fuel.

3. The overfill prevention valve of Claim 1, wherein said non-contact valve actuator (76e, 76f, 76d) comprises a first component of a magnetic shaft coupling, said contact valve actuator comprising a second component of the magnetic shaft coupling, the first component of the magnetic shaft coupling magnetically linked to said second component of the magnetic shaft coupling, whereby rotation of said first component of the magnetic shaft coupling about an axis causes rotation of the second component of the magnetic shaft coupling, the axis transverse to a longitudinal axis of said fluid path through said conduit (62e, 62f, 62g).

4. The overfill prevention valve of any of Claims 1 or 3, further comprising:
a second contact actuator, said second contact actuator movably supported relative to said conduit wall, said second contact valve actuator movable relative to said conduit wall interior surface (72e, 72f, 72g) and positioned whereby movement of said second contact valve actuator causes said second contact valve actuator to actuate said valve body from said open position toward said closed position and into the position in which the flow of fluid through the conduit (62e, 62f, 62g) can act on said valve body and further cause movement of said valve body from said open position toward said closed position, whereby said second contact valve actuator is capable of actuating said valve body further toward said closed position than said contact valve actuator, said second contact valve actuator moveable independent from said valve body.

5. The overfill prevention valve of any of Claims 1 or 3, further comprising:
a cam moveably supported relative to said conduit wall, said cam including a ramp operably associated with said contact valve actuator so that a movement of said cam causes said ramp to move said contact valve actuator to actuate said valve body from said open position toward said closed position and into the position in which the flow of fluid through said conduit (62e, 62f, 62g) can act on said valve body and further cause movement of said valve body from said open position toward said closed position.

6. The overfill prevention valve of Claim 5, further comprising:
a second contact actuator, said second contact actuator moveably supported relative to said conduit wall, said second contact valve actuator moveable relative to said conduit wall interior surface (72e, 72f, 72g) and positioned whereby movement of said second contact valve actuator causes said second contact valve actuator to actuate said valve body from said open position toward said closed position and into the position in which the flow of fluid through said conduit (62e, 62f, 62g) can act on said valve body and further cause movement of said valve body from said open position toward said closed position, whereby said second contact valve actuator is capable of actuating said valve body further toward said closed position than said contact valve actuator, and wherein
said cam further includes a second ramp operably associated with said second contact valve actuator so that a movement of said cam causes said second ramp to move said second contact valve actuator to actuate said valve body from said open position toward said closed position and into the position in which the flow of fluid through said conduit (62e, 62f, 62g) can act on said valve body and further cause movement of said valve body from said open position toward said closed position.

7. The overfill prevention valve of any of Claims 5 or 6, further comprising:
a second valve body positioned in said fluid path of said conduit (62e, 62f, 62g), said second valve body moveable from a second valve body open position to a second valve body closed position, and wherein;
said cam further includes a nubbin positioned so that a movement of said cam causes said nubbin to move said second valve body from said second valve body open position toward said second valve body closed position.

8. The overfill prevention valve of any of Claim 1, wherein said contact valve actuator comprises a ramp and a moveable latch, said moveable latch having a latching position in which said moveable latch latches said valve body in the open position when said non-contact valve actuator (76e, 76f, 76d) maintains said first position, said moveable latch moved from said latching position when said non-contact valve actuator (76e, 76f, 76d) moves from the first position to the second position.

9. The overfill prevention valve of any of the preceding claims, wherein said valve body is rotatably connected to said conduit (62e, 62f, 62g) and is rotatable between said open position and said closed position.

10. The overfill prevention valve of any of the preceding claims, further comprising:
a deflector secured to said conduit (62e, 62f, 62g) and positioned upstream of said valve body, said deflector sized and positioned to shield said valve body from a flow of fluid through said conduit (62e, 62f, 62g) when said valve body maintains said open position.

11. The overfill prevention valve of Claim 7, wherein with said valve body in said closed position and said second valve body in said closed position, fluid may pass through the overfill prevention valve at a drain flow rate.

12. The overfill prevention valve of any of the preceding claims in combination with:
a fuel storage tank; and
a drop tube (402) extending into said fuel storage tank, the overfill prevention valve forming a part of the drop tube (402), said drop tube (402) in fluid communication with said fuel storage tank so that fluid passing through said drop tube (402) fills said fuel storage tank.

13. The overfill prevention valve of any of the preceding claims, further comprising a pressure spike relief valve (370g) comprising a pressure spike relief valve body moveable between a closed position and an open position and biased by a biasing force into said closed position, said pressure spike relief valve body moveable from said closed position to said open position when a sufficient pressure in said conduit (62e, 62f, 62g) counteracts said biasing force to actuate said pressure spike relief valve body from said closed position to said open position such that a flow of liquid can flow past said pressure spike relief valve body as long as said pressure in said conduit (62e, 62f, 62g) is sufficient to overcome said biasing force.

14. The overfill prevention valve of any of the preceding claims, wherein an annular groove (414) is defined in the conduit wall, the overfill prevention valve further comprising:
an O-ring (416) positioned in the annular groove (414); and
a first drop tube segment comprising a first conduit having a first conduit first end and a first conduit second end, a first conduit wall spanning the first conduit first end and the first conduit second end, the first conduit wall defining a first conduit wall interior surface defining a first conduit fluid path through the first conduit from the first conduit first end to the first conduit second end, the first drop tube segment and the conduit (62,e, 62f, 62g) positioned in generally coaxial, overlapping relationship, with said first conduit wall overlapping said annular groove (414) and the first conduit wall of the first drop tube segment deformed about the annular groove (414) to position the first conduit wall in the annular groove (414) of a drop tube adapter (400) to fasten the first drop tube segment to the conduit (62,e, 62f, 62g) and to form an annular seal with the O-ring (416), with the fluid path through the conduit (62,e, 62f, 62g) in fluid communication with the first conduit fluid path.

15. The overfill prevention valve of any of Claims 1-2, or 8-14, wherein said non-contact valve actuator (76e, 76f, 76d) comprises an actuator magnet, said actuator magnet producing a magnetic field acting to urge said valve body from said open position toward said closed position when said non-contact valve actuator (76e, 76f, 76d) is positioned in said second position.

16. The overfill prevention valve of Claim 8, wherein said moveable latch is interposed between said ramp and said valve body, said moveable latch moved by said ramp during the movement of said non-contact valve actuator (76e, 76f, 76d) away from the latching position so that said latch no longer latches said valve body in the closed position, said moveable latch comprising a foot, said foot moved by said ramp during the movement of said non-contact valve actuator (76e, 76f, 76d) to move said valve body from the open position toward the closed position.

17. The overfill prevention valve of Claim 16, further comprising a second actuator comprising a pivotable bracket and a roller, said pivotable bracket movable in response to the movement of said non-contact valve actuator (76e, 76f, 76d) such that said roller is pivoted to contact and actuate said valve body in a direction from the open position to the closed position.

18. The overfill prevention valve of any of Claims 1-6, or 8, further comprising:
a closure stop (306g) moveably positioned in said fluid path of said conduit (62e, 62f, 62g), said closure stop (306g) having a leak position and a non-leak position, with said valve body in said closed position and said closure stop (306g) in said leak position, a quantity of fluid is able to leak past said valve body.

19. The overfill prevention valve of Claim 18, wherein said non-contact valve actuator (76e, 76f, 76d) is operable to actuate said closure stop (306g) from said leak position to said non-leak position without physically penetrating said conduit wall, said non-contact valve actuator (76e, 76f, 76d) having a third position in which said non-contact valve actuator (76e, 76f, 76d) actuates said closure stop (306g) from said leak position to said non-leak position, said non-contact valve actuator (76e, 76f, 76d) not actuating said closure stop (306g) from said leak position to said non-leak position in said first position and said second position.

20. The overfill prevention valve of any of Claims 18 or 19, wherein said closure stop (306g) comprises a second valve body, said overfill prevention valve further comprising:
an actuator operable to actuate said second valve body between an open position corresponding to said leak position and a closed position corresponding to said non-leak position.

21. The overfill prevention valve of Claim 20, wherein said second valve body seats on a valve seat spaced from said valve body.

22. The overfill prevention valve of any of the preceding claims, further comprising a splash shield connected to said conduit (62e, 62f, 62g) and shielding said non-contact valve actuator (76e, 76f, 76d) from splashes of liquid experienced external to said conduit (62e, 62f, 62g).

23. The overfill prevention valve of any of the preceding claims, wherein said conduit (62e, 62f, 62g) is sized so that said fluid path through said conduit (62e, 62f, 62g) allows a flow rate of 1514 liters per minute when said valve body maintains said open position.

## Patentansprüche

1. Ventil zum Überfüllungsschutz, umfassend:
eine Leitung (62e, 62f, 62g), die ein erstes Ende und ein zweites Ende aufweist, wobei eine Leitungswand das erste Ende der Leitung (62e, 62f, 62g) und das zweite Ende der Leitung (62e, 62f, 62g) überspannt, wobei die Leitungswand eine Leitungswandinnenfläche (72e, 72f, 72g) und eine Leitungswandaußenfläche (70e, 70f) definiert, wobei die Leitungswandinnenfläche (72e, 72f, 72g) einen Fluidweg durch die Leitung (62e, 62f, 62g) von dem ersten Ende der Leitung (62e, 62f, 62g) zu dem zweiten Ende der Leitung (62e, 62f, 62g) definiert;
einen Ventilkörper, der bewegbar in dem Fluidweg der Leitung (62e, 62f, 62g) positioniert ist, wobei der Ventilkörper aus einer offenen Position in eine geschlossene Position bewegbar ist; und
einen kontaktlosen Ventilaktor (76e, 76f, 76d), der relativ zu dem Ventilkörper bewegbar ist und außerhalb der Leitung (62e, 62f, 62g) positioniert ist, wobei die Leitungswand zwischen dem kontaktlosen Ventilaktor (76e, 76f, 76d) und dem Fluidweg eingefügt ist, wobei der kontaktlose Ventilaktor (76e, 76f, 76d) betreibbar ist, um den Ventilkörper aus der offenen Position in Richtung der geschlossenen Position zu betätigen, ohne die Leitungswand physisch zu durchdringen, wobei der kontaktlose Ventilaktor (76e, 76f, 76d) eine erste Position, in der der kontaktlose Ventilaktor (76e, 76f, 76d) den Ventilkörper nicht aus der offenen Position in Richtung der geschlossenen Position betätigt, und eine zweite Position, in der der kontaktlose Ventilaktor (76e, 76f, 76d) den Ventilkörper aus der offenen Position in Richtung der geschlossenen Position betätigt, aufweist;
**gekennzeichnet durch**
einen Kontaktventilaktor, der innerhalb der Leitungswand positioniert ist, wodurch die Leitungswand zwischen dem Kontaktventilaktor und dem kontaktlosen Ventilaktor (76e, 76f, 76d) eingefügt ist, wobei der Kontaktventilaktor relativ zu der Leitungswandinnenfläche (72e, 72f, 72g) bewegbar ist und positioniert ist, wodurch die Betätigung des Kontaktventilaktors den Kontaktventilaktor dazu veranlasst, den Ventilkörper aus der offenen Position in Richtung der geschlossenen Position und in eine Position zu betätigen, in der ein Fluidstrom durch die Leitung (62e, 62f, 62g) auf den Ventilkörper einwirken kann, und ferner eine Bewegung des Ventilkörpers aus der offenen Position in Richtung der geschlossenen Position veranlasst, wobei der Kontaktventilaktor unabhängig von dem Ventilkörper bewegbar ist;
wobei der Kontaktventilaktor mit dem kontaktlosen Ventilaktor (76e, 76f, 76d) verbunden ist, sodass die Bewegung des kontaktlosen Ventilaktors (76e, 76f, 76d) aus der ersten Position in die zweite Position den Kontaktventilaktor betätigt, sodass der Kontaktventilaktor den Ventilkörper aus der offenen Position in Richtung der geschlossenen Position betätigt.

2. Ventil zum Überfüllungsschutz nach Anspruch 1, wobei der kontaktlose Ventilaktor (76e, 76f, 76d) einen Schwimmer umfasst, der ein spezifisches Gewicht aufweist, wodurch der Schwimmer auf einer Fläche einer Menge an Kraftstoff schwimmt.

3. Ventil zum Überfüllungsschutz nach Anspruch 1, wobei der kontaktlose Ventilaktor (76e, 76f, 76d) eine erste Komponente einer Magnetwellenkupplung umfasst, wobei der Kontaktventilaktor eine zweite Komponente der Magnetwellenkupplung umfasst, wobei die erste Komponente der Magnetwellenkupplung magnetisch mit der zweiten Komponente der Magnetwellenkupplung verknüpft ist, wodurch eine Drehung der ersten Komponente der Magnetwellenkupplung um eine Achse eine Drehung der zweiten Komponente der Magnetwellenkupplung bewirkt, wobei die Achse quer zu einer Längsachse des Fluidwegs durch die Leitung (62e, 62f, 62g) verläuft.

4. Ventil zum Überfüllungsschutz nach einem der Ansprüche 1 oder 3, ferner umfassend:
einen zweiten Kontaktaktor, wobei der zweite Kontaktaktor relativ zu der Leitungswand bewegbar gelagert ist, wobei der zweite Kontaktventilaktor relativ zu der Leitungswandinnenfläche (72e, 72f, 72g) bewegbar ist und positioniert ist, wodurch die Bewegung des zweiten Kontaktventilaktors den zweiten Kontaktventilaktor dazu veranlasst, den Ventilkörper aus der offenen Position in Richtung der geschlossenen Position und in die Position zu betätigen, in der der Fluidstrom durch die Leitung (62e, 62f, 62g) auf den Ventilkörper einwirken kann, und ferner eine Bewegung des Ventilkörpers aus der offenen Position in Richtung der geschlossenen Position veranlasst, wodurch der zweite Kontaktventilaktor dazu in der Lage ist, den Ventilkörper weiter in Richtung der geschlossenen Position als den Kontaktventilaktor zu betätigen, wobei der zweite Kontaktventilaktor unabhängig von dem Ventilkörper bewegbar ist.

5. Ventil zum Überfüllungsschutz nach einem der Ansprüche 1 oder 3, ferner umfassend:
einen Nocken, der relativ zu der Leitungswand bewegbar gelagert ist, wobei der Nocken eine Rampe beinhaltet, die betriebswirksam mit dem Kontaktventilaktor assoziiert ist, sodass eine Bewegung des Nockens die Rampe dazu veranlasst, den Kontaktventilaktor zu bewegen, um den Ventilkörper aus der offenen Position in Richtung der geschlossenen Position und in die Position zu betätigen, in der der Fluidstrom durch die Leitung (62e, 62f, 62g) auf den Ventilkörper einwirken kann, und ferner eine Bewegung des Ventilkörpers aus der offenen Position in Richtung der geschlossenen Position veranlasst.

6. Ventil zum Überfüllungsschutz nach Anspruch 5, ferner umfassend:
einen zweiten Kontaktaktor, wobei der zweite Kontaktaktor relativ zu der Leitungswand bewegbar gelagert ist, wobei der zweite Kontaktventilaktor relativ zu der Leitungswandinnenfläche (72e, 72f, 72g) bewegbar ist und positioniert ist, wodurch die Bewegung des zweiten Kontaktventilaktors den zweiten Kontaktventilaktor dazu veranlasst, den Ventilkörper aus der offenen Position in Richtung der geschlossenen Position und in die Position zu betätigen, in der der Fluidstrom durch die Leitung (62e, 62f, 62g) auf den Ventilkörper einwirken kann, und ferner eine Bewegung des Ventilkörpers aus der offenen Position in Richtung der geschlossenen Position veranlasst, wodurch der zweite Kontaktventilaktor dazu in der Lage ist, den Ventilkörper weiter in Richtung der geschlossenen Position als den Kontaktventilaktor zu betätigen, und wobei der Nocken ferner eine zweite Rampe beinhaltet, die betriebswirksam mit dem zweiten Kontaktventilaktor assoziiert ist, sodass eine Bewegung des Nockens die zweite Rampe dazu veranlasst, den zweiten Kontaktventilaktor zu bewegen, um den Ventilkörper aus der offenen Position in Richtung der geschlossenen Position und in die Position zu betätigen, in der der Fluidstrom durch die Leitung (62e, 62f, 62g) auf den Ventilkörper einwirken kann, und ferner eine Bewegung des Ventilkörpers aus der offenen Position in Richtung der geschlossenen Position veranlasst.

7. Ventil zum Überfüllungsschutz nach einem der Ansprüche 5 oder 6, ferner umfassend:
einen zweiten Ventilkörper, der in dem Fluidweg der Leitung (62e, 62f, 62g) positioniert ist, wobei der zweite Ventilkörper aus einer offenen Position des zweiten Ventilkörpers in eine geschlossene Position des zweiten Ventilkörpers bewegbar ist, und wobei
der Nocken ferner einen Noppen beinhaltet, der so positioniert ist, dass eine Bewegung des Nockens den Noppen dazu veranlasst, den zweiten Ventilkörper aus der offenen Position des zweiten Ventilkörpers in Richtung der geschlossenen Position des zweiten Ventilkörpers zu bewegen.

8. Ventil zum Überfüllungsschutz nach Anspruch 1, wobei der Kontaktventilaktor eine Rampe und eine bewegbare Verriegelung umfasst, wobei die bewegbare Verriegelung eine Verriegelungsposition aufweist, in der die bewegbare Verriegelung den Ventilkörper in der offenen Position verriegelt, wenn der kontaktlose Ventilaktor (76e, 76f, 76d) die erste Position beibehält, wobei die bewegbare Verriegelung aus der Verriegelungsposition bewegt wird, wenn sich der kontaktlose Ventilaktor (76e, 76f, 76d) aus der ersten Position in die zweite Position bewegt.

9. Ventil zum Überfüllungsschutz nach einem der vorhergehenden Ansprüche, wobei der Ventilkörper drehbar mit der Leitung (62e, 62f, 62g) verbunden ist und zwischen der offenen Position und der geschlossenen Position drehbar ist.

10. Ventil zum Überfüllungsschutz nach einem der vorhergehenden Ansprüche, ferner umfassend: einen Ablenker, der an der Leitung (62e, 62f, 62g) befestigt und stromaufwärts von dem Ventilkörper positioniert ist, wobei der Ablenker bemessen und positioniert ist, um den Ventilkörper vor einem Fluidstrom durch die Leitung (62e, 62f, 62g) abzuschirmen, wenn der Ventilkörper die offene Position beibehält.

11. Ventil zum Überfüllungsschutz nach Anspruch 7, wobei, wenn sich der Ventilkörper in der geschlossenen Position befindet und sich der zweite Ventilkörper in der geschlossenen Position befindet, Fluid mit einer Abflussströmungsgeschwindigkeit durch das Ventil zum Überfüllungsschutz strömen kann.

12. Ventil zum Überfüllungsschutz nach einem der vorhergehenden Ansprüche in Kombination mit:
einem Kraftstoffspeichertank; und
einem Fallrohr (402), das sich in den Kraftstoffspeichertank erstreckt, wobei das Ventil zum Überfüllungsschutz einen Teil des Fallrohrs (402) bildet, wobei das Fallrohr (402) in Fluidverbindung mit dem Kraftstoffspeichertank steht, sodass Fluid, das durch das Fallrohr (402) strömt, den Kraftstoffspeichertank füllt.

13. Ventil zum Überfüllungsschutz nach einem der vorhergehenden Ansprüche, ferner umfassend ein Druckspitzenentlastungsventil (370g), das einen Druckspitzenentlastungsventilkörper umfasst, der zwischen einer geschlossenen Position und einer offenen Position bewegbar ist und durch eine Vorspannkraft in die geschlossene Position vorgespannt ist, wobei der Druckspitzenentlastungsventilkörper aus der geschlossenen Position in die offene Position bewegbar ist, wenn ein ausreichender Druck in der Leitung (62e, 62f, 62g) der Vorspannkraft entgegenwirkt, um den Druckspitzenentlastungsventilkörper aus der geschlossenen Position in die offene Position zu betätigen, sodass ein Flüssigkeitsstrom an dem Druckspitzenentlastungsventilkörper vorbeiströmen kann, solange der Druck in der Leitung (62e, 62f, 62g) ausreichend ist, um die Vorspannkraft zu überwinden.

14. Ventil zum Überfüllungsschutz nach einem der vorhergehenden Ansprüche, wobei eine ringförmige Nut (414) in der Leitungswand definiert ist, wobei das Ventil zum Überfüllungsschutz ferner Folgendes umfasst:
einen O-Ring (416), der in der ringförmigen Nut (414) positioniert ist; und
ein erstes Fallrohrsegment, das eine erste Leitung umfasst, die ein erstes Ende der ersten Leitung und ein zweites Ende der ersten Leitung aufweist, wobei eine Wand der ersten Leitung das erste Ende der ersten Leitung und das zweite Ende der ersten Leitung überspannt, wobei die Wand der ersten Leitung eine Wandinnenfläche der ersten Leitung definiert, die einen Fluidweg der ersten Leitung durch die erste Leitung von dem ersten Ende der ersten Leitung zu dem zweiten Ende der ersten Leitung definiert, wobei das erste Fallrohrsegment und die Leitung (62e, 62f, 62g) im Allgemeinen in einer koaxialen, überlappenden Beziehung positioniert sind, wobei die Wand der ersten Leitung die ringförmige Nut (414) überlappt und die Wand der ersten Leitung des ersten Fallrohrsegments um die ringförmige Nut (414) verformt ist, um die Wand der ersten Leitung in der ringförmigen Nut (414) eines Fallrohradapters (400) zu positionieren, um das erste Fallrohrsegment an der Leitung (62e, 62f, 62g) zu befestigen und eine ringförmige Dichtung mit dem O-Ring (416) zu bilden, wobei der Fluidweg durch die Leitung (62e, 62f, 62g) in Fluidverbindung mit dem Fluidweg der ersten Leitung steht.

15. Ventil zum Überfüllungsschutz nach einem der Ansprüche 1-2 oder 8-14, wobei der kontaktlose Ventilaktor (76e, 76f, 76d) einen Aktormagneten umfasst, wobei der Aktormagnet ein Magnetfeld erzeugt, das dazu dient, den Ventilkörper aus der offenen Position in Richtung der geschlossenen Position zu drücken, wenn der kontaktlose Ventilaktor (76e, 76f, 76d) in der zweiten Position positioniert ist.

16. Ventil zum Überfüllungsschutz nach Anspruch 8, wobei die bewegbare Verriegelung zwischen der Rampe und dem Ventilkörper eingefügt ist, wobei die bewegbare Verriegelung durch die Rampe während der Bewegung des kontaktlosen Ventilaktors (76e, 76f, 76d) weg von der Verriegelungsposition bewegt wird, sodass die Verriegelung den Ventilkörper nicht mehr in der geschlossenen Position verriegelt, wobei die bewegbare Verriegelung einen Fuß umfasst, wobei der Fuß während der Bewegung des kontaktlosen Ventilaktors (76e, 76f, 76d) durch die Rampe bewegt wird, um den Ventilkörper aus der offenen Position in Richtung der geschlossenen Position zu bewegen.

17. Ventil zum Überfüllungsschutz nach Anspruch 16, ferner umfassend einen zweiten Aktor, der eine schwenkbare Halterung und eine Rolle umfasst, wobei die schwenkbare Halterung als Reaktion auf die Bewegung des kontaktlosen Ventilaktors (76e, 76f, 76d) bewegbar ist, sodass die Rolle geschwenkt wird, um den Ventilkörper in einer Richtung aus der offenen Position in die geschlossene Position zu kontaktieren und zu betätigen.

18. Ventil zum Überfüllungsschutz nach einem der Ansprüche 1-6 oder 8, ferner umfassend:
einen Verschlussstopp (306g), der bewegbar in dem Fluidweg der Leitung (62e, 62f, 62g) positioniert ist, wobei der Verschlussstopp (306g) eine Leckposition und eine Nicht-Leckposition aufweist, wobei sich der Ventilkörper in der geschlossenen Position befindet und sich der Verschlussstopp (306g) in der Leckposition befindet, wobei eine Fluidmenge dazu in der Lage ist, durch den Ventilkörper zu lecken.

19. Ventil zum Überfüllungsschutz nach Anspruch 18, wobei der kontaktlose Ventilaktor (76e, 76f, 76d) betreibbar ist, um den Verschlussstopp (306g) aus der Leckposition in die Nicht-Leckposition zu betätigen, ohne physisch die Leitungswand zu durchdringen, wobei der kontaktlose Ventilaktor (76e, 76f, 76d) eine dritte Position aufweist, in der der kontaktlose Ventilaktor (76e, 76f, 76d) den Verschlussstopp (306g) aus der Leckposition in die Nicht-Leckposition betätigt, wobei der kontaktlose Ventilaktor (76e, 76f, 76d) den Verschlussstopp (306g) nicht aus der Leckposition in die Nicht-Leckposition in der ersten Position und der zweiten Position betätigt.

20. Ventil zum Überfüllungsschutz nach einem der Ansprüche 18 oder 19, wobei der Verschlussstopp (306g) einen zweiten Ventilkörper umfasst, wobei das Ventil zum Überfüllungsschutz ferner Folgendes umfasst:
einen Aktor, der betreibbar ist, um den zweiten Ventilkörper zwischen einer offenen Position, die der Leckposition entspricht, und einer geschlossenen Position, die der Nicht-Leckposition entspricht, zu betätigen.

21. Ventil zum Überfüllungsschutz nach Anspruch 20, wobei der zweite Ventilkörper auf einem Ventilsitz sitzt, der von dem Ventilkörper beabstandet ist.

22. Ventil zum Überfüllungsschutz nach einem der vorhergehenden Ansprüche, ferner umfassend einen Spritzschutz, der mit der Leitung (62e, 62f, 62g) verbunden ist und den kontaktlosen Ventilaktor (76e, 76f, 76d) vor Flüssigkeitsspritzern abschirmt, die außerhalb der Leitung (62e, 62f, 62g) auftreten.

23. Ventil zum Überfüllungsschutz nach einem der vorhergehenden Ansprüche, wobei die Leitung (62e, 62f, 62g) so bemessen ist, dass der Fluidweg durch die Leitung (62e, 62f, 62g) eine Durchflussrate von 1514 Litern pro Minute ermöglicht, wenn der Ventilkörper die offene Position beibehält.

## Revendications

1. Vanne de prévention de débordement, comprenant :
un conduit (62e, 62f, 62g) ayant une première extrémité et une seconde extrémité, une paroi de conduit enjambant ladite première extrémité dudit conduit (62e, 62f, 62g) et ladite seconde extrémité dudit conduit (62e, 62f, 62g), ladite paroi de conduit définissant une surface intérieure de paroi de conduit (72e, 72f, 72g) et une surface extérieure de paroi de conduit (70e, 70f), ladite surface intérieure de paroi de conduit (72e, 72f, 72g) définissant un trajet de fluide à travers ledit conduit (62e, 62f, 62g) de ladite première extrémité dudit conduit (62e, 62f, 62g) à ladite seconde extrémité dudit conduit (62e, 62f, 62g) ;
un corps de vanne positionné de manière mobile dans ledit trajet de fluide dudit conduit (62e, 62f, 62g), ledit corps de vanne étant mobile d'une position ouverte à une position fermée ; et
un actionneur de vanne sans contact (76e, 76f, 76d) mobile par rapport audit corps de vanne et positionné à l'extérieur dudit conduit (62e, 62f, 62g), ladite paroi de conduit étant interposée entre ledit actionneur de vanne sans contact (76e, 76f, 76d) et ledit trajet de fluide, ledit actionneur de vanne sans contact (76e, 76f, 76d) étant opérationnel pour actionner ledit corps de vanne de ladite position ouverte vers ladite position fermée sans pénétrer physiquement ladite paroi de conduit, ledit actionneur de vanne sans contact (76e, 76f, 76d) ayant une première position dans laquelle ledit actionneur de vanne sans contact (76e, 76f, 76d) n'actionne pas ledit corps de vanne de ladite position ouverte vers ladite position fermée et une deuxième position dans laquelle ledit actionneur de vanne sans contact (76e, 76f, 76d) actionne ledit corps de vanne de ladite position ouverte vers ladite position fermée ;
**caractérisée par**
un actionneur de vanne de contact positionné à l'intérieur de ladite paroi de conduit, moyennant quoi ladite paroi de conduit est interposée entre ledit actionneur de vanne de contact et ledit actionneur de vanne sans contact (76e, 76f, 76d), ledit actionneur de vanne de contact étant mobile par rapport à ladite surface intérieure de paroi de conduit (72e, 72f, 72g) et positionné de façon à ce qu'un actionnement dudit actionneur de vanne de contact amène ledit actionneur de vanne de contact à actionner ledit corps de vanne de ladite position ouverte vers ladite position fermée et dans une position dans laquelle un écoulement de fluide à travers ledit conduit (62e, 62f, 62g) peut agir sur ledit corps de vanne et amener en outre un mouvement dudit corps de vanne de ladite position ouverte vers ladite position fermée, ledit actionneur de vanne de contact étant mobile indépendamment dudit corps de vanne ;
ledit actionneur de vanne de contact étant lié audit actionneur de vanne sans contact (76e, 76f, 76d), de sorte qu'un mouvement dudit actionneur de vanne sans contact (76e, 76f, 76d) de ladite première position à ladite deuxième position actionne ledit actionneur de vanne de contact de sorte que ledit actionneur de vanne de contact actionne ledit corps de vanne de ladite position ouverte vers ladite position fermée.

2. Vanne de prévention de débordement selon la revendication 1, dans laquelle ledit actionneur de vanne sans contact (76e, 76f, 76d) comprend un flotteur ayant une gravité spécifique, moyennant quoi ledit flotteur est flottant sur une surface d'une quantité de carburant automobile.

3. Vanne de prévention de débordement selon la revendication 1, dans laquelle ledit actionneur de vanne sans contact (76e, 76f, 76d) comprend un premier composant d'un accouplement d'arbre magnétique, ledit actionneur de vanne de contact comprenant un second composant de l'accouplement d'arbre magnétique, le premier composant de l'accouplement d'arbre magnétique étant magnétiquement lié audit second composant de l'accouplement d'arbre magnétique, moyennant quoi une rotation dudit premier composant de l'accouplement d'arbre magnétique autour d'un axe amène une rotation du second composant de l'accouplement d'arbre magnétique, l'axe étant transversal à un axe longitudinal dudit trajet de fluide à travers ledit conduit (62e, 62f, 62g).

4. Vanne de prévention de débordement selon l'une quelconque des revendications 1 ou 3, comprenant en outre :
un second actionneur de contact, ledit second actionneur de contact étant supporté de manière mobile par rapport à ladite paroi de conduit, ledit second actionneur de vanne de contact étant mobile par rapport à ladite surface intérieure de paroi de conduit (72e, 72f, 72g) et positionné de façon à ce qu'un mouvement dudit second actionneur de vanne de contact amène ledit second actionneur de vanne de contact à actionner ledit corps de vanne de ladite position ouverte vers ladite position fermée et dans la position dans laquelle l'écoulement de fluide à travers le conduit (62e, 62f, 62g) peut agir sur ledit corps de vanne et amener en outre un mouvement dudit corps de vanne de ladite position ouverte vers ladite position fermée, moyennant quoi ledit second actionneur de vanne de contact est capable d'actionner ledit corps de vanne plus loin vers ladite position fermée que ledit actionneur de vanne de contact, ledit second actionneur de vanne de contact étant mobile indépendamment dudit corps de vanne.

5. Vanne de prévention de débordement selon l'une quelconque des revendications 1 ou 3, comprenant en outre :
une came supportée de manière mobile par rapport à ladite paroi de conduit, ladite came incluant une rampe associée de manière opérationnelle audit actionneur de vanne de contact de sorte qu'un mouvement de ladite came amène ladite rampe à mouvoir ledit actionneur de vanne de contact pour actionner ledit corps de vanne de ladite position ouverte vers ladite position fermée et dans la position dans laquelle l'écoulement de fluide à travers ledit conduit (62e, 62f, 62g) peut agir sur ledit corps de vanne et amener en outre un mouvement dudit corps de vanne de ladite position ouverte vers ladite position fermée.

6. Vanne de prévention de débordement selon la revendication 5, comprenant en outre :
un second actionneur de contact, ledit second actionneur de contact étant supporté de manière mobile par rapport à ladite paroi de conduit, ledit second actionneur de vanne de contact étant mobile par rapport à ladite surface intérieure de paroi de conduit (72e, 72f, 72g) et positionné de façon à ce qu'un mouvement dudit second actionneur de vanne de contact amène ledit second actionneur de vanne de contact à actionner ledit corps de vanne de ladite position ouverte vers ladite position fermée et dans la position dans laquelle l'écoulement de fluide à travers ledit conduit (62e, 62f, 62g) peut agir sur ledit corps de vanne et amener en outre un mouvement dudit corps de vanne de ladite position ouverte vers ladite position fermée, moyennant quoi ledit second actionneur de vanne de contact est capable d'actionner ledit corps de vanne plus loin vers ladite position fermée que ledit actionneur de vanne de contact, et dans laquelle
ladite came inclut en outre une seconde rampe associée de manière opérationnelle audit second actionneur de vanne de contact de sorte qu'un mouvement de ladite came amène ladite seconde rampe à mouvoir ledit second actionneur de vanne de contact pour actionner ledit corps de vanne de ladite position ouverte vers ladite position fermée et dans la position dans laquelle le flux de fluide à travers ledit conduit (62e, 62f, 62g) peut agir sur ledit corps de vanne et amener en outre un mouvement dudit corps de vanne de ladite position ouverte vers ladite position fermée.

7. Vanne de prévention de débordement selon l'une quelconque des revendications 5 ou 6, comprenant en outre :
un second corps de vanne positionné dans ledit trajet du fluide dudit conduit (62e, 62f, 62g), ledit second corps de vanne étant mobile d'une position ouverte de second corps de vanne à une position fermée de second corps de vanne, et dans laquelle
ladite came inclut en outre un talon positionné de sorte qu'un mouvement de ladite came amène ledit talon à mouvoir ledit second corps de vanne de ladite position ouverte de second corps de vanne vers ladite position fermée de second corps de vanne.

8. Vanne de prévention de débordement selon la revendication 1, dans laquelle ledit actionneur de vanne de contact comprend une rampe et un verrou mobile, ledit verrou mobile ayant une position de verrouillage dans laquelle ledit verrou mobile verrouille ledit corps de vanne dans la position ouverte lorsque ledit actionneur de vanne sans contact (76e, 76f, 76d) maintient ladite première position, ledit verrou mobile étant mû de ladite position de verrouillage lorsque ledit actionneur de vanne sans contact (76e, 76f, 76d) se meut de la première position à la deuxième position.

9. Vanne de prévention de débordement selon l'une quelconque des revendications précédentes, dans laquelle ledit corps de vanne est raccordé de manière rotative audit conduit (62e, 62f, 62g) et peut tourner entre ladite position ouverte et ladite position fermée.

10. Vanne de prévention de débordement selon l'une quelconque des revendications précédentes, comprenant en outre :
un déflecteur attaché audit conduit (62e, 62f, 62g) et positionné en amont dudit corps de vanne, ledit déflecteur étant dimensionné et positionné de manière à protéger ledit corps de vanne d'un écoulement de fluide à travers ledit conduit (62e, 62f, 62g) lorsque ledit corps de vanne maintient ladite position ouverte.

11. Vanne de prévention de débordement selon la revendication 7, dans laquelle avec ledit corps de vanne dans ladite position fermée et ledit second corps de vanne dans ladite position fermée, un fluide peut traverser la vanne de prévention de débordement à un débit de vidange.

12. Vanne de prévention de débordement selon l'une quelconque des revendications précédentes en combinaison avec :
un réservoir de stockage de carburant ; et
un tube de dépotage (402) s'étendant dans ledit réservoir de stockage de carburant, la vanne de prévention de débordement faisant partie du tube de dépotage (402), ledit tube de dépotage (402) étant en communication fluidique avec ledit réservoir de stockage de carburant de sorte qu'un fluide traversant ledit tube de dépotage (402) remplisse ledit réservoir de stockage de carburant.

13. Vanne de prévention de débordement selon l'une quelconque des revendications précédentes, comprenant en outre une vanne de décharge à pointe de pression (370g) comprenant un corps de vanne de décharge à pointe de pression mobile entre une position fermée et une position ouverte et sollicité par une force de sollicitation dans ladite position fermée, ledit corps de vanne de décharge à pointe de pression étant mobile de ladite position fermée à ladite position ouverte lorsqu'une pression suffisante dans ledit conduit (62e, 62f, 62g) contrebalance ladite force de sollicitation pour actionner ledit corps de vanne de décharge à pointe de pression de ladite position fermée à ladite position ouverte, de telle sorte qu'un flux de liquide peut s'écouler au-delà dudit corps de vanne de décharge à pointe de pression tant que ladite pression dans ledit conduit (62e, 62f, 62g) est suffisante pour contrer ladite force de sollicitation.

14. Vanne de prévention de débordement selon l'une quelconque des revendications précédentes, dans laquelle une rainure annulaire (414) est définie dans la paroi de conduit, la vanne de prévention de débordement comprenant en outre :
un joint torique (416) positionné dans la rainure annulaire (414) ; et
un premier segment de tube de dépotage comprenant un premier conduit ayant une première extrémité de premier conduit et une seconde extrémité de premier conduit, une première paroi de conduit enjambant la première extrémité de premier conduit et la seconde extrémité de premier conduit, la première paroi de conduit définissant une première surface intérieure de paroi de conduit définissant un premier chemin de fluide de conduit à travers le premier conduit de la première extrémité de premier conduit à la seconde extrémité de premier conduit, le premier segment de tube de dépotage et le conduit (62,e, 62f, 62g) étant positionnés dans une relation de chevauchement généralement coaxiale, avec ladite première paroi de conduit chevauchant ladite rainure annulaire (414) et la première paroi de conduit du premier segment de tube de dépotage déformée autour de la rainure annulaire (414) pour positionner la première paroi de conduit dans la rainure annulaire (414) d'un adaptateur de tube de dépotage (400) afin de fixer le premier segment de tube de dépotage au conduit (62,e, 62f, 62g) et de former un joint annulaire avec le joint torique (416), le trajet de fluide à travers le conduit (62e, 62f, 62g) étant en communication fluidique avec le premier trajet de fluide de conduit.

15. Vanne de prévention de débordement selon l'une quelconque des revendications 1 et 2, ou 8 à 14, dans laquelle ledit actionneur de vanne sans contact (76e, 76f, 76d) comprend un aimant d'actionneur, ledit aimant d'actionneur produisant un champ magnétique agissant pour pousser ledit corps de vanne de ladite position ouverte vers ladite position fermée lorsque ledit actionneur de vanne sans contact (76e, 76f, 76d) est positionné dans ladite deuxième position.

16. Vanne de prévention de débordement selon la revendication 8, dans laquelle ledit verrou mobile est interposé entre ladite rampe et ledit corps de vanne, ledit verrou mobile étant mû par ladite rampe pendant le mouvement dudit actionneur de vanne sans contact (76e, 76f, 76d) en éloignement de la position de verrouillage de sorte que ledit verrou ne verrouille plus ledit corps de vanne dans la position fermée, ledit verrou mobile comprenant un pied, ledit pied étant mû par ladite rampe pendant le mouvement dudit actionneur de vanne sans contact (76e, 76f, 76d) pour mouvoir ledit corps de vanne de la position ouverte vers la position fermée.

17. Vanne de prévention de débordement selon la revendication 16, comprenant en outre un second actionneur comprenant un support pivotant et un rouleau, ledit support pivotant étant mobile en réponse au mouvement dudit actionneur de vanne sans contact (76e, 76f, 76d) de telle sorte que ledit rouleau est pivoté pour entrer en contact et actionner ledit corps de vanne dans une direction allant de la position ouverte à la position fermée.

18. Vanne de prévention de débordement selon l'une quelconque des revendications 1 à 6, ou 8, comprenant en outre :
une butée de fermeture (306g) positionnée de manière mobile dans ledit trajet de fluide dudit conduit (62e, 62f, 62g), ladite butée de fermeture (306g) ayant une position de fuite et une position de non-fuite, avec ledit corps de vanne dans ladite position fermée et ladite butée de fermeture (306g) dans ladite position de fuite, une quantité de fluide est capable de fuir au-delà dudit corps de vanne.

19. Vanne de prévention de débordement selon la revendications 18, dans laquelle ledit actionneur de vanne sans contact (76e, 76f, 76d) est opérationnel pour actionner ladite butée de fermeture (306g) de ladite position de fuite à ladite position de non-fuite sans pénétrer physiquement ladite paroi de conduit, ledit actionneur de vanne sans contact (76e, 76f, 76d) a une troisième position dans laquelle ledit actionneur de vanne sans contact (76e, 76f, 76d) actionne ladite butée de fermeture (306g) de ladite position de fuite à ladite position de non-fuite, ledit actionneur de vanne sans contact (76e, 76f, 76d) n'actionnant pas ladite butée de fermeture (306g) de ladite position de fuite à ladite position de non-fuite dans ladite première position et ladite deuxième position.

20. Vanne de prévention de débordement selon l'une quelconque des revendications 18 ou 19, dans laquelle ladite butée de fermeture (306g) comprend un second corps de vanne, ladite vanne de prévention de débordement comprenant en outre :
un actionneur opérationnel pour actionner ledit second corps de vanne entre une position ouverte correspondant à ladite position de fuite et une position fermée correspondant à ladite position de non-fuite.

21. Vanne de prévention de débordement selon la revendication 20, dans laquelle ledit second corps de vanne est assis sur un siège de vanne espacé dudit corps de vanne.

22. Vanne de prévention de débordement selon l'une quelconque des revendications précédentes, comprenant en outre une protection antiéclaboussures raccordée audit conduit (62e, 62f, 62g) et protégeant ledit actionneur de vanne sans contact (76e, 76f, 76d) contre des éclaboussures de liquide subies à l'extérieur dudit conduit (62e, 62f, 62g).

23. Vanne de prévention de débordement selon l'une quelconque des revendications précédentes, dans laquelle ledit conduit (62e, 62f, 62g) est dimensionné de sorte que ledit trajet de fluide à travers ledit conduit (62e, 62f, 62g) permet un débit de 1514 litres par minute lorsque ledit corps de vanne maintient ladite position ouverte.
